# EUROPEAN PATENT SPECIFICATION

(11) **EP 3 929 533 B1**
(45) Date of publication and mention of the grant of the patent: **15.10.2025**
(21) Application number: 21191657.2
(22) Date of filing: 22.06.2017
(51) Int. Cl.: G01C 9/00, G01R 31/28, G09F 13/04, G06Q 30/02, H04N 21/442

(54) **INVERTIBLE METERING APPARATUS AND RELATED METHODS**
UMKEHRBARE MESSVORRICHTUNG UND ZUGEHÖRIGE VERFAHREN
APPAREIL DE MESURE INVERSABLE ET PROCÉDÉS ASSOCIÉS

(30) Priority: 24.06.2016 US 201615192539; 24.06.2016 US 201615192554; 24.06.2016 US 201615192560
(43) Date of publication of application: 29.12.2021
(62) Divisional of application: 18215594.5
(73) Proprietor: The Nielsen Company (US), LLC, New York, NY 10004 (US)
(72) Inventor: COOPER, Timothy Scott, Oldsmar, 34677 (US); VITT, James Joseph, Palm Harbor, 34683 (US); TURNBOW, Douglas Brent, Orem, 84058 (US); NIELSEN, Christen V., Dunedin, 34698 (US); USAJ, Marko, 6310 Izola (SI); VRANEK, Saso, 6000 Koper (SI); BARBIS, Andrej, 6000 Koper (SI)
(74) Representative: Chettle, John Edward

(56) References cited:
- WO-A1-99/27668
- US-A1- 2002 017 045
- US-A1- 2008 140 339
- US-A1- 2009 262 052
- US-A1- 2012 023 516
- US-A1- 2012 081 898
- US-A1- 2012 127 012
- US-A1- 2015 281 775
- US-A1- 2016 088 707

## Description

### FIELD OF DISCLOSURE

This patent is directed to metering devices and, more specifically, to invertible meter apparatus and related methods.

### BACKGROUND

Monitoring companies monitor user interaction with media devices, such as smartphones, tablets, laptops, smart televisions, etc. To facilitate such monitoring, monitoring companies enlist panelists and install meters at the media presentation locations of those panelists. The meters monitor media presentations and transmit media monitoring information to a central facility of the monitoring company. Such media monitoring information enables the media monitoring companies to, among other things, monitor exposure to advertisements, determine advertisement effectiveness, determine user behavior, identify purchasing behavior associated with various demographics, etc.

US 2012/081898 discloses a people meter having a display panel coupled to a housing, comprising a stencil.

### BRIEF DESCRIPTION OF THE DRAWINGS

FIG. 1 illustrates an example audience measurement system with an example meter constructed in accordance with the teachings of this disclosure. FIG. 1 illustrates the example meter in a first mounting orientation.
FIG. 2 illustrates the example audience measurement system of FIG. 1 with the example meter in a second mounting orientation.
FIG. 3 illustrates the example audience measurement system of FIG. 1 with the example meter in a third mounting orientation or, alternatively, in a fourth mounting orientation.
FIG. 4 illustrates the example audience measurement system of FIG. 1 with the example meter in another mounting orientation and an example input device that may be used to interact with the example meter of FIGS. 1-4.
FIG. 5 is a perspective view of an example meter disclosed herein that may be used to implement the audience measurement system of FIG. 1.
FIG. 6 is a perspective, rear view of the example meter of FIG. 5.
FIG. 7 is another perspective, rear view of the example meter of FIGS. 5-6.
FIG. 8A is a partial assembled perspective view of the example meter of FIGS. 5-7.
FIG. 8B is another partial assembled perspective view of the example meter of FIGS. 5-7.
FIG. 9A is a perspective, bottom view of the example meter of FIGS. 5-7.
FIG. 9B is a perspective, bottom view of the example meter of FIG. 9A showing a cover of the example meter removed from a housing of the example meter.
FIG. 10A is a cross-sectional side view of the example meter of FIGS. 5-7.
FIG. 10B is a perspective view of an example cover of the example meter of FIGS. 5-7.
FIGS. 11A and 11B are a perspective, exploded views of the example meter of FIGS. 5-7.
FIG. 12 is a perspective view of a first panel of the example meter of FIGS. 5-7.
FIG. 13A is a front view of an example circuit board of the example meter of FIGS. 5-7.
FIG. 13B is a rear view of the example circuit board of the example meter of FIGS. 5-7.
FIG. 14 is an exploded view of a portion of the example meter of FIGS. 5-7.
FIG. 15 is a partial assembled view of the portion of the example meter shown in FIG. 14.
FIG. 16 is a perspective view of a rear panel of the example meter of FIGS. 5-7.
FIG. 17 is a partially assembled view of the example meter of FIGS. 5-7.
FIG. 18 is a cross-sectional, plan view of the example meter of FIGS. 5-7.
FIG. 19A is a partially exploded view of the example meter of FIGS. 5-7 shown in a first mounting orientation.
FIG. 19B is a front view of the example meter of FIGS. 5-7 shown in the first mounting orientation of FIG. 19A.
FIG. 19C is a front view of the example meter of FIGS. 5-7 in the first mounting orientation of FIG. 19A with the example stencil in an improper orientation.
FIG. 20 is a perspective view of the example meter of FIGS. 5-7 shown in an intermediate orientation.
FIG. 21A is a perspective view of the example meter of FIGS. 5-7 shown in a second mounting configuration.
FIG. 21B is a front view of the example meter of FIGS. 5-7 in the second mounting orientation of FIG. 21A.
FIG. 21C is a front view of the example meter of FIGS. 5-7 in the second mounting orientation of FIG. 21A with an example stencil in an improper orientation.
FIG. 22A illustrates the example meter of FIGS. 5-7 in a third mounting orientation.
FIG. 22B illustrates the example meter of FIG. 22A having an example stencil in an improper orientation.
FIG. 23 illustrates the example meter of FIGS. 5-7 in a fourth mounting configuration with an example stencil in an improper orientation.
FIG. 24 illustrates the example meter of FIGS. 5-7 in a fourth mounting orientation.
FIG. 25 illustrates the example meter of FIGS. 5-7 mounted to a media device in the first mounting configuration.
FIG. 26 illustrates the example meter of FIGS. 5-7 mounted to a media device in the second mounting configuration.
FIG. 27 illustrates the example meter of FIGS. 5-7 mounted to a media device in the third mounting configuration.
FIG. 28 illustrates the example meter of FIGS. 5-7 mounted to a media device in the fourth mounting configuration.
FIG. 29 is an example block diagram of the example meter of FIGS. 5-7.
FIGS. 30-35 are flowcharts representative of example machine-readable instructions that may be executed to implement the example meter of FIGS. 5-7.
FIG. 36 is a block diagram of an example processor platform capable of executing the machine-readable instructions of FIGS. 30-35.
FIGS. 37-39 are flowcharts of example methods of configuring an orientation of an example meter implemented in accordance with the teachings of this disclosure.
FIGS. 40 is a flowchart of an example method of manufacturing an example meter implemented in accordance with the teachings of this disclosure.

The figures are not to scale. Instead, to clarify multiple layers and regions, the thickness of the layers may be enlarged in the drawings. Wherever possible, the same reference numbers will be used throughout the drawing(s) and accompanying written description to refer to the same or like parts. As used in this patent, stating that any part (e.g., a layer, film, area, or plate) is in any way positioned on (e.g., positioned on, located on, disposed on, or formed on, etc.) another part, means that the referenced part is either in contact with the other part, or that the referenced part is above the other part with one or more intermediate part(s) located therebetween. Stating that any part is in contact or directly engaged with another part means that there is no intermediate part between the two parts.

### DETAILED DESCRIPTION

Audience measurement entities (also referred to herein as "ratings entities" or "monitoring companies") determine demographic reach for advertising and media programming based on registered panel members. That is, an audience measurement entity enrolls people that consent to being monitored into a panel. During enrollment, the audience measurement entity receives demographic information from the enrolling people so that subsequent correlations may be made between advertisement/media exposure to those panelists and different demographic markets. For example, monitoring companies desire knowledge on how users interact with media devices, such as smartphones, tablets, laptops, smart televisions, etc. In particular, media monitoring companies monitor media presentations made at the media devices to, among other things, monitor exposure to advertisements, determine advertisement effectiveness, determine user behavior, identify purchasing behavior associated with various demographics, etc.

As used herein, the term "media" includes any type of content and/or advertisement delivered via any type of distribution medium. Thus, media includes television programming or advertisements, radio programming or advertisements, movies, web sites, streaming media, etc.

Example metering devices are disclosed herein to monitor media presented by media devices. The example metering devices disclosed herein provide a modular display. The example modular display of the example metering devices disclosed herein enable various or different mounting configurations while presenting indicia or visual indicators of the display in an upright or proper orientation. In some examples, the modular display enables the metering device to be mounted in a first orientation (e.g., a first viewing orientation) or a second orientation (e.g., a second viewing orientation) different than the first orientation. For example, the first orientation may enable the metering device to be mounted above a television and the second orientation may enable the metering device to be mounted below a television. In some examples, a display of the metering device disclosed herein is in a first direction when the metering device is in the first orientation and the display is in a second direction opposite the first direction (e.g., an inverted orientation) when the metering device is in the second orientation. To enable proper display of indicia in an upright orientation when the metering device is in the first orientation or the second orientation, the example metering devices disclosed herein employ a removable and/or reversible display. For example, the display may be implemented by a removable stencil (e.g., an invertible stencil), removable diffusors and/or any other display to present indicia that may be removably coupled to a housing of the example meters disclosed herein. The display (e.g., a stencil or a plurality of diffusors), for example, includes indicia to be presented via the display of the example metering devices. In some examples, the modular display enables the metering device to display different indicia and/or the same indicia in a different orientation (e.g., a landscape orientation or a portrait orientation). In some examples, a display of the example metering device disclosed herein may present numeric indicia, alpha indicia, symbols, and/or any other indicia. In some examples, the indicia may be provided (e.g., printed) on a stencil having a unitary body. In some examples, the indicia may be provided on a plurality of diffusors that are removably coupled to the housing. In some examples, the indicia may be provided on a cover that removably attaches to the housing.

To enable the modular display, some example metering devices disclosed herein employ interchangeable stencils. For example, a first stencil disclosed herein may be interchangeable with a second stencil different from the first stencil. For example, the first stencil may be replaced by another stencil to change a mounting configuration of the example meter. In some examples, a first stencil disclosed herein may be interchanged with a second stencil having different visual indicators. For example, a first stencil disclosed herein having visual indicators in the form of numeric characters may be interchanged with a second stencil having different visual indicators in the form of symbols, alpha characters, alphanumeric characters and/or any other indicia or visual indicator.

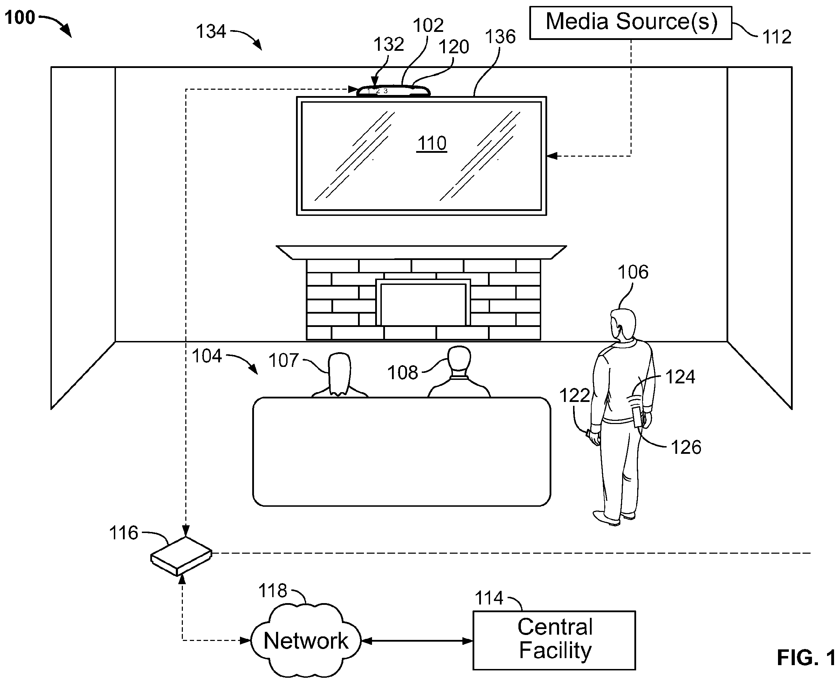

FIG. 1 is an illustration of an example audience measurement system 100 having an example meter 102 constructed in accordance with the teachings of this disclosure to monitor an example media presentation environment 104. In the illustrated example of FIG. 1, the media presentation environment 104 includes panelists 106, 107, and 108, an example media device 110 that receives media from an example media source 112, and the meter 102. The meter 102 identifies the media presented by the media device 110 and reports media monitoring information to an example central facility 114 of an audience measurement entity via an example gateway 116 and an example network 118. The example meter 102 of FIG. 1 sends media identification data and/or audience identification data to the central facility 114 periodically, a-periodically and/or upon request by the central facility 114.

In the illustrated example of FIG. 1, the media presentation environment 104 is a room of a household (e.g., a room in a home of a panelist, such as the home of a "Nielsen family") that has been statistically selected to develop media (e.g., television) ratings data for a population/demographic of interest. In the illustrated example of FIG. 1, the example panelists 106, 107 and 108 of the household have been statistically selected to develop media ratings data (e.g., television ratings data) for a population/demographic of interest. People become panelists via, for example, a user interface presented on a media device (e.g., via the media device 110, via a website, etc.). People become panelists in additional or alternative manners such as, for example, via a telephone interview, by completing an online survey, etc. Additionally or alternatively, people may be contacted and/or enlisted using any desired methodology (e.g., random selection, statistical selection, phone solicitations, Internet advertisements, surveys, advertisements in shopping malls, product packaging, etc.). In some examples, an entire family may be enrolled as a household of panelists. That is, while a mother, a father, a son, and a daughter may each be identified as individual panelists, their viewing activities typically occur within the family's household.

In the illustrated example, one or more panelists 106, 107 and 108 of the household have registered with an audience measurement entity (e.g., by agreeing to be a panelist) and have provided their demographic information to the audience measurement entity as part of a registration process to enable associating demographics with media exposure activities (e.g., television exposure, radio exposure, Internet exposure, etc.). The demographic data includes, for example, age, gender, income level, educational level, marital status, geographic location, race, etc., of a panelist. While the example media presentation environment 104 is a household in the illustrated example of FIG. 1, the example media presentation environment 104 can additionally or alternatively be any other type(s) of environments such as, for example, a theater, a restaurant, a tavern, a retail location, an arena, etc.

In the illustrated example of FIG. 1, the example media device 110 is a television. However, the example media device 110 can correspond to any type of audio, video and/or multimedia presentation device capable of presenting media audibly and/or visually. In some examples, the media device 110 (e.g., a television) may communicate audio to another media presentation device (e.g., an audio/video receiver) for output by one or more speakers (e.g., surround sound speakers, a sound bar, etc.). As another example, the media device 110 can correspond to a multimedia computer system, a personal digital assistant, a cellular/mobile smartphone, a radio, a home theater system, stored audio and/or video played back from a memory such as a digital video recorder or a digital versatile disc, a webpage, and/or any other communication device capable of presenting media to an audience (e.g., the panelists 106, 107 and 108).

The media source 112 may be any type of media provider(s), such as, but not limited to, a cable media service provider, a radio frequency (RF) media provider, an Internet based provider (e.g., IPTV), a satellite media service provider, etc. The media may be radio media, television media, pay per view media, movies, Internet Protocol Television (IPTV), satellite television (TV), Internet radio, satellite radio, digital television, digital radio, stored media (e.g., a compact disk (CD), a Digital Versatile Disk (DVD), a Blu-ray disk, etc.), any other type(s) of broadcast, multicast and/or unicast medium, audio and/or video media presented (e.g., streamed) via the Internet, a video game, targeted broadcast, satellite broadcast, video on demand, etc.

The example media device 110 of the illustrated example shown in FIG. 1 is a device that receives media from the media source 112 for presentation. In some examples, the media device 110 is capable of directly presenting media (e.g., via a display) while, in other examples, the media device 110 presents the media on separate media presentation equipment (e.g., speakers, a display, etc.). Thus, as used herein, "media devices" may or may not be able to present media without assistance from a second device. Media devices are typically consumer electronics. For example, the media device 110 of the illustrated example could be a personal computer such as a laptop computer, and, thus, capable of directly presenting media (e.g., via an integrated and/or connected display and speakers). In some examples, the media device 110 can correspond to a television and/or display device that supports the National Television Standards Committee (NTSC) standard, the Phase Alternating Line (PAL) standard, the Système Électronique pour Couleur avec Mémoire (SECAM) standard, a standard developed by the Advanced Television Systems Committee (ATSC), such as high definition television (HDTV), a standard developed by the Digital Video Broadcasting (DVB) Project, etc. Advertising, such as an advertisement and/or a preview of other programming that is or will be offered by the media source 112, etc., is also typically included in the media. While a television is shown in the illustrated example, any other type(s) and/or number(s) of media device(s) may additionally or alternatively be used. For example, Internet-enabled mobile handsets (e.g., a smartphone, an iPod^{®}, etc.), video game consoles (e.g., Xbox^{®}, PlayStation 3, etc.), tablet computers (e.g., an iPad^{®}, a Motorola^{™} Xoom^{™}, etc.), digital media players (e.g., a Roku^{®} media player, a Slingbox^{®}, a Tivo^{®}, etc.), smart televisions, desktop computers, laptop computers, servers, etc. may additionally or alternatively be used.

The example meter 102 detects exposure to media and electronically stores monitoring information (e.g., a code detected with the presented media, a signature of the presented media, an identifier of a panelist present at the time of the presentation, a timestamp of the time of the presentation) of the presented media. The stored monitoring information is then transmitted back to the central facility 114 via the gateway 116 and the network 118. While the media monitoring information is transmitted by electronic transmission in the illustrated example of FIG. 1, the media monitoring information may additionally or alternatively be transferred in any other manner, such as, for example, by physically mailing the meter 102, by physically mailing a memory of the meter 102, etc.

The meter 102 of the illustrated example of FIG. 1 combines audience measurement data and people metering data. For example, audience measurement data is determined by monitoring media output by the media device 110 and/or other media presentation device(s), and audience identification data (also referred to as demographic data, people monitoring data, etc.) is determined from people monitoring data provided to the meter 102. Thus, the example meter 102 provides dual functionality of a content measurement meter to collect content measurement data and people meter to collect and/or associate demographic information corresponding to the collected audience measurement data.

For example, the meter 102 of the illustrated example collects media identifying information and/or data (e.g., signature(s), fingerprint(s), code(s), tuned channel identification information, time of exposure information, etc.) and people data (e.g., user identifiers, demographic data associated with audience members, etc.). The media identifying information and the people data can be combined to generate, for example, media exposure data (e.g., ratings data) indicative of amount(s) and/or type(s) of people that were exposed to specific piece(s) of media distributed via the media device 110. To extract media identification data, the meter 102 and/or the example audience measurement system 100 extracts and/or processes the collected media identifying information and/or data received by the meter 102, which can be compared to reference data to perform source and/or content identification. Any other type(s) and/or number of media monitoring techniques can be supported by the meter 102.

Depending on the type(s) of metering the meter 102 is to perform, the meter 102 can be physically coupled to the media device 110 or may be configured to capture signals emitted externally by the media device 110 (e.g., free field audio) such that direct physical coupling to the media device 110 is not required. For example, the meter 102 of the illustrated example may employ non-invasive monitoring not involving any physical connection to the media device 110 (e.g., via Bluetooth^{®} connection, WIFI^{®} connection, acoustic watermarking, etc.) and/or invasive monitoring involving one or more physical connections to the media device 110 (e.g., via USB connection, a High Definition Media Interface (HDMI) connection, an Ethernet cable connection, etc.).

In examples disclosed herein, to monitor media presented by the media device 110, the meter 102 of the illustrated example employs audio watermarking techniques and/or signature based-metering techniques. Audio watermarking is a technique used to identify media, such as television broadcasts, radio broadcasts, advertisements (television and/or radio), downloaded media, streaming media, prepackaged media, etc. Existing audio watermarking techniques identify media by embedding one or more audio codes (e.g., one or more watermarks), such as media identifying information and/or an identifier that may be mapped to media identifying information, into an audio and/or video component of the media. In some examples, the audio or video component is selected to have a signal characteristic sufficient to hide the watermark. As used herein, the terms "code" or "watermark" are used interchangeably and are defined to mean any identification information (e.g., an identifier) that may be inserted or embedded in the audio or video of media (e.g., a program or advertisement) for the purpose of identifying the media or for another purpose such as tuning (e.g., a packet identifying header). As used herein "media" refers to audio and/or visual (still or moving) content and/or advertisements. To identify watermarked media, the watermark(s) are extracted and used to access a table of reference watermarks that are mapped to media identifying information.

Unlike media monitoring techniques based on codes and/or watermarks included with and/or embedded in the monitored media, fingerprint or signature-based media monitoring techniques generally use one or more inherent characteristics of the monitored media during a monitoring time interval to generate a substantially unique proxy for the media. Such a proxy is referred to as a signature or fingerprint, and can take any form (e.g., a series of digital values, a waveform, etc.) representative of any aspect(s) of the media signal(s)(e.g., the audio and/or video signals forming the media presentation being monitored). A signature may be a series of signatures collected in series over a timer interval. A good signature is repeatable when processing the same media presentation, but is unique relative to other (e.g., different) presentations of other (e.g., different) media. Accordingly, the term "fingerprint" and "signature" are used interchangeably herein and are defined herein to mean a proxy for identifying media that is generated from one or more inherent characteristics of the media.

Signature-based media monitoring generally involves determining (e.g., generating and/or collecting) signature(s) representative of a media signal (e.g., an audio signal and/or a video signal) output by a monitored media device and comparing the monitored signature(s) to one or more references signatures corresponding to known (e.g., reference) media sources. Various comparison criteria, such as a cross-correlation value, a Hamming distance, etc., can be evaluated to determine whether a monitored signature matches a particular reference signature. When a match between the monitored signature and one of the reference signatures is found, the monitored media can be identified as corresponding to the particular reference media represented by the reference signature that with matched the monitored signature. Because attributes, such as an identifier of the media, a presentation time, a broadcast channel, etc., are collected for the reference signature, these attributes may then be associated with the monitored media whose monitored signature matched the reference signature. Example systems for identifying media based on codes and/or signatures are long known and were first disclosed in Thomas, US Patent 5,481,294.

For example, the meter 102 of the illustrated example senses audio (e.g., acoustic signals or ambient audio) output (e.g., emitted) by the media device 110. For example, the meter 102 processes the signals obtained from the media device 110 to detect media and/or source identifying signals (e.g., audio watermarks) embedded in portion(s) (e.g., audio portions) of the media presented by the media device 110. To sense ambient audio output by the media device 110, the meter 102 of the illustrated example includes an example acoustic sensor 120 (e.g., a microphone). In some examples, the meter 102 may process audio signals obtained from the media device 110 via a direct cable connection to detect media and/or source identifying audio watermarks embedded in such audio signals. In some examples, the meter 102 may process audio signals and/or video signals to generate respective audio and/or video signatures from the media presented by the media device 110.

To generate exposure data for the media, identification(s) of media to which the audience is exposed are correlated with people data (e.g., presence information) collected by the meter 102. The meter 102 of the illustrated example collects inputs (e.g., audience identification data) representative of the identities of the audience member(s) (e.g., the panelists 106, 107 and 108). In some examples, the meter 102 collects audience identification data by periodically or aperiodically prompting audience members in the monitored media presentation environment 104 to identify themselves as present in the audience. In some examples, the meter 102 responds to predetermined events (e.g., when the media device 110 is turned on, a channel is changed, an infrared control signal is detected, etc.) by prompting the audience member(s) to self-identify. The audience identification data and the exposure data can then be complied with the demographic data collected from audience members such as, for example, the panelists 106, 107 and 108 during registration to develop metrics reflecting, for example, the demographic composition of the audience. The demographic data includes, for example, age, gender, income level, educational level, marital status, geographic location, race, etc., of the panelist.

In some examples, the meter 102 may be configured to receive panelist information via an example input device 122 such as, for example, a remote control, An Apple iPad^{®}, a cell phone, etc.). In such examples, the meter 102 prompts the audience members to indicate their presence by pressing an appropriate input key on the input device 122. For example, the input device may enable the audience member(s) (e.g., the panelists 106, 107 and 108 of FIG. 1) and/or an unregistered user (e.g., a visitor to a panelist household) to input information to the meter 102 of FIG. 1. This information includes registration data to configure the meter 102 and/or demographic data to identify the audience member(s). For example, the input device 122 may include a gender input interface, an age input interface, and a panelist identification input interface, etc.

The meter 102 of the illustrated example may also determine times at which to prompt the audience members to enter information to the meter 102. In some examples, the meter 102 of FIG. 1 supports audio watermarking for people monitoring, which enables the meter 102 to detect the presence of a panelist-identifying metering device in the vicinity (e.g., in the media presentation environment 104) of the media device 110. In some examples, the acoustic sensor 120 of the meter 102 is able to sense example audio output 124 (e.g., emitted) by an example panelist-identifying metering device 126, such as, for example, a wristband, a cell phone, etc., that is uniquely associated with a particular panelist. The audio output 124 by the example panelist-identifying metering device 126 may include, for example, one or more audio watermarks to facilitate identification of the panelist-identifying metering device 126 and/or the panelist 106 associated with the panelist-identifying metering device 126.

The example gateway 116 of the illustrated example of FIG. 1 is a router that enables the meter 102 and/or other devices in the media presentation environment (e.g., the media device 110) to communicate with the network 118 (e.g., the Internet.)

In some examples, the example gateway 116 facilitates delivery of media from the media source 112 to the media device 110 via the Internet. In some examples, the example gateway 116 includes gateway functionality, such as modem capabilities. In some other examples, the example gateway 116 is implemented in two or more devices (e.g., a router, a modem, a switch, a firewall, etc.). The gateway 116 of the illustrated example may communicate with the network 118 via Ethernet, a digital subscriber line (DSL), a telephone line, a coaxial cable, a USB connection, a Bluetooth connection, any wireless connection, etc.

In some examples, the example gateway 116 hosts a Local Area Network (LAN) for the media presentation environment 104. In the illustrated example, the LAN is a wireless local area network (WLAN), and allows the meter 102, the media device 110, etc. to transmit and/or receive data via the Internet. Alternatively, the gateway 116 may be coupled to such a LAN. In some examples, the gateway 116 may be implemented with the example meter 102 disclosed herein. In some examples, the gateway 116 may not be provided. In some such examples, the meter 102 may communicate with the central facility 114 via cellular communication (e.g., the meter 102 may employ a built-in cellular modem).

The network 118 of the illustrated example is a wide area network (WAN) such as the Internet. However, in some examples, local networks may additionally or alternatively be used. Moreover, the example network 118 may be implemented using any type of public or private network, such as, but not limited to, the Internet, a telephone network, a local area network (LAN), a cable network, and/or a wireless network, or any combination thereof.

The central facility 114 of the illustrated example is implemented by one or more servers. The central facility 114 processes and stores data received from the meter 102. For example, the example central facility 114 of FIG. 1 combines audience identification data and program identification data from multiple households to generate aggregated media monitoring information. The central facility 114 generates reports for advertisers, program producers and/or other interested parties based on the compiled statistical data. Such reports include extrapolations about the size and demographic composition of audiences of content, channels and/or advertisements based on the demographics and behavior of the monitored panelists.

As noted above, the meter 102 of the illustrated example provides a combination of media (e.g., content) metering and people metering. The example meter 102 of FIG. 1 is a stationary device that may be disposed on or near the media device 110. The meter 102 of FIG. 1 includes its own housing, processor, memory and/or software to perform the desired audience measurement and/or people monitoring functions.

In examples disclosed herein, an audience measurement entity provides the meter 102 to the panelist 106, 107 and 108 (or household of panelists) such that the meter 102 may be installed by the panelist 106, 107 and 108 by simply powering the meter 102 and placing the meter 102 in the media presentation environment 104 and/or near the media device 110 (e.g., near a television set). In some examples, more complex installation activities may be performed such as, for example, affixing the meter 102 to the media device 110, electronically connecting the meter 102 to the media device 110, etc.

To identify and/or confirm the presence of a panelist present in the media device 110, the example meter 102 of the illustrated example includes an example display 132. For example, the display 132 provides identification of the panelists 106, 107, 108 present in the media presentation environment 104. For example, the meter 102 of the illustrated example displays indicia or visual indicators (e.g., illuminated numerals 1, 2 and 3) identifying and/or confirming the presence of the first panelist 106, the second panelist 107 and the third panelist 108.

The meter 102 of the illustrated example may be affixed to the media device 110 in any orientation such as, for example, above the media device 110, on a side of the media device 110, below the media device 110, etc. For example, the meter 102 of the illustrated example is capable of invertible mounting (e.g., with a primary orientation for above-television mounting and an inverted orientation for below-television mounting). In some examples, the media device 110 may be capable of side-media device mounting (e.g., a left-side television mounting and a right-side television mounting). The different configurable orientations of the meter 102 enables flexibility when placing the meter 102 in different locations (e.g., on the media device 110, on a ceiling mounted television, a shelf, etc.) depending on footprint constraints of the media presentation environment 104 and/or the media device 110. To this end, the example meter 102 of the illustrated example provides a relatively low profile and/or dimensional footprint (e.g., a relatively small thickness and/or height, a small or narrow footprint, etc.). Additionally, the orientation of the meter 102 may be configured at a manufacturing facility, a ratings company, in the field at the media presentation environment 104, and/or any other location.

To enable different mounting configurations of the example meter 102 disclosed herein, the display 132 of the meter 102 of the illustrated example is modular. For example, the display 132 may be configured based on the mounting orientation of the meter 102. To enable presentation of indicia in an upright or right side up orientation via the display 132, the meter 102 of the illustrated example includes a removable stencil. For example, the stencil may be removed from the display 132 and may be re-oriented based on the mounting orientation of the meter 102. In some examples, an example stencil disclosed herein may be replaced or interchanged with a different stencil to present different indicia. For example, the display 132 of the illustrated example presents indicia having numerals. However, in some examples, the display 132 may be configured to present indicia having letter(s), texts, symbols, and/or any other indicia, and/or any combination thereof.

In addition, in some examples, the meter 102 of the illustrated example determines a proper orientation of the display 132 and/or the stencil. The display 132 and/or stencil of the illustrated example are properly oriented when the visual indicators of the display 132 are presented in an upright orientation. In other words, the display 132 and/or the stencil is in an improper orientation when the visual indicators presented by the display 132 and/or the stencil are, for example, inverted or upside-down.

In some examples, the meter 102 of the illustrated example controls a light operation associated with a respective one of the visual indicators of the display 132 and/or the stencil based on the detected orientation of the display 132 and/or the stencil. Thus, depending on a mounting orientation of the meter 102 and/or an orientation of the stencil, the meter 102 illuminates the proper visual indicator.

In the illustrated example of FIG. 1, the meter 102 is affixed or mounted to the media device 110 in a first mounting orientation 134 (e.g., a first mounting configuration). In the illustrated example, the first mounting orientation 134 provides an above-media device mounting configuration (e.g., an above-television mounting configuration), which places the display 132 in a landscape orientation relative to the media device 110. For example, the meter 102 is shown in a right-side up orientation in FIG. 1. The meter 102 of the illustrated example may be coupled (e.g., directly attached) to a mounting surface 136 (e.g., an upper surface, an upper horizontal surface, etc.) of the media device 110. For example, the meter 102 of the illustrated example is in a substantially horizontal orientation relative to the media device 110 when the meter 102 is in the first mounting orientation 134. In the first mounting orientation 134, the display 132 of the illustrated example displays the visual indicators or indicia in an upright orientation. For example, the meter 102 of the illustrated example displays the visual indicators or indicia in a landscape configuration in ascending order from left to right in the orientation of FIG. 1. Alternatively, the meter 102 of the illustrated example may not be fixed to the media device 110. For example, the meter 102 may be placed in a location near the media device 110.

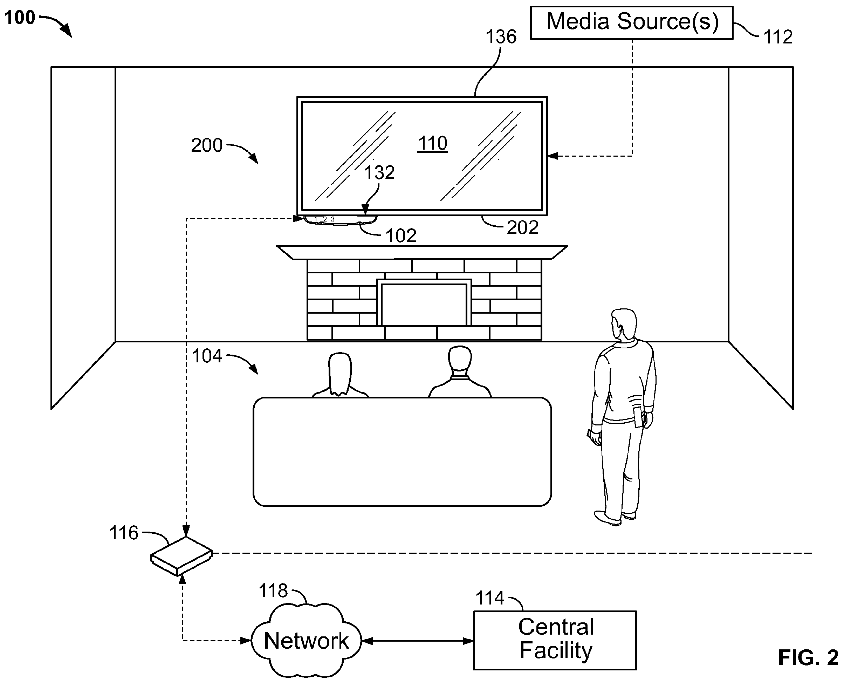

FIG. 2 illustrates the example media presentation environment 104 of FIG. 1 with the meter 102 of the illustrated example in a second mounting orientation 200 (e.g., a second mounting configuration). In the second mounting orientation 200, the meter 102 of the illustrated example of FIG. 2 provides a below-media device mounting configuration (e.g., a below-television mounting configuration), which also places the display 132 in a landscape orientation relative to the media device 110. For example, the meter 102 of the illustrated example is in a substantially horizontal orientation relative to the media device 110 when the meter 102 is in the second mounting orientation 200. For example, the meter 102 shown in the illustrated example of FIG. 2 is inverted (e.g., upside down) relative to the orientation of the meter 102 shown in FIG. 1. The meter 102 of the illustrated example may be coupled (e.g., directly attached) to a surface 202 (e.g., a lower surface) of the media device 110 (e.g., that is opposite the mounting surface 136). Although the meter 102 provided in the second mounting orientation 200 is flipped upside down compared to the first mounting orientation 134 of FIG. 1, the display 132 of the example meter 102 displays the indicia in an upright orientation. In other words, although the meter 102 is turned upside-down, the indicia presented by the display 132 is presented in an upright orientation. In the second mounting orientation 200, the display 132 of the illustrated example displays indicia in a landscape orientation in ascending order from left to right, similar to the orientation of FIG. 1.

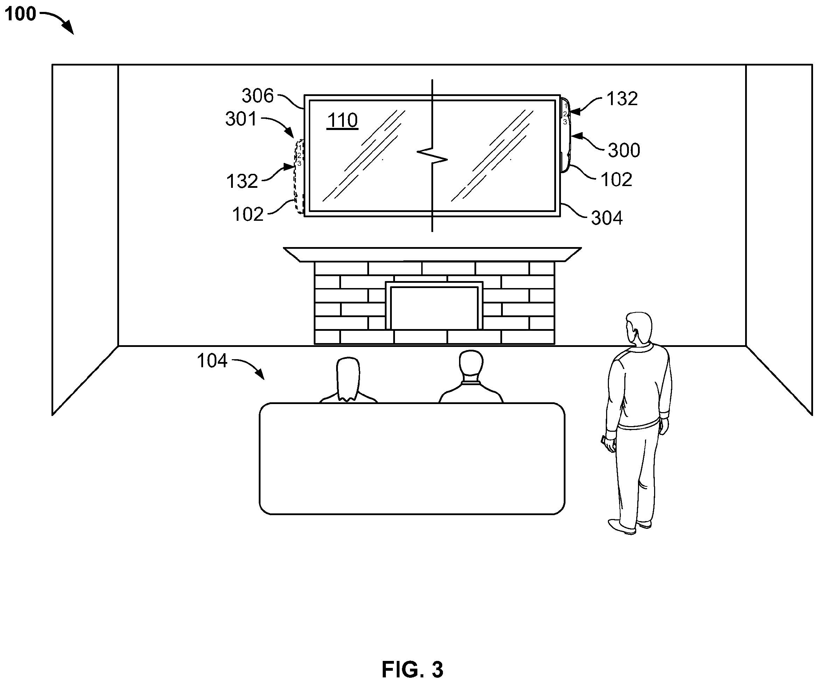

FIG. 3 illustrates the example media presentation environment 104 of FIG. 1 with the example meter 102 of the illustrated example in a third mounting orientation 300 (e.g., a third mounting configuration) relative to the media device 110. In the third mounting orientation 300, the meter 102 of the illustrated example may be configured for a right-side media device mounting configuration. For example, the meter 102 of the illustrated example may be coupled (e.g. directly attached) to a surface 304 of the media device 110 (e.g., a vertical or right lateral surface in the orientation of FIG. 1). Alternatively, as shown in dashed lines, the meter 102 of the illustrated example may be provided in a fourth mounting configuration 301 (e.g., a fourth mounting configuration) relative to the media device 110. In the fourth mounting configuration 301, the meter 102 of the illustrated example may be configured for a left-side media device mounting configuration. For example, the meter 102 of the illustrated example may be coupled (e.g. directly attached) to a surface 306 of the media device 110 (e.g., a vertical or left lateral surface in the orientation of FIG. 1) opposite the surface 304.

In either the third mounting orientation 300 or the fourth mounting orientation 301, the display 132 is in a portrait orientation relative to the media device 110. For example, in either of the third mounting orientation 300 or the fourth mounting orientation 301, the meter 102 of the illustrated example is in a substantially vertical orientation relative to the media device 110 (e.g., relative to horizontal). Additionally, the meter 102 of the illustrated example displays indicia in an upright orientation (e.g., a right side up orientation). In particular, the meter 102 of the illustrated example displays the indicia in a portrait configuration relative to the media device 110 when the meter 102 is positioned in the third mounting orientation 300 or the fourth mounting orientation 301. For example, the display 132 presents indicia (e.g., numerals 1, 2, and 3) in a portrait orientation in ascending order from top to bottom in the third mounting orientation 300. By employing a modular display 132, a mounting orientation of the meter 102 of the illustrated example may be varied and the indicia presented by the display 132 is presented in a right side up or upright orientation (e.g., a top to bottom orientation).

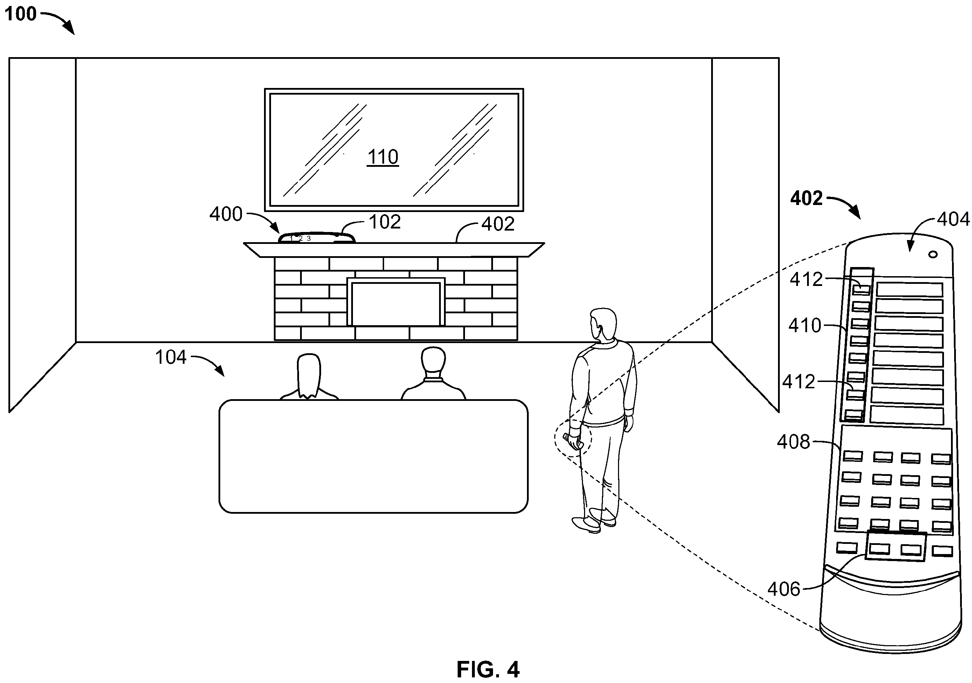

FIG. 4 illustrates the example media presentation environment 104 of FIG. 1 with the meter 102 positioned in another mounting configuration 400. In the illustrated example of FIG. 4, the meter 102 is positioned or spaced from the media device 110. For example, the meter 102 of the illustrated example of FIG. 4 is placed and/or coupled to (e.g., directly attached to) a surface 401 (e.g., a mantel) of a fireplace positioned near (e.g., below) the media device 110. FIG. 4 also illustrates an example input device 402 that may be used to interact with the example meter 102 of FIGS. 1-4. In some examples, the example input device 402 may be used to implement the input device 122 of FIG. 1. The example input device 402 of the illustrated example includes an example user interface 404 that enables the audience member(s) (e.g., the panelists 106, 107 and 108 of FIG. 1) and/or one or more unregistered users (e.g., a visitor to a panelist household) to input information to the meter 102 of FIG. 1. This information includes registration data to configure the meter 102 and/or demographic data to identify the audience member(s). The user interface 404 includes a keyboard, a touchpad, a touchscreen and/or keypad. In the example of FIG. 4, the user interface 404 is implemented by a key pad that provides an example a gender input interface 406, an example age input interface 408, and an example panelist identification input interface 410. For example, the panelist identification input interface 410 includes a column of identification buttons 412 (e.g., a plurality of numerical or alpha characters), each of which may be assigned to represent a single, different one of the audience members (e.g., the panelists 106, 107 and 108) present in the media presentation environment 104. In some examples, a registered panelist need press only one button on the input device 402 to identify his/her presence in the audience when, for example, the meter 102 of FIG. 1 prompts the audience to self-identify.

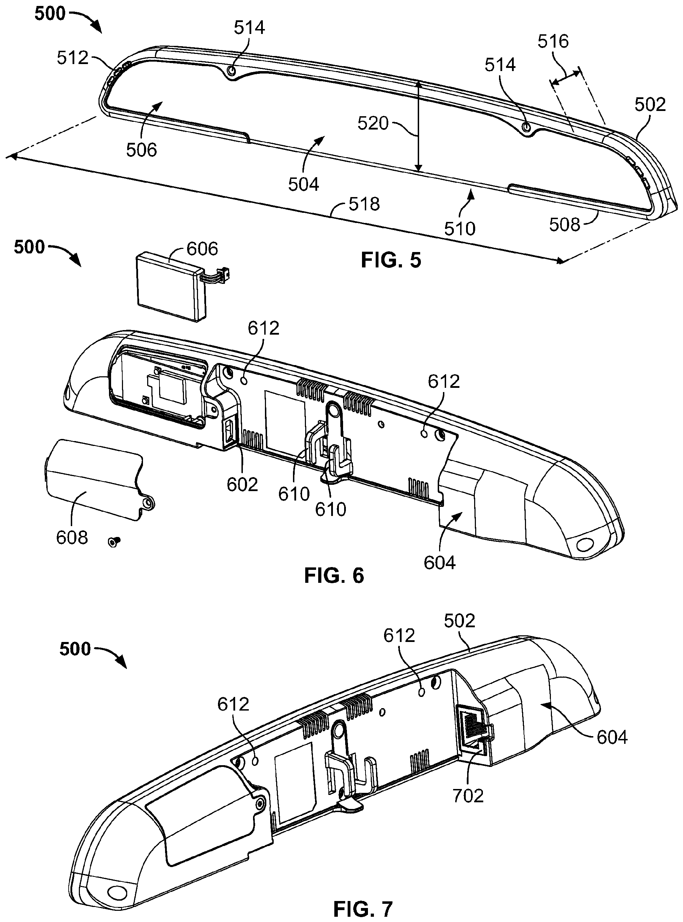

FIG. 5 is a perspective, front view of an example meter 500 constructed in accordance with the teachings of this disclosure. The example meter 500 of FIG. 5 may implement the example meter 102 and/or the example audience measurement system 100 of FIGS. 1-4. The meter 500 of the illustrated example combines people metering and media (e.g., content) metering in an example housing 502 (e.g., a single housing).

To display panelist information, the meter 500 of the illustrated example includes an example display 504. In particular, the display 504 of the illustrated example is a modular display that enables various or different mounting configurations or orientations, such as, for example, the mounting orientations 134, 200, 300, 301 and 400 shown in FIGS. 1-4. In addition, regardless of the mounting orientation, the display 504 of the example meter 500 presents indicia or visual indicators in an upright or proper orientation. Additionally, as described in greater detail below, the display of the illustrated example employs removable and/or interchangeable stencils to provide a modular display. The display 504 of the illustrated example is provided at a front side 506 of the meter 500.

To mount or couple the meter 500 to a surface or edge of a media presentation device (e.g., the media device 110 of FIGS. 1-4), the meter 500 of the illustrated example includes a mounting surface 508. The mounting surface 508 of the illustrated example is at an example bottom side 510 of the example meter 500. For example, the bottom side 510 of the meter of the illustrated example is substantially perpendicular to the front side 506 of the meter 500. The meter 500 of the illustrated example (e.g., the front side 506) includes an example opening 512 for audio output (e.g., via a speaker) and/or an example opening 514 to receive audio (e.g., via a microphone) generated by a media device (e.g., audio output of the example media device 110 of FIG. 1).

In addition, the meter 500 of the illustrated example provides a relatively low profile or small dimensional footprint (e.g., when mounted to a media device 110). For example, the meter 500 of the illustrated example has a first dimension 516 (e.g., a dimensional thickness), a second dimension 518 (e.g., a dimensional length) and a third dimension 520 (e.g., a dimensional height). For example, the first dimension 516 may be between approximately 5 millimeters (e.g., 0.20 inches) and 50 millimeters (e.g., 2 inches). For example, the first dimension 516 may be approximately 16.5 millimeters (e.g., 0.65 inches). In some examples, the second dimension 518 may be between approximately 200 millimeters (7.2 inches) and 300 millimeters (e.g., 11.8 inches). In some examples, the second dimension 518 may be approximately 265 millimeters (e.g., 10.4 inches). In some examples, the second dimension 518 is a ratio of the first dimension 516. For example, the second dimension 518 to first dimension 516 ratio may be a length-to-width ratio between approximately 5:1 and 15:1. In some examples, the third dimension 520 may be approximately between 10 millimeters (0.4 inches) and 30 millimeters (e.g., 1.2 inches). For example, the third dimension 520 may be approximately 25 millimeters (e.g., 0.98 inches).

FIG. 6 is a perspective, rear view of the example meter of FIG. 5. The example meter 500 of the illustrated example employs an example first connector 602 accessible via a rear side 604 of the housing 502. The first connector 602 of the illustrated example is a USB connector. However, in some examples, the first connector 602 may be a power connector, a microUSB connector, and/or any other type of connector(s). The first connector 602 of the illustrated example enables communication between, for example, the meter 500 and the media device 110 and/or the gateway 116 of FIGS. 1-4 via a cable (e.g., a USB cable). For example, the meter 500 of the illustrated example may employ invasive monitoring involving a physical connection to the media device 110 via the first connector 602. (e.g., via a USB connection). In some examples, the first connector 602 enables connection between the meter 500 and a power source. In some examples, the power source provides power to the meter 500 and/or a rechargeable battery 606 positioned in the housing 502 and accessible via a removable door 608. In some examples, power to the meter 500 (and/or the battery) may be provided via connection with a media presentation device (e.g., the media device 110). In other words, the meter 500 can communicate with and/or receive power from a media presentation device coupled to the meter 500 via the first connector 602. The housing 502 of the illustrated example employs an example retainer 610 (e.g., hooks) to support, retain and/or otherwise guide a cable coupled to the first connector 602 and/or an example second connector 702 (described below in connection with FIG. 7). In addition, the housing 502 (e.g., the rear side 604) of the illustrated example includes example openings 612 to receive audio (e.g., via a microphone) generated by a media device (e.g., audio output of the example media device 110 of FIG. 1).

FIG. 7 is another perspective, rear view of the example meter 500 of FIGS. 5-6. The example meter 500 of the illustrated example employs the example second connector 702 accessible via the rear side 604 of the housing 502. The second connector 702 of the illustrated is an Ethernet connector (e.g., RJ45 jack, Cat5e connector, etc.). However, in some examples, the second connector 702 may be, for example, a power connector, a microUSB connector, coaxial cable connector, and/or any other type of connector(s). The second connector 702 of the illustrated example enables communication between, for example, the meter 500 and the media device 110 and/or the gateway 116 of FIG. 1.

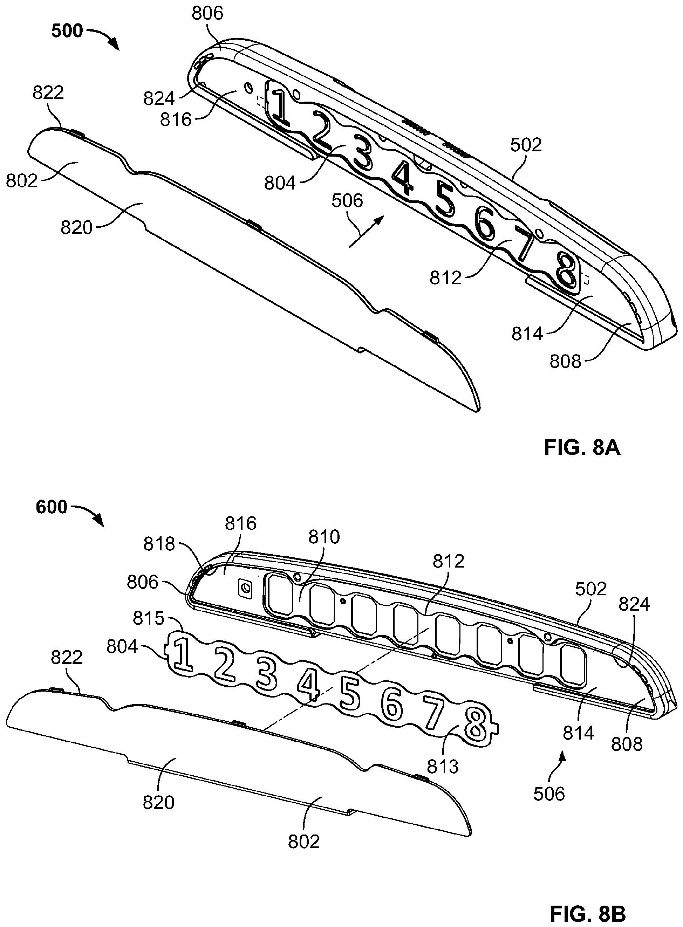

FIG. 8A is a perspective view of the example meter 500 showing a cover 802 of the meter 500 of the illustrated example removed from the housing 502 to expose and/or access an example stencil 804 of the example meter 500 of the illustrated example coupled to the housing 502. FIG. 8B is a perspective view of the example meter 500 showing the example stencil 804 and the example cover 802 of the illustrated example removed from the housing 502. To provide the modular display 504, the meter 500 of the illustrated example employs the cover 802 and the stencil 804 (e.g., an insert) that are removably coupled to an example first panel 806 of the housing 502. More specifically, the stencil 804 is removably coupled to a display area 808 of the housing 502. To enable access to the stencil 804 and/or the display area 808, the cover 802 is removed (e.g., detached) from the housing 502.

Referring to FIGS. 8A and 8B, to receive the stencil 804, the display area 808 of the housing 502 includes a first example recessed cavity 810. For example, the first recessed cavity 810 of the illustrated example has a perimeter or outline 812 (e.g., a sinusoidal pattern perimeter) that is substantially similar to an outline or perimeter 815 (e.g., a sinusoidal pattern perimeter) of the stencil 804. To this end, the first recessed cavity 810 of the housing 502 of the illustrated example matably receives the stencil 804. For example, when mounted or coupled to the housing 502, a front surface 813 of the stencil 804 of the illustrated example may be flush mounted relative to a front surface 814 of the display area 808.

To receive the cover 802, the display area 808 of the housing 502 of the illustrated example includes a second example recessed cavity 816. The second recessed cavity 816 of the illustrated example is adjacent the first recessed cavity 810. For example, the second recessed cavity 816 defines the front surface 814 of the display area 808. In addition, the second recessed cavity 816 of the illustrated example defines a peripheral lip 818 (e.g., an edge) of the front side 506 of the housing 502. To this end, an outer surface 820 (e.g., a front surface) of the cover 802 of the illustrated example is substantially flush mounted relative to the peripheral lip 818 of the housing 502. In addition, a perimeter 822 of the cover 802 of the illustrated example is substantially similar to a perimeter 824 of the peripheral lip 818. To this end, the cover 802 matably engages the display area 808 of the housing 502. The cover 802 of the illustrated example is composed of a semi-translucent material to allow visual presentation of only the illuminated visual indicators of the stencil. In some examples, the cover 802 may be transparent.

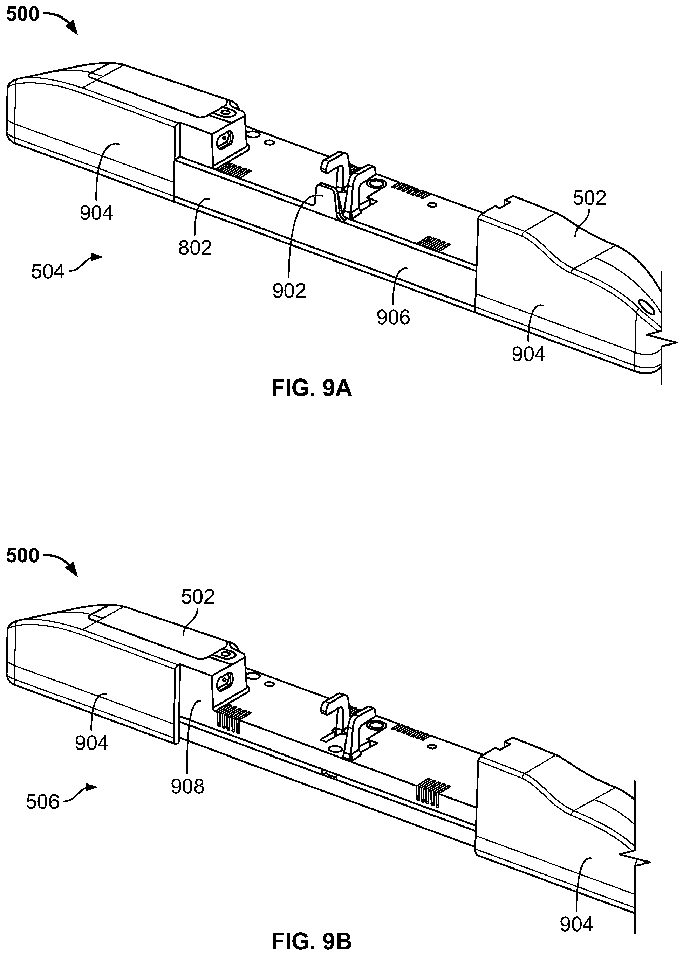

FIG. 9A is perspective, bottom view of the example meter 500. The cover 802 of the illustrated example is removably coupled to the housing 502 via a snap-fit connection. To removably couple the cover 802 to the housing 502, the cover 802 of the illustrated example employs a clip 902. For example, to remove the cover 802 from the housing 502, an example clip 902 of the cover 802 of the illustrated example may be depressed or pushed away from the housing 502 (e.g., via a user's finger). The cover 802 of the illustrated example may be removed from the housing 502 without use of a tool. To enable application of a force via, for example, a user's finger, the clip 902 of the illustrated example includes an example grip. In some examples, the cover 802 may employ a button (e.g., a spring-loaded button), a clamp, a fastener, and/or any other fastener(s).

In the illustrated example of FIGS. 9A and 9B, the mounting surface 508 of the example meter 500 includes one or more mounting surfaces or mounting areas 904 to mount the meter 500 to a media presentation device (e.g., the media device 110 of FIG. 1). The mounting areas 904 receive, for example, adhesive (e.g., an adhesive strip) to attach or mount the meter 500 to the media presentation device.

FIG. 9B is a perspective view of the example meter 500 of FIG. 9A with the cover 802 removed. As noted above, removing the cover 802 of the illustrated example enables access to the stencil 804 and the display area 808. To receive a portion 906 of the cover 802, the mounting surface 508 of the illustrated example includes a recessed portion or recessed area 908. The recessed area 908 of the illustrated example is positioned between the mounting areas 904. In this manner, the portion 906 of the cover 802 is substantially flush or recessed relative to the mounting areas 904 and/or the mounting surface 508.

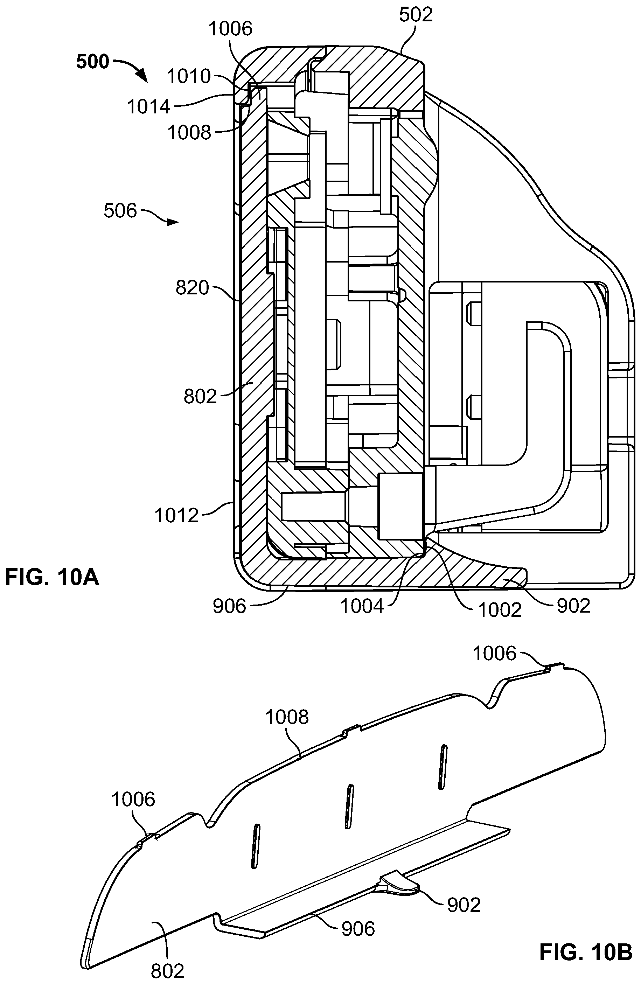

FIG. 10A is a cross-sectional view of the example meter 500 of FIGS. 5-7. FIG. 10B is a perspective view of the example cover 802. Referring to FIGS. 10A and 10B, the clip 902 of the illustrated example defines an engagement surface 1002 that engages (e.g., frictionally engages) a retaining surface 1004 of the housing 502. The clip 902 of the illustrated example flexes or bends to engage or disengage the retaining surface 1004 of the housing 502. The cover 802 of the illustrated example includes a plurality of example raised ends or lips 1006 protruding from an upper edge 1008 of the cover 802. The lip 1006 engages or contacts (e.g., frictionally engages) a retaining surface 1010 of the housing 502 (e.g., the peripheral lip 818 of the first panel 806). Thus, when the cover 802 is coupled to the housing 502, the cover 802 of the illustrated example is retained to the housing 502 via the snap fit connection (e.g., friction engagement between the clip 902 and the retaining surface 1004). To couple the cover 802 of the illustrated example to the housing 502, the lips 1006 are positioned in engagement with the retaining surface 1010 and the cover 802 is rotated so that the engagement surface 1002 frictionally engages the retaining surface 1004.

In addition, when the cover 802 of the illustrated example is coupled to the housing 502, the outer surface 820 of the cover 802 of the illustrated example is substantially flush or slightly recessed (e.g., by approximately between 0.1 inches and 0.3 inches, etc.) relative to an outermost surface 1014 of the front side 506 of the housing 502 (e.g., the peripheral lip 818). In addition, the portion 906 of the cover 802 of the illustrated example is positioned (e.g., wraps) underneath the housing 502.

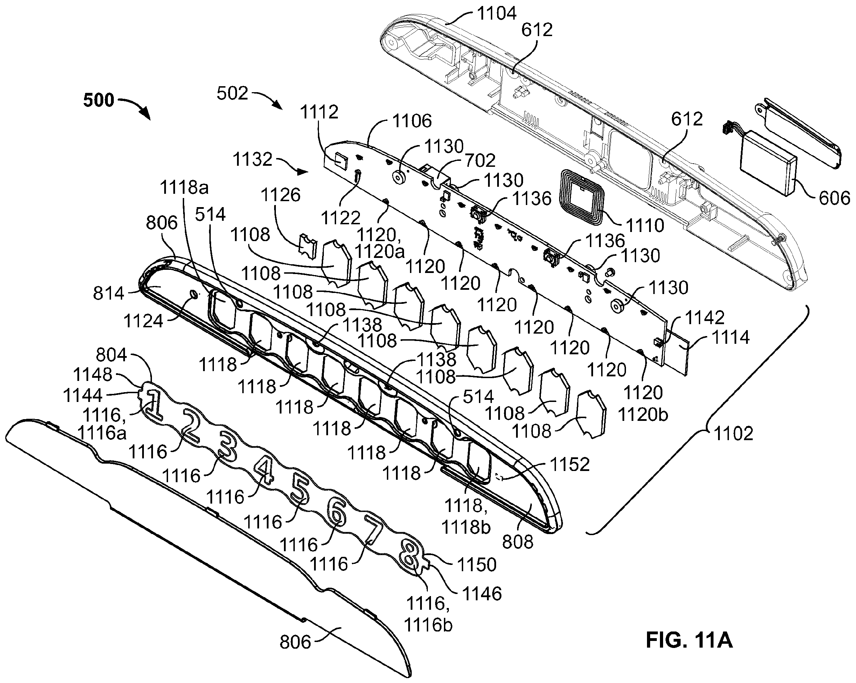

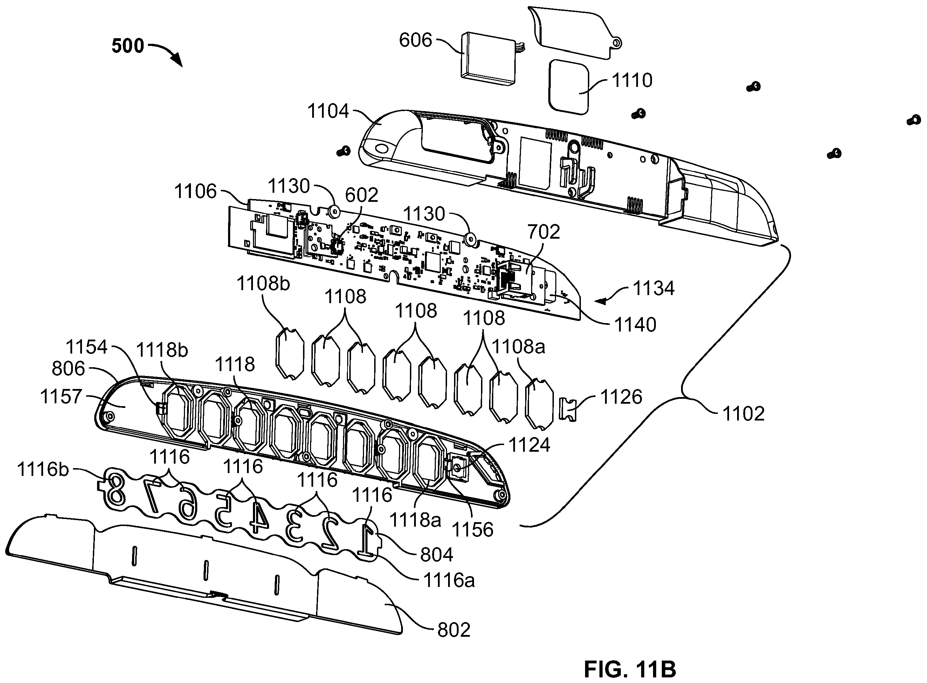

FIG. 11A is a front, exploded view of the example meter 500 of FIGS. 5-7. FIG. 11B is a rear, exploded view of the example meter 500 of FIGS. 5-7. The housing 502 of the illustrated example includes example components 1102 positioned in the housing 502. To house or capture example components 1102 of the example meter 500, the housing 502 of the illustrated example includes the first panel 806 (e.g., a front housing portion) coupled to an example second panel 1104 (e.g., a rear housing portion). The first panel 806 may be coupled to the second panel 1104 via fasteners, snap fit connection, adhesive and/or any other fastening technique(s), fastener(s) and/or connector(s). The components 1102 of the example meter 500 may include an example circuit board 1106 (e.g. a printed circuit board) having a microprocessor, a plurality of example diffusors 1108, an example near-field communication antenna 1110, the first and second connectors 602 and 702, the battery 606, a first example antenna 1112 (e.g., a WIFI antenna), a second example antenna 1114 (e.g., a Bluetooth antenna) and/or other components. In some examples, the housing 502 (e.g., the first panel 806 and the second panel 1104) is composed of one or more non-conductive materials, such as plastic, to reduce interference with one or more communication devices (e.g., the antennas 1112 and 1114, etc.) of the example meter 500.

To display identification of a panelist registered with the meter 500, the meter 500 of the illustrated example employs the stencil 804. In particular, the stencil 804 of the illustrated example includes a plurality of example visual indicators 1116. For example, each of the visual indicators 1116 may be assigned to represent a particular panelist (e.g., the panelists 106, 107 and/or 108 of FIG. 1) associated with a viewing area (e.g., the media presentation environment 104 of FIG. 1)). The visual indicators 1116 of the illustrated example are indicia. The visual indicators 1116 of the illustrated example are numerals. In addition, the visual indicators 1116 of the illustrated example are in ascending order (e.g., from left to right in the orientation of FIG. 11A). Further, the visual indicators 1116 of the stencil 804 of the illustrated example are presented in a landscape orientation.

For example, the visual indicators 1116 of the illustrated example includes eight single digit characters - one through eight. Thus, the meter 500 of the illustrated example may represent up to eight different panelists. In some examples, the visual indicators 1116 may be more than eight or less than eight. In some examples, the visual indicators 1116 or indicia may include text and/or alphanumeric characters. In some examples, the visual indicators 1116 or indicia may include symbols, other language characters (e.g., Chinese characters or other logograms) and/or any other indicia associated with, or used to identify, a panelist.

To receive the stencil 804, the housing 502 of the illustrated example includes the display area 808. The display area 808 of the housing 502 of the illustrated example includes a plurality of example openings 1118. In particular, a respective one of the openings 1118 is associated with (e.g., aligned with) a respective one of the visual indicators 1116. For example, a first visual indicator 1116a (e.g., a first numeral or indicia) of the stencil 804 is aligned with a first opening 1118a, a second visual indicator 1116b (e.g., a second numeral or indicia) of the stencil 804 is aligned with a second opening 1118b different from the first opening 1118a, and so on. In the illustrated example, the housing 502 includes eight openings 1118 associated with respective ones of the eight visual indicators 1116 of the stencil 804.

Each of the openings 1118 is in communication with a light source such as, for example, a light emitting diode that emits light when energized. The light source of the illustrated example includes a plurality of example lights 1120 (e.g., light emitting diodes) that are surface mounted to the circuit board 1106. A respective one of the lights 1120 is aligned with or provides illumination to a respective one of the openings 1118 to illuminate a respective one of the visual indicators 1116. The circuit board 1106 of the illustrated example includes eight lights 1120. For example, a first light 1120a from the plurality of lights 1120 illuminates the first visual indicator 1116a from the plurality of visual indicators 1116 via the first opening 1118a, a second light 1120b from the plurality of lights 1120 illuminates the second visual indicator 1116b from the plurality of visual indicators 1116 via the second opening 1118b, and so on. In this manner, a respective one of the lights 1120 may illuminate a respective one of the visual indicators 1116 of the stencil 804 aligned or associated with the respective one of the openings 1118 in communication with the respective one of the lights 1120.

To provide status information, the meter 500 of the illustrated example includes an example status indicator. For example, the status information may provide indication that the meter 500 is powered, the battery 606 has a low charge and/or any other indication. The status indicator of the illustrated example is an example status indicator light 1122 (e.g., a light emitting diode) mounted to the circuit board 1106 and visible via the display area 808 via an example opening 1124 through the first panel 806.

The lights 1120 and/or 1122 may provide a clear (e.g., white) light, one or more colored lights (e.g., a green light, a red light, etc.), or any combination thereof. In some examples, the lights 1120 or a status indicator 1122a may be illuminated to provide a visual warning or alarm, a status indication (e.g., a power indictor) and/or to convey any other information to a panelist. In some examples, an intensity of the lights 1120 and/or 1122 may vary (e.g., increase and/or decrease) when the meter 500 prompts a panelist to self-identify. For example, the meter 500 may cause the first light 1120a to turn on and off rapidly to present the first visual indicator 1116a in flashing or blinking pattern for duration of time (e.g., 20 seconds) or until a panelist self-identifies.

To evenly distribute or scatter light emitted by the lights 1120 through the openings 1118, the meter 500 of the illustrated example includes the diffusors 1108. A respective one of the diffusors 1108 is positioned or aligned with a respective one of the openings 1118. In addition, the meter 500 of the illustrated example includes a diffusor 1126 aligned with the opening 1124 to evenly distribute or scatter light emitted by the status indicator light 1122 of through the opening 1124.

To receive audio signals, the example meter 500 of the illustrated example includes a plurality of example audio sensors 1130 (e.g., a microphone and/or other acoustic sensors). The audio sensors 1130 of the illustrated example are positioned on a first side 1132 of the circuit board 1106 (e.g., the front side) and on a second side 1134 of the circuit board 1106 (e.g., the rear side) opposite the first side. The audio sensors 1130 are aligned with respective openings 514 through the first panel 806 and the respective openings 612 of the second panel 1104. The audio sensors 1130 of the illustrated example enable optimal sound detection (e.g., sound pickup) for speaker outputs of the media device 110 (e.g., from speakers of a television), which typically emanate from a rear of the media device 110 (e.g., a rear of the television), and sound output from, for example, surround sound speakers that typically emanate in a media presentation environment (e.g., the media presentation environment 104) in the front of the media device 110 (e.g., a front of the television). The dual audio sensors 1130 on both the first side 1132 and the second side 1134 of the example circuit board 1106 reduce instances of audio nulls adversely impacting watermark performance.

To receive commands and/or communicate with an input device (e.g., the input device 122 of FIG. 1 or the input device 402 of FIG. 4), the meter 500 of the illustrated example includes example infrared sensors 1136. The infrared sensors 1136 of the illustrated example are aligned with respective example openings 1138 of the first panel 806.

In some examples, the meter 500 (e.g., via a microprocessor, logic circuit, etc.) determines if the housing 502 and/or the stencil 804 is in an improper mounting configuration or orientation (e.g., an orientation other than the first mounting orientation 134 of FIG. 1, the second mounting orientation 200 of FIG. 2, the third mounting orientation 300 of FIG. 3, and the fourth mounting orientation 301 of FIG. 3).

To detect or verify proper orientation of the meter 500 and/or the housing 502 relative to a desired mounting configuration (e.g., the first mounting orientation 134 of FIG. 1, the second mounting orientation 200 of FIG. 2, the third mounting orientation 300 or the fourth mounting orientation 301 of FIG. 3), the meter 500 of the illustrated example employs an example orientation sensor 1140 (FIG. 11B) (e.g., an orientation detector). For example, the orientation sensor 1140 of the illustrated example is an accelerometer to sense an orientation of the meter 500 and/or the housing 502. In some examples, the orientation sensor 1140 may be a piezoelectric sensor, a strain gauge sensor, and/or any other sensor to detect an orientation of the meter 500 and/or the housing 502.

In some examples, the meter 500 detects the housing orientation to determine if the housing 502 (e.g., via the orientation sensor 1140) becomes dislodged or disconnected from the media device (e.g., the media device 110). For example, the meter 500 may be configured to determine if the housing may have fallen behind a television and/or from a mounting surface (e.g., the mounting surface 136) if the detected orientation (e.g., via the orientation sensor 1140) is not a proper mounting orientation (e.g., is not the first mounting orientation 134 of FIG. 1, the second mounting orientation of FIG. 2, the third mounting orientations 300 of FIG. 3, or the fourth mounting orientation 301 of FIG. 3). In some examples, the meter 500 of the illustrated example is configured to provide an alarm (e.g., a visual alarm via the display area 808 and/or an audible warning via a speaker) if the detected orientation is not a proper orientation (e.g., the detected orientation is neither the first mounting orientation 134 of FIG. 1, the second mounting orientation of FIG. 2, the third mounting orientations 300, or the fourth mounting orientation 301 of FIG. 3).

In some examples, based on the detected orientation of the housing 502, the meter 500 may verify that the stencil 804 is in a proper orientation relative to the housing 502. For example, the stencil 804 may be properly oriented relative to the housing 502 when the visual indicators 1116 are in oriented in an upright orientation or right-side up position. For example, the stencil 804 may need to be inverted when the housing 502 is positioned from the first orientation (e.g., first mounting orientation 134 of FIG. 1) to a second orientation (e.g., the second mounting orientation 200 of FIG. 2). In some examples, the meter 500 may verify proper stencil orientation based on the detected orientation of the housing 502. For example, the meter 500 of the illustrated example may verify proper stencil orientation relative to the display area 808 based on the mounting orientation of the meter 500 and/or the housing 502.

To detect an orientation or position of the stencil 804 relative to the display area 808, the meter 500 of the illustrated example includes an example sensor 1142 (FIG. 11A) (e.g., a contact switch, an optical sensor, etc.). For example, to determine the orientation of the stencil 804, the sensor 1142 may be a contact switch to determine a position of the stencil 804 and/or may be an optical sensor to determine an orientation of the indicia (e.g., via an optical sensor). In the illustrated example, to enable orientation detection of the stencil 804 via the sensor 1142, the stencil 804 of the illustrated example includes a first example tab 1144 and a second example tab 1146. In the illustrated example, the first tab 1144 and the second tab 1146 are asymmetric tabs protruding from respective lateral edges 1148 and 1150 of the stencil 804. The first tab 1144 has a first dimension (e.g., a first length) and the second tab 1146 has a second dimension (e.g., a second length) that is greater than the first dimension. However, in some examples, the stencil 804 may include only one tab and/or another feature to enable detection of an orientation of the stencil 804, for example, as described below.

To enable the sensor 1142 to detect the presence or absence of the first tab 1144 or the second tab 1146 of the stencil 804, the first panel 806 of the illustrated example includes an example sensing slot 1152 (e.g., a recessed cavity, a channel, etc.). The sensing slot 1152 may include a contact electrically coupled and/or mechanically coupled to the sensor 1142. Referring to FIG. 11B, the sensing slot 1152 of the illustrated example is an example recessed channel 1154 formed on an inner surface 1157 of the first panel 806 opposite the display area 808. Thus, the sensing slot 1152 of the illustrated example does not extend through the front surface 814 of the display area 808. The first panel 806 of the illustrated example includes a non-sensing slot 1156 on an opposite end of the sensing slot 1152 to receive the first tab 1144 or the second tab 1146 when the other one of the first tab 1144 or the second tab 1146 is positioned in the sensing slot 1152.

In some examples, the example meter 500 may control operation of the lights 1120 based on a detected mounting orientation of the meter 500 and/or the housing 502. For example, the meter 500 may control a particular light 1120 associated with a particular visual indicator 1116 of the stencil 804 based on the detected orientation of the housing 502. For example, when the example meter 500 is in a first orientation (e.g., the first mounting orientation 134 of FIG. 1 or the third mounting orientation 300 of FIG. 3), the first light 1120a is associated with the first visual indicator 1116a of the stencil 804 and the second light 1120b is associated with the second visual indicator 1116b of the stencil 804. However, when the example meter 500 is in a second orientation (e.g., the second mounting orientation 200 of FIG. 2 or the fourth mounting orientation 301 of FIG. 3) (e.g., an inverted orientation)), the first light 1120a is associated with the second visual indicator 1116b of the stencil 804 and the second light 1120b is associated with the first visual indicator 1116a of the stencil 804 (i.e., the assignment or orientation of the lights 1120 with the respective ones of the visual indicators 1116 is flipped). Thus, the meter 500 may automatically assign the lights 1120 with the respective one of the visual indicators 1116 of the stencil 804 based on the orientation of the meter 500 and/or the housing 502.

In some examples, the example meter 500 may control operation of the lights 1120 based on a detected orientation of the stencil 804. In some such examples, the example meter 500 may control operation of the lights 1120 without detecting an orientation of the housing 502. For example, the meter 500 may control a particular light 1120 associated with a particular visual indicator 1116 of the stencil 804 based on the detected orientation of the stencil 804 alone. For example, when the example meter 500 detects that the sensor 1142 is in a triggered or active state or condition (e.g., the second tab 1146 is positioned in the sensing slot 1152 when the stencil 804 is in the first orientation), the first light 1120a is associated with the first visual indicator 1116a of the stencil 804 and the second light 1120b is associated with the second visual indicator 1116b of the stencil 804. However, when the meter 500 detects that the sensor 1142 is in a non-triggered or non-active state or condition (e.g., when the stencil 804 is in a second orientation (e.g., an inverted orientation) and the second tab 1146 is in the non-sensing slot 1156), the first light 1120a is associated with the second visual indicator 1116b of the stencil 804 and the second light 1120b is associated with the first visual indicator 1116a of the stencil 804 (i.e., the assignment or orientation of the lights 1120 with the respective ones of the visual indicators 1116 is flipped). Thus, the meter 500 may automatically assign the lights 1120 with the respective one of the visual indicators 1116 of the stencil 804 based on a detected orientation of the stencil 804. In some examples, the meter 500 may control operation of the lights based on both the orientation of the housing 502 and the orientation of the stencil 804. In some examples, the operation of the sensor 1142 is not limited to the described examples but, for example, could be reversed (e.g., behavior associated with the sensor 1142 being triggered could alternatively be associated with the sensor 1142 not being triggered, and vice versa.

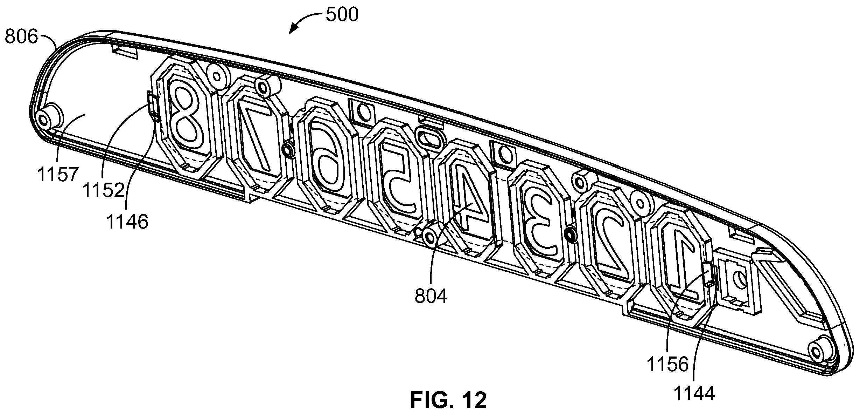

FIG. 12 is a perspective view of the example first panel 806 of the example meter 500 of FIGS. 5-7. An outline of the stencil 804 is shown in FIG. 12 for illustrative purposes. For example, the stencil 804 is not positioned in contact with the inner surface 1157 of the first panel 806. The sensing slot 1152 of the illustrated example is sized to receive the first tab 1144 and the second tab 1146. However, the sensor 1142 only detects the presence of the second tab 1146 (e.g., due to the asymmetric dimensions of the first tab 1144 and the second tab 1146) when the first tab 1144 or the second tab 1146 are positioned in the sensing slot 1152. For example, a contact may be positioned in the sensing slot 1152 that may be triggered only by the second tab 1146 positioned in the sensing slot 1152. In some examples, the housing 502 may employ a contact switch and/or trigger in the sensing slot 1152. In some examples, the housing 502 may employ the sensor 1142 in communication with the sensing slot 1152 and may employ an additional sensor in the sensing slot 1152 and/or along the perimeter of the display area 808 and/or a perimeter 815 of the stencil 804. For example, the stencil 804 may include a third tab to interact with sensors positioned along the perimeter of the display area 808 to determine the orientation of the stencil 804.

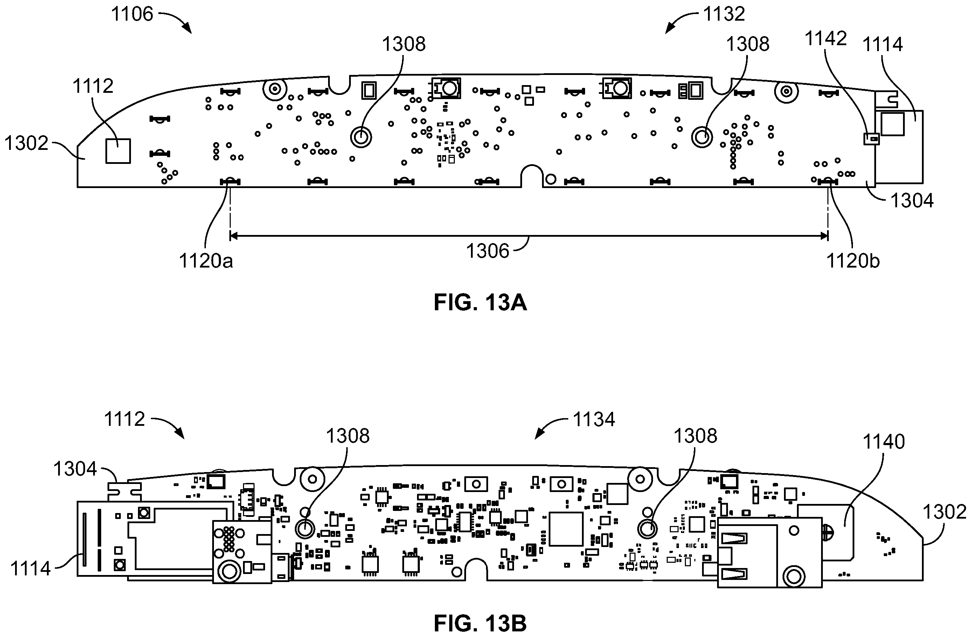

FIG. 13A is a front view of the example circuit board 1106 of FIGS. 13A and 13B. FIG. 13B is a rear view of the example circuit board 1106 of FIG. 13A. Referring to FIGS. 13A and 13B, to prevent or reduce interference (e.g., electromagnetic interference) between the first antenna 1112 and the second antenna 1114, the first antenna 1112 of the illustrated example is positioned on the first side 1132 (e.g., a front surface) of the circuit board 1106 and the second antenna 1114 is positioned on the second side 1134 (e.g., a rear surface) of the circuit board 1106 opposite the first side 1132. In addition, the first antenna 1112 of the illustrated example is positioned near (e.g., substantially adjacent) a first side edge 1302 of the circuit board 1106 and the second antenna 1114 is positioned near (e.g., substantially adjacent) a second side edge 1304 of the circuit board 1106. For example, the first antenna 1112 and the second antenna 1114 of the illustrated example are spaced by a distance that is at least equal to or greater than a distance 1306 between the first light 1120a and the second light 1120b. In addition, the circuit board 1106 includes example guide pin openings 1308 to receive guide pins of the second panel 1104.

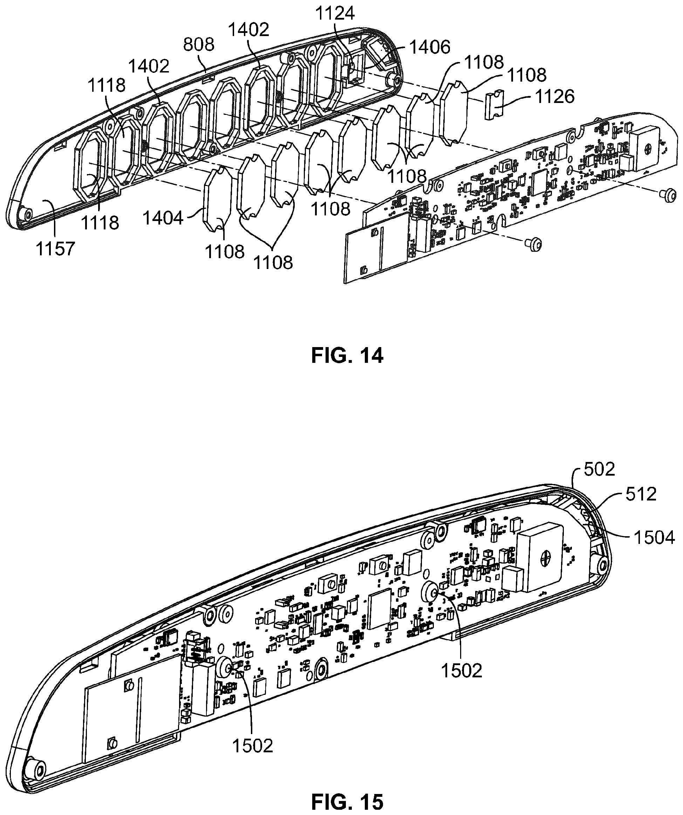

FIG. 14 is a partially assembled view of the example meter 500. To assemble the example meter 500, a respective one of the diffusors 1108 is positioned or aligned with a respective one of the openings 1118. To prevent the diffusors from dislodging or shifting relative to respective openings 1118 and/or the first panel 806 after the housing 502 is assembled, respective example perimeter walls 1402 are positioned adjacent respective ones of the openings 1118. Each perimeter wall 1402 of the illustrated example includes a profile or shape that is substantially similar to a profile or shape of a perimeter 1404 of the diffusors 1108. The perimeter wall 1402 adjacent each of the openings 1118 of the illustrated example retains a respective one of the diffusors 1108 aligned with the respective one of the openings 1118. Likewise, the opening 1118 of the illustrated example includes a perimeter wall 1406 to retain the diffusor 1126. With the diffusors 1108 and 1126 positioned in the respective openings 1118 and 1124, the circuit board 1106 of the illustrated example is attached to the first panel 806 (e.g., via fasteners). For example, the first side 1132 of the circuit board 1106 is oriented toward the inner surface 1157 of the first panel 806.

Alternatively, in some examples, the stencil 804 is not provided. In some such examples, the indicia (e.g., the numerals) are provided or printed on the diffusors 1108. For example, a respective one of the visual indicators 1116 may be printed on a respective one of the diffusors 1108. In some such examples, the diffusors 1108 are removably coupled to the respective openings 1118. In other words, the diffusors 1108 may be accessible via the display area 808 when the cover 802 is removed from the housing 502. In some examples, the diffusors 1108 are removably coupled to the respective openings 1118 via, for example, a snap-fit connection. For example, the perimeter wall 1402 may be formed on the front surface 814 of the display area 808 such that the diffusors 1108 are accessible via the display area 808 when the housing 502 is in an assembled state (e.g., when the first panel 806 and the second panel 1104 are coupled together). In some examples, the diffusors 1108 may be coupled together or interconnected as a unitary structure or frame. In some such examples, the frame may be removably coupled to the housing 502 and/or the display area 808 to couple the diffusors 1108 to the display area 808. In some examples, the meter 500 may employ one or more sensor to determine the orientation of the diffusors 1108 relative to the orientation of the housing 502. For example, the meter 500 may be configured to determine if the orientation of the diffusors (e.g., the indicia printed on the diffusors) relative to the orientation of the housing 502 is valid. Alternatively, in some examples, the indicia are provided on the cover 802. FIG. 15 illustrates the circuit board 1106 and the diffusors 1108 and 1126 of the illustrated example coupled to the first panel 806. For example, the circuit board 1106 of the illustrated example is coupled to the inner surface 1157 of the first panel 806 via fasteners 1502. To emit sound such as, for example, an alarm provided by a speaker of the circuit board 1106, the example housing 502 of the illustrated example includes an example speaker chamber 1504. The speaker chamber 4304 of the illustrated example is formed in the first panel 806 and is in communication with the openings 512.

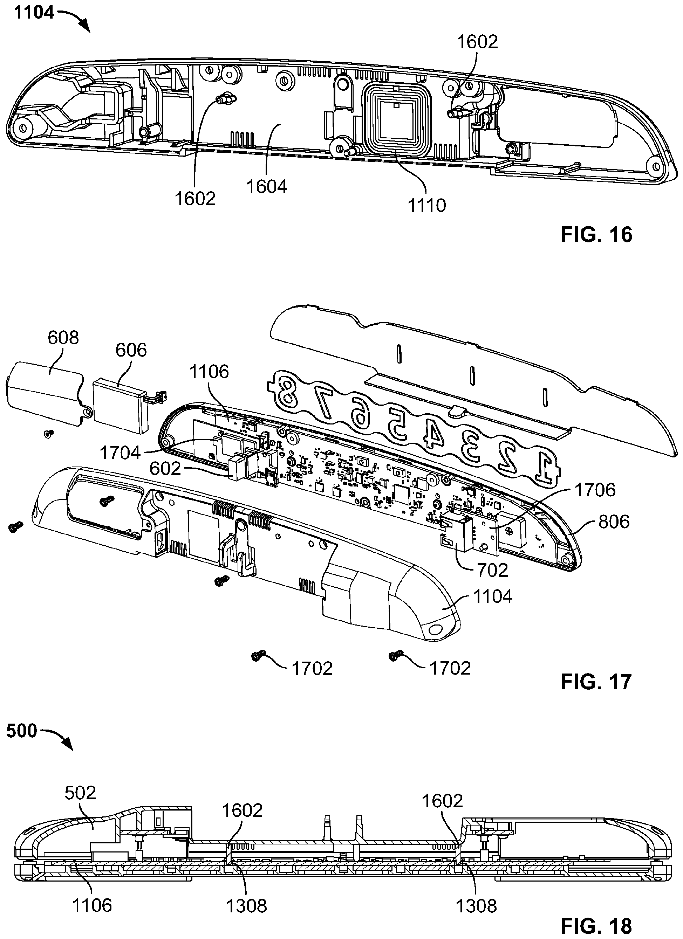

FIG. 16 illustrates a perspective view of the example second panel 1104 of the illustrated example. To facilitate alignment and/or assembly (e.g., attachment) of the second panel 1104 and the first panel 806, the second panel 1104 of the illustrated example includes a plurality of example guide pins 1602. The guide pins 1602 of the illustrated example project from an inner surface 1604 of the second panel 1104. In the illustrated example, the near field communication antenna 1110 is attached to the inner surface 1604 of the second panel 1104.

FIG. 17 illustrates another partial assembled, perspective view of the example meter 500. To assemble the housing 502 of the illustrated example, the second panel 1104 of the illustrated example is attached to the first panel 806 via a plurality of example fasteners 1702. The battery 606 of the illustrated example is removably positioned in the housing 502 and the door 608 is attached to the housing 502. In the illustrated example, the first connector 602 and the second connector 702 are coupled or attached to the circuit board 1106. However, in some examples, the first connector 602 and/or the second connector 702 may be coupled to the second panel 1104 prior to connection with the circuit board 1106. For example, example daughter boards 1704 and 1706 including the respective first and second connectors 602 and 702 may be coupled or attached to the inner surface 1604 of the second panel 1104. In some such examples, the first and second connectors 602 and 702 are commutatively coupled the circuit board 1106 when the second panel 1104 is coupled to the first panel 806. In some such examples, the guide pins 1602 align the daughter board connections of the example first and second connectors 602 and 702 with respective connectors of the circuit board 1106.

FIG. 18 is a cross-sectional view of the example meter 500. As shown in FIG. 18, the guide pins 1602 of the second panel 1104 of the illustrated example engage or pass through the guide pin openings 1308 of the circuit board 1106 to align the circuit board 1106 relative to the housing 502.

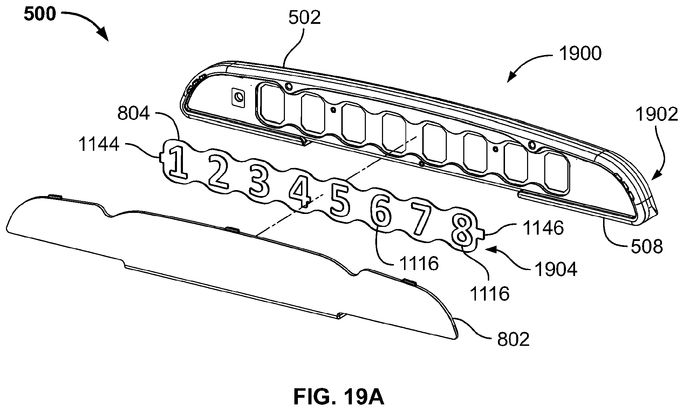

FIG. 19A is a perspective view of the example meter 500 oriented in a first example mounting orientation 1900 (e.g., an above-television mounting configuration). For example, the first mounting orientation corresponds to the first mounting orientation 134 of FIG. 1. In the illustrated example of FIG. 19A, the cover 802 and the stencil 804 of the illustrated example are shown removed from the housing 502 for illustrative purposes.

In the first mounting orientation 1900, the housing 502 is oriented in a first orientation 1902 and the stencil 804 is oriented in a first direction 1904 (e.g., an upright orientation). For example, when the housing 502 is in the first orientation 1902, the mounting surface 508 of the housing 502 is oriented in a downward direction in the orientation of FIG. 19A (e.g., a right-side up orientation). For example, the mounting surface 508 of the housing 502 of the illustrated example is in a right-side up orientation. Further, in the first direction 1904, the stencil 804 of the illustrated example is in an upright orientation. When one or more of the lights 1120 illuminate the respective one or more visual indicators 1116, the illuminated visual indicators 1116 of the illustrated example are presented or appear in an upright orientation. Thus, the stencil 804 of the illustrated example is properly oriented relative to the display area 808 and/or the orientation of the housing 502 because the visual indicators 1116 of the stencil 804 are presented in the display area 808 in an upright orientation.

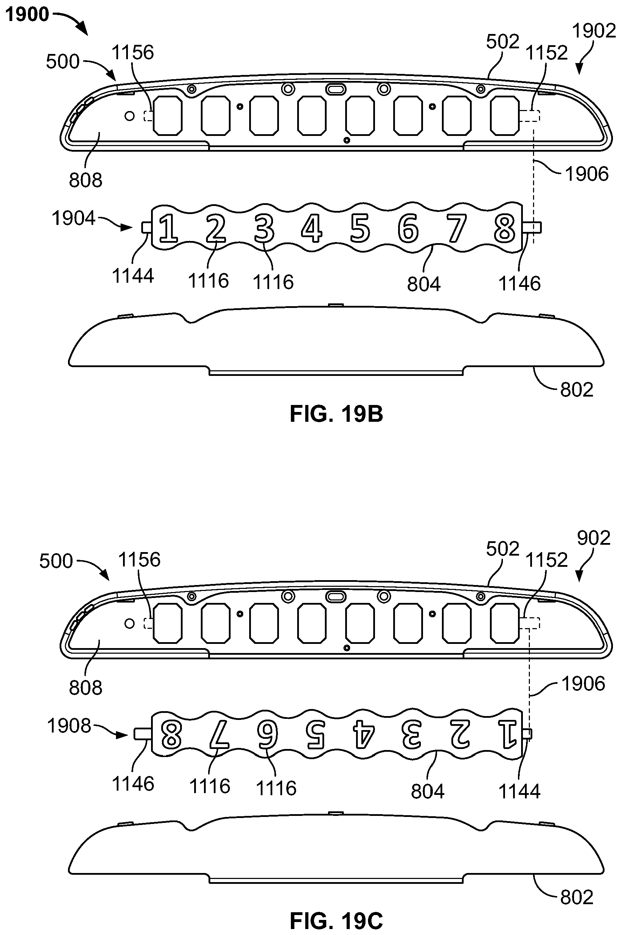

FIG. 19B is a front view of the example meter 500 of FIG. 19A in the first example mounting orientation 1900. Referring to FIG. 19A and 19B, when the housing 502 of the illustrated example is in the first orientation 1902 and the stencil 804 is positioned in the display area 808 in the first direction 1904, the sensor 1142 detects the second tab 1146 positioned in the sensing slot 1152. For example, the sensor 1142 senses the second tab 1146 in the sensing slot 1152 because the second tab 1146, due to the length of the second tab 1146, engages or activates a trigger 1906 (e.g., represented by a dashed line in FIG. 19B) of the sensor 1142 (e.g., a contact switch positioned in the sensing slot 1152). To this end, the meter 500 of the illustrated example determines or verifies that the stencil 804 is properly oriented relative to the housing 502 when the housing 502 is in the first orientation 1902 (e.g., as determined with the orientation sensor described above) and the sensor 1142 is in a triggered state or condition (e.g., the stencil 804 is in the first direction 1904). Thus, when the housing 502 is in the first orientation 1902 and the second tab 1146 is sensed by the sensor 1142 (e.g., the second tab 1146 is positioned in the sensing slot 1152, the meter 500 of the illustrated example determines that the stencil 804 is properly oriented relative to the display area 808 and/or the orientation of the housing 502. On the contrary, for example as shown in FIG. 19C below, if the housing 502 is in the first orientation 1902 and the second tab 1146 is not sensed by the sensor 1142 (i.e., the first tab 1144 is positioned in the non-sensing slot 1156), the meter 500 determines that the stencil 804 is improperly oriented relative to the display area 808 and/or the orientation of the housing 502.

FIG. 19C illustrates the example meter 500 of FIGS. 19A and 19B with the example housing 502 in the first orientation 1902 and the stencil 804 in a second direction 1908 (e.g., an upside-down orientation compared to the first direction 1904). When the stencil 804 is in the second direction 1908, the second tab 1146 is not positioned in the sensing slot 1152. On the contrary, the first tab 1144 of the stencil 804 is positioned in sensing slot 1152 and the second tab 1146 is positioned in the non-sensing slot 1156. The sensor 1142 does not sense the first tab 1144 in the sensing slot 1152 because, due to the length of the first tab 1144, the first tab 1144 does not activate the trigger 1906 of the sensor 1142 (e.g., a contact switch positioned in the sensing slot 1152). Thus, neither the first tab 1144 nor the second tab 1146 is sensed by the sensor 1142 when the housing 502 is in the first orientation 1902 and the stencil 804 is in the second direction 1908. In the second direction 1908, the visual indicators 1116 of the stencil 804 are in an inverted or upside-down orientation compared to the orientation of the visual indicators 1116 when the stencil 804 is in the first direction 1904. To this end, the stencil 804 is improperly oriented relative to the display area 808 and/or the orientation of the housing 502 when the housing 502 is in the first orientation 1902. Thus, the meter 500 of the illustrated example determines that the stencil 804 is not properly oriented when the meter 500 determines that the housing 502 is in the first orientation 1902 (e.g., with the orientation sensor described above) and the sensor 1142 is a non-triggered state or condition (e.g., the stencil 804 is in the second direction 1908). In some examples, the meter 500 of the illustrated example initiates an alarm (e.g., an audible alarm or a visual alarm) when the meter 500 determines the housing 502 is in the first orientation 1902 and the stencil 804 is in the second direction 1908.

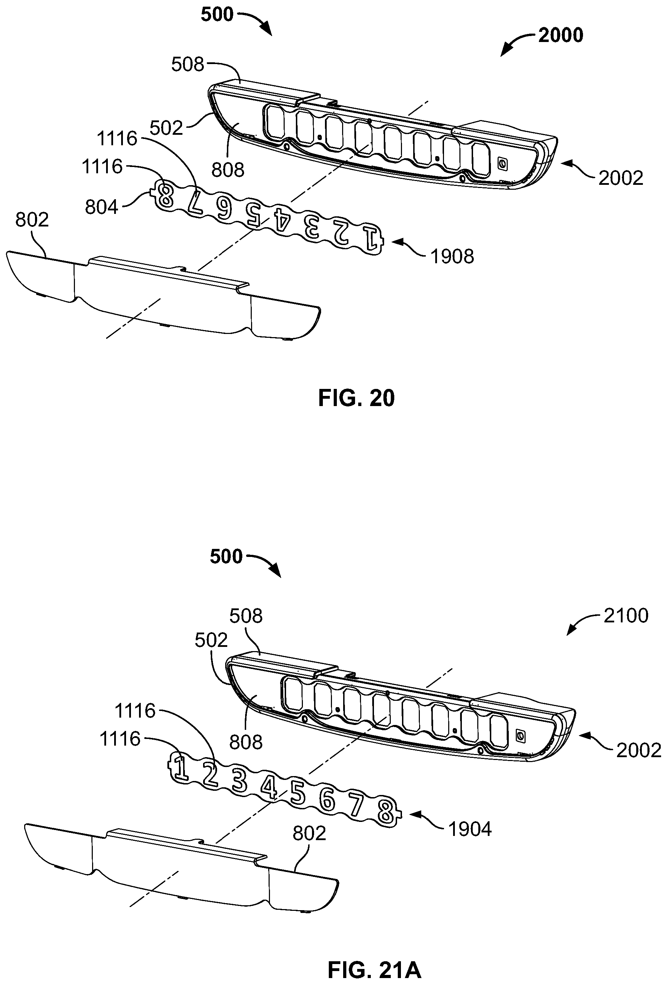

FIG. 20 is another perspective view of the example meter 500. Referring to FIG. 20, the meter 500 of the illustrated example is in an intermediate configuration 2000. In the illustrated example, the housing 502 is in a second orientation 2002 and the stencil 804 in the second direction 1908. For example, in the second orientation 2002, the mounting surface 508 of the housing 502 of the illustrated example is oriented in an upward direction in the orientation of FIG. 19A. In other words, the housing 502 shown in the illustrated example of FIG. 20 is inverted or upside-down orientation relative to the first orientation 1902 of the housing 502 shown in FIG. 19A. When the housing 502 of the illustrated example is moved or rotated from the first orientation shown 1902 in FIG. 19A to the second orientation 2002 shown in FIG. 20 while the stencil 804 is positioned in the display area 808, the stencil 804 of the illustrated example is moved to the second direction 1908 (e.g., an upside-down orientation). For example, the second direction 1908 of the stencil 804 of the illustrated example is inverted (e.g. upside down) relative to the orientation of the stencil 804 shown in FIG. 19A. In other words, the visual indicators 1116 of the stencil 804 of the illustrated example are inverted or upside down compared to the visual indicators 1116 when the stencil 804 is in first direction 1904 of FIG. 19A. To reposition (e.g., invert) the stencil 804 to the first direction 1904 when the housing 502 is in the second orientation 2002, the cover 802 of the illustrated example is removed from the housing 502 (e.g., after the housing 502 is rotated or inverted to the second orientation 2002) to access the stencil 804 in the display area 808. With the cover 802 removed, the stencil 804 of the illustrated example is removed from the display area 808 and moved or rotated (e.g., 180 degrees) to the first direction 1904 to present the visual indicators 1116 in the upright orientation.

FIG. 21A illustrates the meter 500 of the illustrated example of FIGS. 5-7 oriented in a second example mounting orientation 2100 (e.g., corresponding to the second mounting orientation 200 of FIG. 2 or a below-television mounting configuration). FIG. 21A illustrates the example meter 500 with the cover 802 and the stencil 804 removed from the housing 502 for illustrative purposes. In the second mounting orientation 2100, the housing 502 of the illustrated example is oriented in the second orientation 2002 and the stencil 804 is oriented in the first direction 1904 (e.g., the upright orientation).

Although the housing 502 in the second orientation 2002 of the illustrated example is in an inverted orientation compared to the first orientation 1902 of the housing 502, the stencil 804 positioned in the first direction 1904 is properly oriented relative to the display area 808 and/or the orientation of the housing 502. In other words, the visual indicators 1116 of the stencil 804 are presented in the display area 808 in an upright orientation even though the housing 502 is in the second orientation 2002 (e.g., an inverted orientation).

The stencil 804 of the illustrated example is coupled to the display area 808 in the first direction 1904 while the housing 502 is in the second orientation 2002. The cover 802 is then attached or coupled to the housing 502 to retain the stencil 804 in the display area 808. In this manner, when the lights illuminate the respective visual indicators 1116, the illuminated visual indicators 1116 appear in an upright orientation even though the housing 502 (e.g., and the cover 802) is in the second orientation 2002 (e.g., an upside-down orientation). In some examples, the cover 802 and the stencil 804 may be removed from the housing 502 prior to moving the housing 502 to the second orientation 2002. In some such examples, the stencil 804 and the cover 802 may be properly oriented and coupled to the housing 502 after the housing 502 is moved to the second orientation 2002.

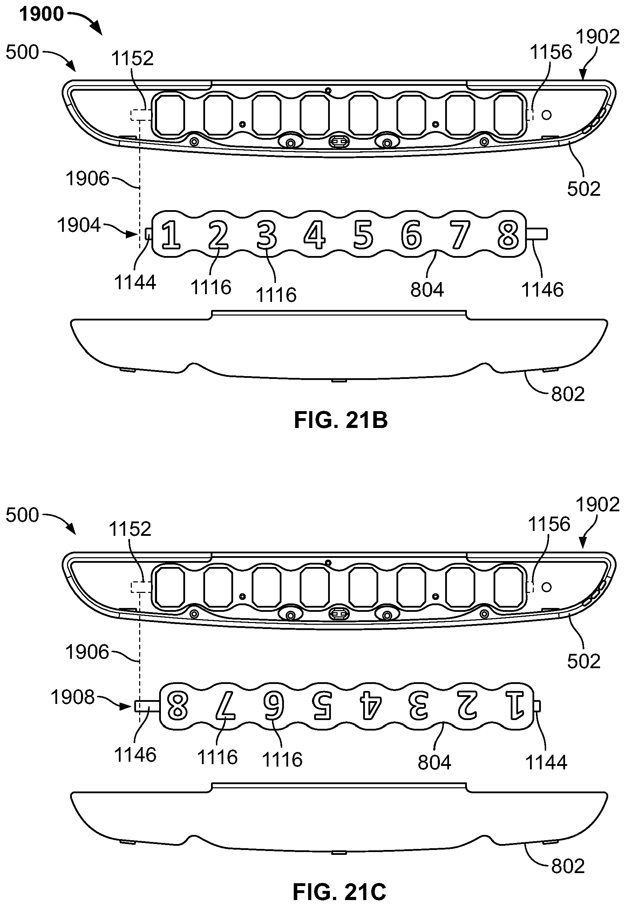

FIG. 21B is a front view of the example meter 500 of the illustrated in the second mounting orientation 2100. Referring to FIGS. 21A and 21B, when the housing 502 is in the second orientation 2002, the meter 500 of the illustrated example determines if the stencil 804 is properly oriented relative to the housing 502. For example, the sensor 1142 and the sensing slot 1152 are positioned on a left side in the orientation of FIGS. 21B (i.e., the housing 502 is inverted, flipped upside down, or rotated 180 degrees from the first orientation 1902). Thus, when the housing 502 of the illustrated example is in the second orientation 2002 and the stencil 804 is positioned in the display area 808 in the first direction 1904, the first tab 1144 is positioned in the sensing slot 1152 and the second tab 1146 is positioned in the non-sensing slot 1156. Thus, the sensor 1142 neither detects the second tab 1146 nor the first tab 1144 because the second tab 1146 is in the non-sensing slot 1156 and the first tab 1144 is in the sensing slot 1152 does not engage or activate the trigger 1906 of the sensor 1142 (e.g., a contact switch positioned in the sensing slot 1152). When the housing 502 of the illustrated example is in the second orientation 2002 and the second tab 1146 is not sensed by the sensor 1142, the meter 500 of the illustrated example determines that the stencil 804 is properly oriented relative to the display area 808 and/or the orientation of the housing 502. Thus, the meter 500 of the illustrated example determines that the stencil 804 is properly oriented relative to the display area 808 and/or the orientation of the housing 502 when the housing 502 is in the second orientation 2002 (e.g., as determined with the orientation sensor described above) and the sensor 1142 is not triggered (e.g., the stencil 804 is in the first direction 1904).

FIG. 21C is a front view of the example meter 500 in the second mounting orientation 2100 having the housing 502 in the second orientation 2002 and the stencil 804 in the second direction 1908. In the illustrated example, the second tab 1146 is positioned in the sensing slot 1152 and the first tab 1144 of the stencil 804 is positioned in the non-sensing slot 1156. Thus, the second tab 1146 in the sensing slot 1152 is sensed by the sensor 1142 and/or triggers or activates the sensor 1142. When the housing 502 is in the second orientation 2002 and the stencil 804 is in the second direction 1908 (e.g., the sensor 1142 is in a triggered state or condition), the meter 500 of the illustrated example determines that the stencil 804 is improperly oriented relative to the display area 808 and/or the orientation of the housing 502. Additionally, the meter 500 of the illustrated example initiates an alarm (e.g., an audible alarm or a visual alarm) when the meter 500 determines the housing 502 is in the second orientation 2002 (e.g., as determined with the orientation sensor described above) and the sensor 1142 is triggered (e.g., the stencil 804 is in the second direction 1908).

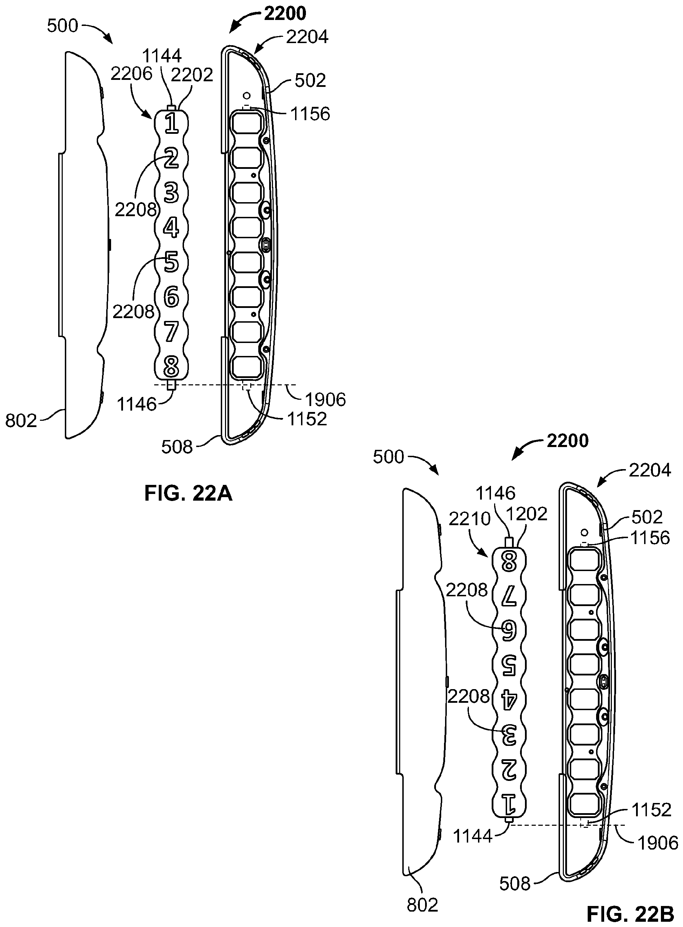

FIG. 22A illustrates the example meter 500 configured in a third example mounting orientation 2200 (e.g., corresponding to the third mounting orientation 300 of FIG. 3). To configure the meter 500 of the illustrated example for mounting in the third mounting orientation 2200, the example meter 500 employs an example stencil 2202. In the illustrated example of FIG. 22A, the cover 802 and the stencil 2202 are shown removed from the housing 502 for illustrative purposes. In the third mounting orientation 2200, the housing 502 of the illustrated example is shown in a third orientation 2204 and the stencil 2202 is shown in a third orientation or a third direction 2206. The mounting surface 508 of the housing 502 of the illustrated example is oriented in a leftward orientation in the third mounting orientation 2200 of FIG. 22A.

The stencil 2202 of the illustrated example is different from the stencil 804. In some examples, the stencil 2202 of the illustrated example is interchangeable with the stencil 804 to configure the meter 500 for mounting in the third mounting orientation 2200. Thus, the display 504 of the meter 500 and/or the display area 808 of the example housing 502 of the illustrated example provides a modular display to enable interchangeability between different stencils such as, for example, the stencil 804 and the stencil 2202.

Although different, the stencil 2202 of the illustrated example exhibits similarities to the stencil 804. The stencil 2202 of the illustrated example has the same or similar dimensional profile as the stencil 804. For example, a dimensional length and/or a perimeter shape of the stencil 2202 of the illustrated example is substantially similar to a dimensional length and/or a perimeter shape of the stencil 804. For example, the stencil 2202 of the illustrated example includes tabs 1144 and 1146. In the illustrated example, the stencil 2202 includes visual indicators 2208 (e.g., indicia) in the portrait orientation. In other words, in the third direction 2206, for example, the visual indicators 2208 of the stencil 2202 of the illustrated example are oriented in an upright orientation. In particular, the visual indicators 1208 are numerals presented in ascending order and in a portrait orientation in the orientation of FIG. 22A. In particular, the visual indicators 2208 enable mounting the meter 500 to side surfaces (e.g., vertical surfaces) of the media device. Thus, unlike the stencil 804, which presents the visual indicators 1116 in a landscape orientation, the example stencil 2202 of the illustrated example presents the visual indicators 2208 in a portrait orientation. In some examples, the visual indicators 2208 may be, for example, letters, alpha-numeric characters, symbols, and/or any other indicia.

In the third mounting orientation 2200, the first tab 1144 of the stencil 2202 of the illustrated example is positioned in the non-sensing slot 1156 and the second tab 1146 is positioned in the sensing slot 1152, which is detectable by the sensor 1142. Thus, the meter 500 of the illustrated example determines that the stencil 2202 is properly oriented when the housing 502 is detected in the third orientation 2204 and the sensor 1142 is in a triggered state or condition (e.g., the stencil 2202 is in the third direction 2206). In such examples, the meter 500 of the illustrated example determines that the stencil 2202 is properly oriented relative to the display area 808 and/or the orientation of the housing 502 when the housing 502 is in the third orientation 2004 and the stencil 2202 is in the third direction 2206.

FIG. 22B is a front view of the example meter of FIG. 22A showing the stencil 2202 in a fourth direction 2210 (e.g., in an opposite or inverted direction relative to the third direction 2206). In the fourth direction 2210, the visual indicators 2208 appear in an inverted or upside-down orientation when the housing 502 is in the third orientation 2204. When the stencil 2202 is in the fourth direction 2210 and the housing 502 is in the third orientation 2204, the first tab 1144 is positioned in the sensing slot 1152 and the second tab 1146 is in the non-sensing slot 1156. Thus, the meter 500 of the illustrated example determines stencil 2202 is improperly oriented when the sensor 1142 is in a non-triggered state or condition (e.g., the stencil 2202 is in the fourth direction 2210) and the housing 502 is in the third orientation 2204. In some example, the meter 500 emits an alarm to provide notification that the stencil 2202 is improperly oriented relative to the housing 502.

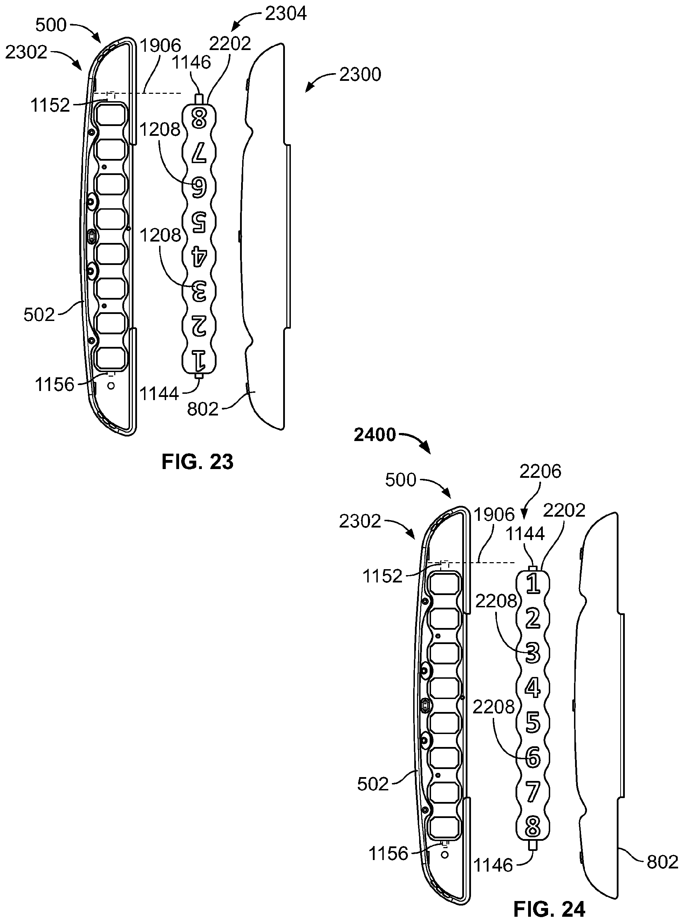

FIG. 23 illustrates the example meter 500 of FIG. 22A in an intermediate configuration 2300. In particular, the housing 502 of the illustrated example is in a fourth orientation 2302. For example, in the fourth orientation 2302, the mounting surface 508 of the housing 502 is oriented in a rightward direction in the orientation of FIG. 23. In other words, the housing 502 shown in FIG. 23 is flipped relative to the third orientation 2204 of the housing 502 shown in FIG. 22A. When the housing 502 of the illustrated example is moved or rotated from the third orientation 2204 shown in FIG. 22A to the fourth orientation 2302 shown in FIG. 23 while the stencil 2202 is positioned in the display area 808, the stencil 2202 is moved to a fourth orientation or a fourth direction 2304 (e.g., an upside-down orientation).

For example, in the intermediate configuration 2300 of the illustrated example, the stencil 2202 in the fourth direction 2304 is an opposite or inverted direction (e.g. upside down) relative to the orientation of the stencil 2202 in the third direction 2206 shown in FIG. 22A. In the fourth direction 2304, the visual indicators 2208 appear in an inverted or upside-down orientation when the housing 502 is in the fourth orientation 2302. In other words, the visual indicators 2208 of the stencil 2202 are inverted or upside down compared to the visual indicators 2208 when the stencil 2202 is in the third direction 2206 of FIG. 22A. To reposition (e.g., invert) the stencil 2202 to the upright orientation or the third direction 2206, the cover 802 of the illustrated example is removed from the housing 502 to access the stencil 2202 in the display area 808. With the cover 802 removed, the stencil 2202 can be removed from the display area 808 and moved or rotated (e.g., 180 degrees) so that the visual indicators 2208 are in the upright orientation or the third direction 2206.

When the stencil 2202 is in the fourth direction 2304 and the housing 502 is in the fourth orientation 2302, the second tab 1146 is positioned in the sensing slot 1152 and the first tab 1144 is positioned in the non-sensing slot 1156. In such examples, the meter 500 determines that the stencil 2202 is improperly oriented when the housing 502 is in the fourth orientation 2302 and the sensor 1142 is in a triggered state or condition (i.e., the stencil 2202 is in the third direction 2206). In some example, the meter 500 emits an alarm to provide notification that the stencil 2202 is improperly oriented relative to the housing 502.

FIG. 24 illustrates the meter 500 of the illustrated example oriented in an example fourth mounting orientation 2400 (e.g., corresponding to the fourth mounting orientation 301 of FIG. 3). In the illustrated example, the cover 802 and the stencil 2202 are removed from the housing 502 for illustrative purposes. For example, in the fourth mounting orientation 2400, the mounting surface 508 of the housing 502 is oriented in a rightward direction in the orientation of FIG. 24. In other words, the housing 502 shown in FIG. 24 is flipped relative to the third orientation 2204 of the housing 502 shown in FIG. 22A.

In the illustrated example of FIG. 24, the housing 502 of the illustrated example is shown in the fourth orientation 2302 and the stencil 2202 is repositioned in the third direction 2206 (e.g., the upright orientation). For example, the visual indicators 2208 of the stencil 2202 of the illustrated example are shown in an upright orientation (e.g., similar to the orientation of FIG. 22A). The stencil 2202 of the illustrated example is coupled to the display area 808 in the third direction 2206 while the housing 502 is in the fourth orientation 2302. In some examples, the cover 802 and the stencil 2202 may be removed from the housing 502 prior to moving the housing 502 to the fourth orientation 2302 shown in FIG. 24. In some such examples, the stencil 2202 and the cover 802 may be properly oriented and coupled to the housing 502 after the housing 502 is moved to the fourth orientation 2302. The cover 802 is then attached or coupled to the housing 502 to retain the stencil 2202 in the display area 808.

When the lights illuminate the respective visual indicators 2208, the illuminated visual indicators 2208 appear in an upright orientation even though the housing 502 (e.g., and the cover 802) is in the fourth orientation 2302. In the illustrated example of FIG. 24, the first tab 1144 of the stencil 2202 is positioned in the sensing slot 1152 and the second tab 1146 is positioned in the non-sensing slot 1156. As a result, the sensor 1142 is in a non-triggered state or condition when the housing 502 is in the fourth orientation 2302 and the stencil 2202 is in the third direction 2206. Thus, the meter 500 of the illustrated example determines that the stencil 2202 is in the proper orientation relative to the housing 502 when the housing 502 is in the fourth orientation 2302 and the sensor 1142 is in a non-triggered or condition (e.g., the stencil 2202 is in the third direction 2206).

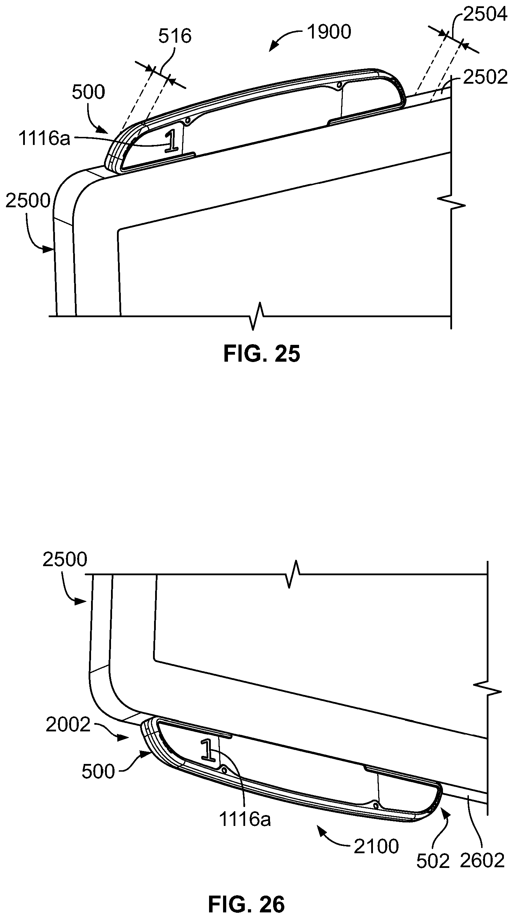

FIG. 25 is a partial, perspective view the example meter 500 mounted to an example media device 2500 (e.g., a television) in the first mounting orientation 1900. In the first mounting orientation 1900, the meter 500 of the illustrated example is configured for an above-media device mounting configuration. More specifically, the meter 500 of the illustrated example is coupled or attached to an upper surface or upper frame 2502 of the media device 2500 (e.g., via adhesive). More specifically, the mounting areas 904 of the example housing 502 are (e.g., directly) coupled to or engaged with the upper frame 2502 of the media device 2500. However, in some examples, the meter 500 may be coupled to the upper frame 2502 via a clamp, a fastener, Velcro^{®}, tape, a clip, a mechanical fastener, a chemical fastener and/or any other fastener(s). In addition, the meter 500 of the illustrated example has a relatively low profile or dimensional envelope compared to the media device 2500. For example, the first dimension 516 is substantially similar to a dimension 2504 (e.g., a dimensional thickness) of the upper frame 2502. For example, the first dimension 516 of the meter 500 of the illustrated example is slightly less than the dimension 2504 of the upper frame 2502 of the media device 2500. In some examples, the dimension 2504 of the media device 2500 may be between approximately 7 millimeters (0.28 inches) and 75 millimeters (e.g., 3 inches).

As shown in FIG. 25, the first visual indicator 1116a is illuminated to identify that a panelist (e.g., the panelist 106 of FIG. 1) assigned to the first visual indicator 1116a is present in a media presentation environment. The illuminated first visual indicator 1116a of the stencil 804 is presented in an upright or right side up orientation. To this end, the meter 500 (e.g., via a processor, a logic circuit, etc.) causes the first light 1120a to illuminate the first visual indicator 1116a when the meter 500 is determined to be in the first mounting orientation 1900 (e.g., the housing 502 is determined to be in the first orientation 1902 via the orientation sensor described above and/or the stencil 804 is determined to be in the first direction 1904 via the sensor 1142). In addition, the cover 802 is semi-translucent to allow visual presentation of only the illuminated visual indicators 1116 (e.g., the first visual indicator 1116a) at the display 504.

FIG. 26 is a perspective view the example meter 500 mounted to the example media device 2500 in the second mounting orientation 2100. In the second mounting orientation 2100, the meter 500 of the illustrated example is configured for a below-media device mounting configuration. For example, the meter 500 of the illustrated example is coupled to a lower surface or frame 2602 of the media device 2500. More specifically, the mounting areas 904 of the housing 502 are (e.g., directly) coupled to or engaged with the lower frame 2602 of the media device 2500. As shown in FIG. 26, the first visual indicator 1116a is illuminated to identify that a panelist (e.g., the panelist 106 of FIG. 1) assigned to the first visual indicator 1116a is present in the media presentation environment. Thus, although the housing 502 is in the second orientation 2002 (e.g., an upside-down orientation), the first visual indicator 1116a is displayed in an upright or right side up orientation because the stencil 804 is positioned in the housing 502 in the first direction 1904. Additionally, the meter 500 (e.g., via a processor, a logic circuit, etc.) causes the second light 1120b to illuminate the first visual indicator 1116a when the meter 500 is determined to be in the second mounting orientation 2100 (e.g., the housing 502 is determined to be in the second orientation 2002 via the orientation sensor described above and/or the stencil 804 is determined to be in the first direction 1904 via the sensor 1142).

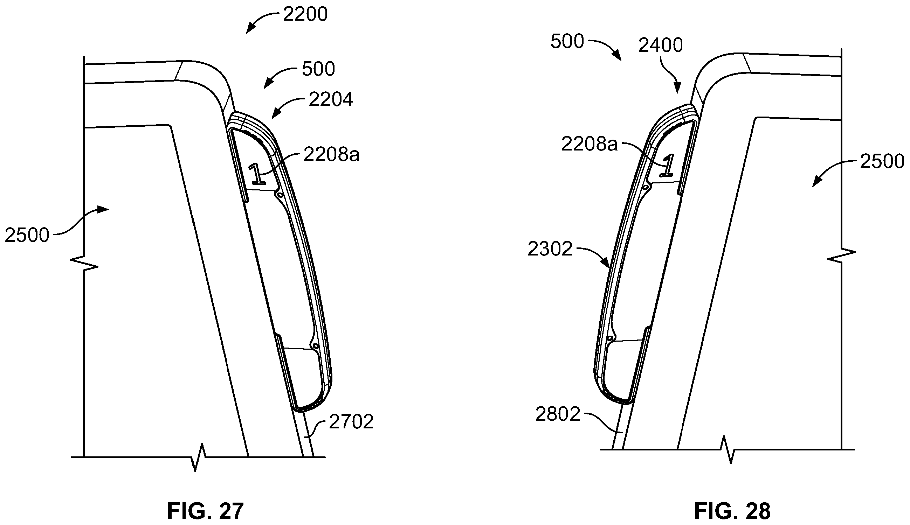

FIG. 27 is a partial, perspective view the example meter 500 mounted to the example media device 2500 (e.g., a television) in the third mounting orientation 2200. In the third mounting orientation 2200, the meter 500 of the illustrated example is configured for a right-side media device mounting configuration. For example, in the third mounting orientation 2200, the meter 500 of the illustrated example is coupled to a right surface or right-side frame 2702 of the media device 2500. As shown in FIG. 27, a first visual indicator 2208a is illuminated to identify that a panelist (e.g., the panelist 106 of FIG. 1) assigned to the first visual indicator 2208a is present in a media presentation environment. As shown in FIG. 27, although the housing 502 is in the third orientation 2204, the first visual indicator 2208a of the illustrated example is displayed in an upright or right side up orientation. To this end, the meter 500 (e.g., via a processor, a logic circuit, etc.) causes the first light 1120a to illuminate the first visual indicator 2208a when the meter 500 is determined to be in the third mounting orientation 2200 (e.g., the housing 502 is determined to be in the third orientation 2204 via the orientation sensor described above and/or the stencil 2202 is determined to be in the third direction 2206 via the sensor 1142). In addition, the cover 802 is semi-translucent to allow visual presentation of only the illuminated visual indicators 2208 (e.g., the first visual indicator 2208a) at the display 504.

FIG. 28 is a perspective view the example meter 500 mounted to the example media device 2500 in the fourth mounting orientation 2400. In the fourth mounting orientation 2400, the meter 500 is configured for a left-side media device mounting configuration. For example, the meter 500 of the illustrated example is coupled to a left-side surface or frame 2802 of the media device 2500. As shown in FIG. 28, the first visual indicator 2208a is illuminated to identify that a panelist (e.g., the panelist 106 of FIG. 1) assigned to the first visual indicator 2208a is present in the media presentation environment. Thus, although the housing 502 is in the fourth orientation 2302, the first visual indicator 2208a of the illustrated example is displayed in an upright or right side up orientation. To this end, the meter 500 (e.g., via a processor, a logic circuit, etc.) causes the second light 1120b to illuminate the first visual indicator 2208a when the meter 500 is determined to be in the fourth mounting orientation 2400 (e.g., the housing 502 is determined to be in the fourth orientation 2302 via the orientation sensor described above and/or the stencil 2202 is determined to be in the third direction 2206 via the stencil sensor 1560).

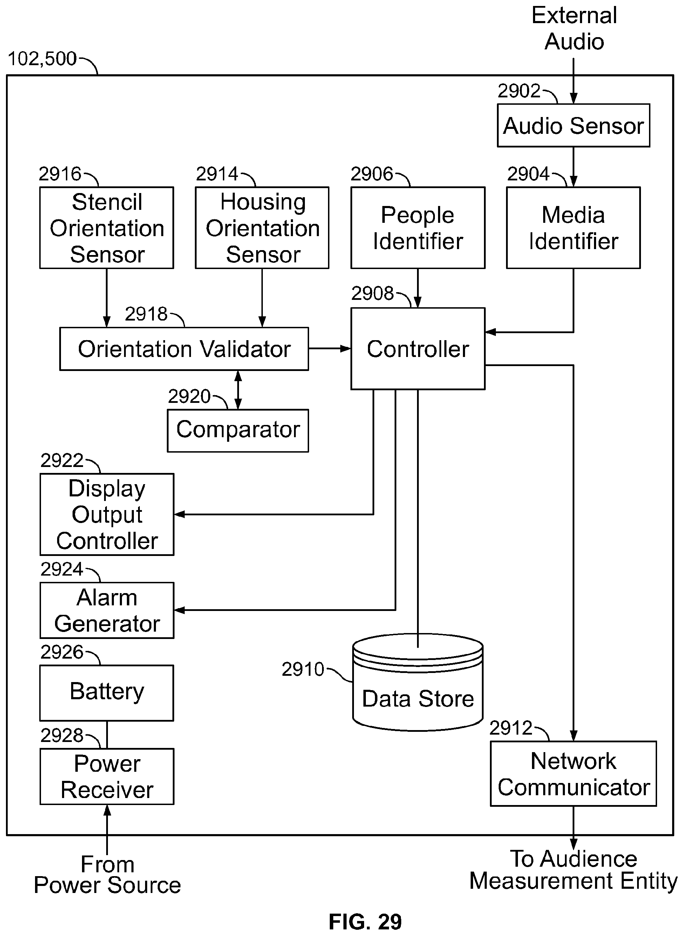

FIG. 29 is a block diagram of the example meter 102, 500. The example meter 102, 500 of the illustrated example includes an example audio sensor 2902, an example media identifier 2904, an example people identifier 2906, an example controller 2908, an example data store 2910, an example network communicator 2912, an example housing orientation sensor 2914, an example stencil orientation sensor 2916, and example orientation validator 2918, a comparator 2920, an example display output controller 2922, an example alarm generator 2924, an example battery 2926, and an example power receiver 2928. In some examples, the example audio sensor 2902, the example media identifier 2904, the example people identifier 2906, the example controller 2908, the example data store 2910, the example network communicator 2912, the example housing orientation sensor 2914, the example stencil orientation sensor 2916, the example orientation validator 2918, the comparator 2920, the example display output controller 2922, the example alarm generator 2924, and the example power receiver 2928 may implement the example circuit board 1106 of FIGS. 11A and 11B.

The example audio sensor 2902 of the illustrated example of FIG. 29 is an acoustic sensor, such as a microphone. The audio sensor 2902 receives ambient sound (e.g., free field audio) including audible media presented in the vicinity of the meter 102, 500. Alternatively, the audio sensor 2902 may be implemented by a line input connection. The line input connection may allow an external microphone and/or other acoustic sensor to be used with the meter 102, 500 and/or, in some examples, may enable the audio sensor 2902 to be directly connected to an output of a media device (e.g., an auxiliary output of a television, an auxiliary output of an audio/video receiver of a home entertainment system, etc.). Advantageously, the meter 102, 500 is positioned in a location such that the audio sensor 2902 receives ambient audio produced by the media device 110, and/or other devices of the home entertainment system with sufficient quality to identify media presented by the media device 110, and/or other devices of the media presentation environment 104 (e.g., the audio/video receiver). For example, in examples disclosed herein, the meter 102, 500 may be mounted to the media device 110, in a plurality of different mounting orientations or configurations such as, for example, the first mounting orientation 134, 1900, the second mounting orientation 200, 2100, the third mounting orientation 300, 2200 or the fourth mounting orientation 301, 2400. For example, the meter 102, 500 of the illustrated example may be placed on top of the television, secured to the bottom of the television, etc.

The example media identifier 2904 of the illustrated example of FIG. 29 analyzes audio received via the audio sensor 2902 and identifies the media being presented. The example media identifier 2904 of the illustrated example outputs an identifier of the media (e.g., media-identifying information) to the controller 2908 (e.g., an audience measurement data controller). In the illustrated example of FIG. 29, the example media identifier 2904 outputs a signal to noise ratio of the media identifier. In examples disclosed herein, the media identifier 2904 utilizes audio watermarking techniques to identify the media. Audio watermarking is a technique used to identify media, such as television broadcasts, radio broadcasts, advertisements (television and/or radio), downloaded media, streaming media, prepackaged media, etc. Audio watermarking techniques identify media by embedding one or more audio codes (e.g., one or more watermarks), such as media identifying information and/or one or more identifier(s) that may be mapped to media identifying information, into an audio and/or video component of the media. In some examples, the audio and/or video component of the media is selected to have a signal characteristic sufficient to hide the watermark. As used herein, the terms "code" and/or "watermark" are used interchangeably and are defined to mean any identification information (e.g., an identifier) that may be inserted or embedded in the audio or video of media (e.g., a program or advertisement) for the purpose of identifying the media or for another purpose such as tuning (e.g., a packet identifying header). As used herein, "media" refers to audio and/or visual (still or moving) content and/or advertisements. In some examples, to identify watermarked media, the watermark(s) are extracted and used to access a table of reference watermarks that are mapped to media identifying information.

In some examples, the media identifier 2904 may utilize signature-based media identification techniques. Unlike media monitoring techniques based on codes and/or watermarks included with and/or embedded in the monitored media, fingerprint or signature-based media monitoring techniques generally use one or more inherent characteristics of the monitored media during a monitoring time interval to generate a substantially unique proxy for the media. Such a proxy is referred to as a signature or fingerprint, and can take any form (e.g., a series of digital values, a waveform, etc.) representative of any aspect(s) of the media signal(s) (e.g., the audio and/or video signals forming the media presentation being monitored). A signature may be a series of signatures collected in series over a time interval. A good signature is repeatable when processing the same media presentation, but is unique relative to other (e.g., different) presentations of other (e.g., different) media. Accordingly, the term "fingerprint" and "signature" are used interchangeably herein and are defined herein to mean a proxy for identifying media that is generated from one or more inherent characteristics of the media.

Signature-based media monitoring generally involves determining (e.g., generating and/or collecting) signature(s) representative of a media signal (e.g., an audio signal and/or a video signal) output by a monitored media device and comparing the monitored signature(s) to one or more references signatures corresponding to known (e.g., reference) media sources. Various comparison criteria, such as a cross-correlation value, a Hamming distance, etc., can be evaluated to determine whether a monitored signature matches a particular reference signature. When a match between the monitored signature and one of the reference signatures is found, the monitored media can be identified as corresponding to the particular reference media represented by the reference signature that with matched the monitored signature. Because attributes, such as an identifier of the media, a presentation time, a broadcast channel, etc., are collected for the reference signature, these attributes may then be associated with the monitored media whose monitored signature matched the reference signature. Example systems for identifying media based on codes and/or signatures are long known and were first disclosed in Thomas, US Patent 5,481,294.

The example controller 2908 of the illustrated example of FIG. 29 receives media identifying information (e.g., a code, a signature, etc.) from the media identifier 2904 and audience identification data from the people identifier 2906, and stores the received information in the data store 2910. The example controller 2908 periodically and/or a-periodically transmits, via the network communicator 2912, the audience measurement information stored in the data store 2910 to a central facility such as, for example, the central facility 114 of FIG. 1, for aggregation and/or preparation of media monitoring reports.

The example data store 2910 of the illustrated example of FIG. 29 may be implemented by any device for storing data such as, for example, flash memory, magnetic media, optical media, etc. Furthermore, the data stored in the example data store 2910 may be in any data format, such as, for example, binary data, comma delimited data, tab delimited data, structured query language (SQL) structures, etc. In the illustrated example, the example data store 2910 stores media identifying information collected by the media identifier 2904 and audience identification data collected by the people identifier 2906. In some examples, the example data store 2910 additionally stores panelist demographic information such that received user identifiers of the audience measurement data can be translated into demographic information prior to transmission to the central facility 114.

The example people identifier 2906 of the illustrated example of FIG. 29 determines audience identification data representative of the identities of the audience member(s) (e.g., panelists) present in the media presentation environment 104. In some examples, the people identifier 2906 collects audience identification data by periodically or a-periodically prompting audience members in the media presentation environment 104 to identify themselves as present in the audience. Panelists may identify themselves by, for example, pressing a button on a remote, speaking their name, etc. In some examples, the people identifier 2906 prompts the audience member(s) to self-identify in response to one or more predetermined events (e.g., when the media device 110 is turned on, a channel is changed, an infrared control signal is detected, etc.). The people identifier 2906 provides the audience identification data to the controller 2908 such that the audience measurement data can be correlated with the media identification data to facilitate an identification of which media was presented to which audience member.

The example network communicator 2912 of the illustrated example of FIG. 29 transmits audience measurement information provided by the controller 2908 (e.g., data stored in the data store 2910) to the central facility 114 of the audience measurement entity. In the illustrated example, the network communicator 2912 is implemented by an Ethernet port that communicates via an Ethernet network (e.g., a local area network (LAN)). In some examples, the network communicator 2912 facilitates wireless communication via a WiFi network hosted by the example gateway 116 of FIG. 1.

The housing orientation sensor 2914 of the illustrated example of FIG. 29 senses or detects an orientation of the meter 102, 500 (e.g., a mounting configuration or orientation of the housing 502). In some examples, the housing orientation sensor 2914 of the illustrated example of FIG. 29 provides a signal representative of the housing 502 being in an orientation such as, for example, the first orientation 1902, the second orientation 2002, the third orientation 2204, or the fourth orientation 2302. In some examples, the housing orientation sensor 2914 of the illustrated example may provide a signal representative of the housing 502 being in an orientation other than the first orientation 1902, the second orientation 2002, the third orientation 2204, or the fourth orientation 2302 (e.g., an improper orientation, an orientation indicative of the housing 502 having fallen off the media device 110, 2500, etc.). The housing orientation sensor 2914 of the illustrated example of FIG. 29 is an accelerometer. However, in some examples, the housing orientation sensor 2914 may be a gyroscope, a combination accelerometer and gyroscope, an inertial measurement apparatus, and/or any device, apparatus or system to determine or sense a position and/or orientation of the meter 102, 500 (e.g., the housing 502).

The stencil orientation sensor 2916 of the illustrated example of FIG. 29 detects or senses an orientation of the stencil 804 or 2202. For example, the stencil orientation sensor 2916 of the illustrated example determines if the stencil 804 is in the first direction 1904 or the second direction 1908 opposite the first direction 1904 and/or determines if the stencil 2202 is in the third direction 2206 or a fourth direction 2304 opposite the third direction 2206. The stencil orientation sensor 2916 of the illustrated example of FIG. 29 may be communicatively coupled to the sensing slot 1152 of the first panel 806. For example, the stencil orientation sensor 2916 may include the trigger 1906 (e.g., a proximity switch or a contact) positioned in the sensing slot 1152. The stencil orientation sensor 2916 provides a signal when, for example, the second tab 1146 of the stencil 804 or the stencil 2202 is positioned in the sensing slot 1152.

The stencil orientation sensor 2916 of the illustrated example of FIG. 29 is a contact switch (e.g., the sensor 1142 of FIG. 11A). In some examples, the stencil orientation sensor 2916 may include two or more sensors (e.g., contact sensors) positioned in the sensing slot 1152, the non-sensing slot 1156, and/or any other position along the display area 808. In some examples, the stencil orientation sensor 2216 may be an optical sensor to detect an orientation of the visual indicators 1116, 2208 and/or the tabs 1144 and 1146 of the respective stencils 804 and 2202.

The orientation validator 2918 of the illustrated example of FIG. 29 may be implemented with logic gates, logic circuit, a digital circuit, or other logic circuits or devices. However, in some examples, the orientation validator 2918 of the illustrated example of FIG. 29 may be implemented with a processor executing instructions. The orientation validator 2918 of the illustrated example of FIG. 29 generally detects or verifies an orientation of the housing 502 and/or an orientation or direction of the stencil 804, 2202 relative to the housing 502. To detect the orientation of the housing 502 and/or the stencil 804, 2202, the orientation validator 2918 of the illustrated example of FIG. 29 is communicatively coupled to the housing orientation sensor 2914 and the stencil orientation sensor 2916. For example, the orientation validator 2918 of the illustrated example of FIG. 29 detects or verifies the orientation of the housing 502 and the orientation of the stencil 804, 2202 based on the signals received from the respective housing orientation sensor 2914 and/or the stencil orientation sensor 2916.

For example, the orientation validator 2918 of the illustrated example of FIG. 29 determines if the housing 502 is properly oriented or mounted relative to, for example, the media device 110, 2500. For example, the orientation validator 2918 of the illustrated example of FIG. 29 determines that the housing 502 is properly oriented or mounted relative to the media device 110, 2500 when the housing 502 is in one of the first orientation 1902, the second orientation 2002, the third orientation 2204, or the fourth orientation 2302. To determine the orientation of the housing 502, the orientation validator 2918 of the illustrated example of FIG. 29 employs the comparator 2920 to compare the input signals provided by the housing orientation sensor 2914 to values representative of the respective orientations 1902, 2002, 2204, 2302 of the housing 502.

The orientation validator 2918 and/or the controller 2908 of the illustrated example command the display output controller 2922. In some examples, the example orientation validator 2918 and/or the controller 2908 may command the display output controller 2922 to control operation of the lights 1120 based on a detected mounting orientation of the housing 502 (e.g., the first orientation 1902 the second orientation 2002, the third orientation 2204, or the fourth orientation 2302) and/or based on a detected direction of the stencil 804, 2202 (e.g., the first direction 1904, the second direction 1908, the third direction 2206, and the fourth direction 2304). For example, the display output controller 2922 may control a particular light 1120 associated with a particular visual indicator 1116 of the stencil 804 or the visual indicator 2208 of the stencil 2202 based on the detected orientation of the housing 502, the detected orientation of the stencil 804, 2202, or a combination of the two).

In some examples, when the orientation validator 2918 determines that a detected orientation of the housing 502 is in the first orientation 1902 or the third orientation 2204, the orientation validator 2918 or the controller 2908 causes the display output controller 2922 to associate or assign the first light 1120a with the first visual indicator 1116a of the stencil 804 (or the first visual indicator 2208a of the stencil 2202) and associate or assign the second light 1120b with the second visual indicator 1116b of the stencil 804 (or the second visual indicator 2208b of the stencil 2202). For example, if a panelist associated with the first visual indicator 1116a, 2208a self-identifies when the orientation validator 2918 detects the orientation of the housing 502 in the first orientation 1902 or the third orientation 2204, the display output controller 2922 illuminates the first light 1120a.

In some examples, when the orientation validator 2918 determines the orientation of the housing 502 is in the second orientation 2002 or the fourth orientation 2302, the orientation validator 2918 or the controller 2908 causes the display output controller 2922 to associate or assign the first light 1120a with the second visual indicator 1116b of the stencil 804 (or a second visual indicator 2208b of the stencil 2202) and associate or assign the second light 1120b with the first visual indicator 1116a of the stencil 804 (or the first visual indicator 2208a of the stencil 2202). For example, if a panelist associated with the first visual indicator 1116a, 2208a self-identifies when the orientation validator 2918 detects the orientation of the housing 502 in the second orientation 2002 or the fourth orientation 2302, the display output controller 2922 illuminates the second light 1120b.

In some examples, when the stencil orientation sensor 2916 provides a signal to the orientation validator 2918 indicative of the stencil orientation sensor 2916 being in a triggered state or condition (e.g., the second tab 1146 positioned in the sensing slot 1152 and the first tab 1144 positioned in the non-sensing slot 1156), the orientation validator 2918 or the controller 2908 causes the display output controller 2922 to associate or assign the first light 1120a with the first visual indicator 1116a of the stencil 804 (or the first visual indicator 2208a of the stencil 2202) and associate or assign the second light 1120b with the second visual indicator 1116b of the stencil 804 (or the second visual indicator 2208b of the stencil 2202). For example, if a panelist associated with the first visual indicator 1116a, 2208a self-identifies when the orientation validator 2918 detects the stencil orientation sensor 2916 is in a triggered state, the display output controller 2922 illuminates the first light 1120a.

In some examples, when the stencil orientation sensor 2916 provides a signal to the orientation validator 2918 indicative of the stencil orientation sensor 2916 being in a non-triggered state or condition (e.g., the first tab 1144 positioned in the sensing slot 1152 and the second tab 1146 positioned in the non-sensing slot 1156), the orientation validator 2918 or the controller 2908 causes the display output controller 2922 to associate or assign the first light 1120a with the second visual indicator 1116b of the stencil 804 (or the second visual indicator 2208b of the stencil 2202) and associate or assign the second light 1120b with the first visual indicator 1116a of the stencil 804 (or the first visual indicator 2208a of the stencil 2202). For example, if a panelist associated with the first visual indicator 1116a, 2208a self-identifies when the orientation validator 2918 detects the stencil orientation sensor 2916 is not triggered, the display output controller 2922 illuminates the second light 1120b.

In some examples, when the orientation validator 2918 determines that the detected orientation of the housing 502 is in the first orientation 1902 or the third orientation 2204 and the orientation validator 2918 determines that the stencil orientation sensor 2916 is in a triggered state, the orientation validator 2918 or the controller 2908 causes the display output controller 2922 to associate or assign the first light 1120a with the first visual indicator 1116a of the stencil 804 (or the first visual indicator 2208a of the stencil 2202) and associate or assign the second light 1120b with the second visual indicator 1120b of the stencil 804 (or the second visual indicator 2208b of the stencil 2202). For example, if a panelist associated with the first visual indicator 1116a, 2208a, self-identifies when the orientation validator 2918 detects the orientation of the housing 502 is in the first orientation 1902 or the third orientation 2204 and detects the stencil orientation sensor 2916 in a triggered state, the display output controller 2922 illuminates the first light 1120a.

In some examples, when the orientation validator 2918 determines the orientation of the housing 502 is in the second orientation 2002 or the fourth orientation 2302 and determines that the stencil orientation sensor 2916 is not in a triggered state, the orientation validator 2918 or the controller 2908 causes the display output controller 2922 to associate or assign the first light 1120a with the second visual indicator 1116b of the stencil 804 (or the second visual indicator 2208b of the stencil 2202) and associate or assign the second light 1120b with the first visual indicator 1116a of the stencil 804 (or the first visual indicator 2208a of the stencil 2202). For example, if a panelist associated with the first visual indicator 1116a self-identifies when the orientation validator 2918 detects the orientation of the housing 502 in the second orientation 2002 or the fourth orientation 2302 and the stencil orientation sensor 2916 is not triggered, the display output controller 2922 illuminates the second light 1120b.

In some examples, the operation of the stencil orientation sensor 2916 is not limited to the described examples but, for example, could be reversed (e.g., behavior associated with the stencil orientation sensor 2916 being triggered could alternatively be associated with the stencil orientation sensor 2916 not being triggered, and vice versa. In some examples, the stencil orientation sensor 2916 may include multiple sensors (e.g., two contact switches) positioned in the sensing slot 1152 and/or the non-sensing slot 1156 that may be configured to distinguish between the first tab 1144 and the second tab 1146.

In some examples, the orientation validator 2918 determines if the housing 502 is oriented in a position that is not one of the first orientation 1902, the second orientation 2002, the third orientation 2204, or the fourth orientation 2302. For example, if the orientation validator 2918 determines that the orientation of the housing 502 is not in one of the first orientation 1902, the second orientation 2002, the third orientation 2204, or the fourth orientation 2302, the orientation validator 2918 determines that the housing 502 is in an improper orientation.

In some such examples, the orientation validator 2918 may command the controller 2908 and/or the alarm generator 2924 to initiate an alarm or warning until the orientation validator 2918 determines that the orientation of the housing 502 is in one of the first orientation 1902, the second orientation 2002, the third orientation 2204, or the fourth orientation 2302. The alarm generator 2924 may initiate an audible alarm via, for example, a speaker (e.g., positioned or coupled to the circuit board 1106) of the meter 102, 500 and/or a visual alarm via, for example, the lights 1120, the status indicator light 1122 and/or any other light of the meter 102, 500. For example, the alarm generator 2924 may cause the display output controller 2922 to illuminate one or more of the lights 1120, the status indicator light 1122 and/or another other light of the meter 102, 500.

Additionally, the orientation validator 2918 of the illustrated example of FIG. 29 determines or verifies if the stencil 804, or 2202 is properly oriented relative to the determined orientation of the housing 502. For example, to determine the direction of the stencil 804, 2202, the orientation validator 2918 of the illustrated example of FIG. 29 employs the comparator 2920 to compare a signal provided with the stencil orientation sensor 2916 with the signal provided by the housing orientation sensor 2914. In other words, the orientation validator 2918 determines if the stencil 804 or 2202 is properly oriented relative to a detected orientation of the housing 502.

In some examples, the orientation validator 2918 determines the stencil 804 or 2202 is properly oriented relative to an orientation of the housing 502 when the orientation validator 2918 receives a signal from the housing orientation sensor 2914 indicative of the housing 502 being in the first orientation 1902 or the third orientation 2204 and the orientation validator 2918 receives a signal from the stencil orientation sensor 2916 that the stencil orientation sensor 2916 is in a triggered state or condition (e.g., the second tab 1146 positioned in the sensing slot 1152 and the first tab 1144 positioned in the non-sensing slot 1156).

In some examples, the orientation validator 2918 determines the stencil 804, 1202 is properly oriented relative to an orientation of the housing 502 when the orientation validator 2918 receives a signal from the housing orientation sensor 2914 indicative of the housing 502 being in the second orientation 2002 or the fourth orientation 2302 and the orientation validator 2918 receives a signal from the stencil orientation sensor 2916 indicative of the stencil orientation sensor 2916 being in a non-triggered state or condition (e.g., the first tab 1144 positioned in the sensing slot 1152 and the second tab 1146 positioned in the non-sensing slot 1156).

In some examples, the orientation validator 2918 determines that the stencil 804, 2202 is improperly oriented relative to the housing 502. In some such examples, the orientation validator 2918 determines that the stencil 804, 2202 is improperly oriented relative to the housing 502 when the housing orientation sensor 2914 provides a signal to the orientation validator 2918 indicative of the housing 502 being in the first orientation 1902 or the third orientation 2204 and the stencil orientation sensor 2916 provides a signal to the orientation validator 2918 indicative of the indicative of the stencil orientation sensor 2916 being in a non-triggered state or condition (e.g., the first tab 1144 positioned in the sensing slot 1152 and the second tab 1146 positioned in the non-sensing slot 1156).

In some examples, the orientation validator 2918 determines that the stencil 804 or 2202 is improperly oriented relative to the housing 502 when the housing orientation sensor 2914 provides a signal to the orientation validator 2918 indicative of the housing 502 being in the second orientation 2002 or the fourth orientation 2302 and receives a signal from the stencil orientation sensor 2916 indicative of the stencil orientation sensor 2916 being in a triggered state or condition (e.g., the second tab 1146 positioned in the sensing slot 1152 and the first tab 1144 positioned in the non-sensing slot 1156).

In some examples, the orientation validator 2918 and/or the controller 2908 provide an alarm or warning via the alarm generator 2924 when the stencil 804, 2202 is improperly oriented relative to a detected orientation of the housing 502. The alarm generator 2924 may initiate an audible alarm via, for example, a speaker of the meter 102, 500 and/or a visual alarm via, for example, the lights 1120, the status indicator light 1122 and/or any other light of the meter 102, 500. For example, the alarm generator 2924 may cause the display output controller 2922 to illuminate one or more of the lights 1120 and/or another other light of the meter 102, 500.

The example power receiver 2928 of the illustrated example of FIG. 29 is implemented as a universal serial bus (USB) receptacle (e.g., the first connector 602) and enables the meter 102, 500 to be connected to a power source via a cable (e.g., a USB cable). In examples disclosed herein, the media device 110, 2500 has a USB port that provides electrical power to, for example, an external device such as the meter 102, 500. In some examples, the media device 110, 2500 may provide power to an external device via a different type of port such as, for example, a High Definition Media Interface (HDMI) port, an Ethernet port, etc. The example power receiver 2928 may be implemented in any fashion to facilitate receipt of electrical power from the media device 110 or any other power source (e.g., a wall outlet).

The example battery 2926 of the illustrated example of FIG. 29 stores power for use by the meter 102, 500. The example battery 2926 enables operation of the meter 102, 500 when power is not being supplied to the meter 102, 500 via the power receiver 2928. In the illustrated example of FIG. 29, the example battery 2926 is implemented using a lithium-ion battery. However, any other type of battery may additionally or alternatively be used. In the illustrated example of FIG. 29, the example battery 2926 is rechargeable. As such, the example battery 2926 may be recharged while the meter 102, 500 receives power via the power receiver 2928 (e.g., while the media device 110, 2500 is powered on), to facilitate operation of the meter 102, 500 when the meter 102, 500 is not receiving power via the power receiver 2928 (e.g., while the media device 110, 2500 is powered off). However, in some examples, the example battery 2926 may be non-rechargeable.

While an example manner of implementing the meter 102, 500 is illustrated in FIG. 29, one or more of the elements, processes and/or devices illustrated in FIG. 29 may be combined, divided, re-arranged, omitted, eliminated and/or implemented in any other way. Further, the example audio sensor 2902, the example media identifier 2904, the example people identifier 2906, the example controller 2908, the example data store 2910, the example network communicator 2912, the example housing orientation sensor 2914, the example stencil orientation sensor 2916, the example orientation validator 2918, the comparator 2920, the example display output controller 2922, the example alarm generator 2924, and/or the example power receiver 2928 and/or, more generally, the example meter 102, 500 may be implemented by hardware, software, firmware and/or any combination of hardware, software and/or firmware. Thus, for example, any of the example audio sensor 2902, the example media identifier 2904, the example people identifier 2906, the example controller 2908, the example data store 2910, the example network communicator 2912, the example housing orientation sensor 2914, the example stencil orientation sensor 2916, the example orientation validator 2918, the comparator 2920, the example display output controller 2922, the example alarm generator 2924, and/or the example power receiver 2928 and/or, more generally, the example meter 102, 500 could be implemented by one or more analog or digital circuit(s), logic circuits, programmable processor(s), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example audio sensor 2902, the example media identifier 2904, the example people identifier 2906, the example controller 2908, the example data store 2910, the example network communicator 2912, the example housing orientation sensor 2914, the example stencil orientation sensor 2916, the example orientation validator 2918, the comparator 2920, the example display output controller 2922, the example alarm generator 2924, and/or the example power receiver 2928 is/are hereby expressly defined to include a tangible computer readable storage device or storage disk such as a memory, a digital versatile disk (DVD), a compact disk (CD), a Blu-ray disk, etc. storing the software and/or firmware. Further still, the example meter 102, 500 may include one or more elements, processes and/or devices in addition to, or instead of, those illustrated in FIG. 29, and/or may include more than one of any or all of the illustrated elements, processes and devices.

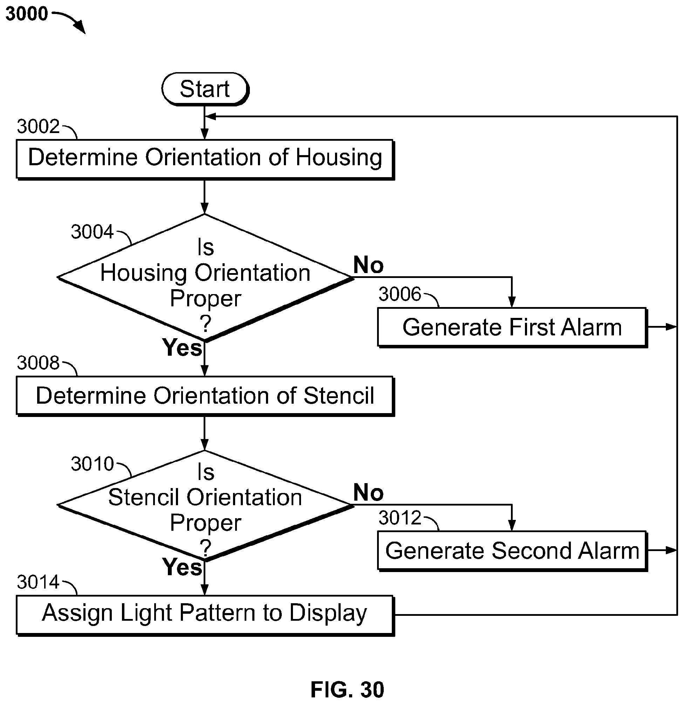

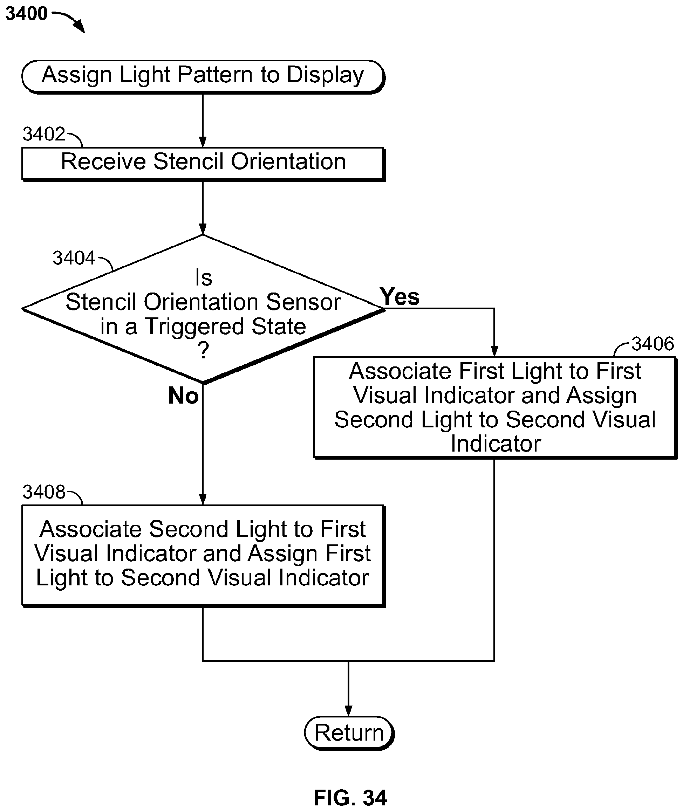

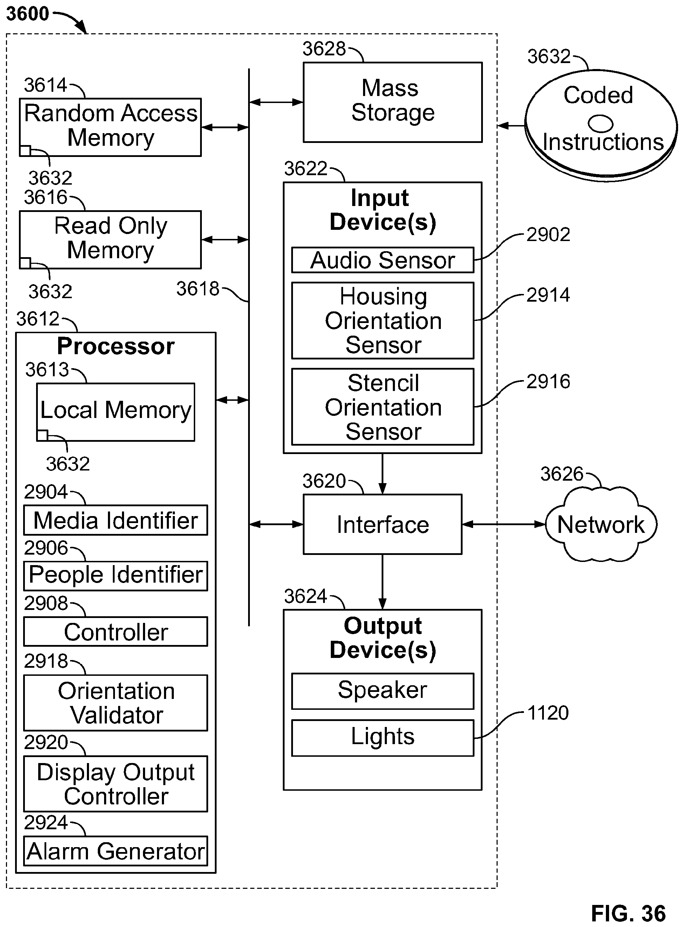

Flowcharts representative of example machine readable instructions for implementing the meter 102, 500 of FIG. 29 is shown in FIGS. 30-35. In this example, the machine readable instructions comprise a program for execution by a processor such as the processor 3612 shown in the example processor platform 3600 discussed below in connection with FIG. 36. The program may be embodied in software stored on a tangible computer readable storage medium such as a CD-ROM, a floppy disk, a hard drive, a digital versatile disk (DVD), a Blu-ray disk, or a memory associated with the processor 3612, but the entire program and/or parts thereof could alternatively be executed by a device other than the processor 3612 and/or embodied in firmware or dedicated hardware. Further, although the example program is described with reference to the flowcharts illustrated in FIGS. 34-35, many other methods of implementing the example meter 102, 500 may alternatively be used. For example, the order of execution of the blocks may be changed, and/or some of the blocks described may be changed, eliminated, or combined.

As mentioned above, the example processes of FIGS 34-35 may be implemented using coded instructions (e.g., computer and/or machine readable instructions) stored on a tangible computer readable storage medium such as a hard disk drive, a flash memory, a read-only memory (ROM), a compact disk (CD), a digital versatile disk (DVD), a cache, a random-access memory (RAM) and/or any other storage device or storage disk in which information is stored for any duration (e.g., for extended time periods, permanently, for brief instances, for temporarily buffering, and/or for caching of the information). As used herein, the term tangible computer readable storage medium is expressly defined to include any type of computer readable storage device and/or storage disk and to exclude propagating signals and to exclude transmission media. As used herein, "tangible computer readable storage medium" and "tangible machine readable storage medium" are used interchangeably. Additionally or alternatively, the example processes of FIGS. 34-35 may be implemented using coded instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media. As used herein, when the phrase "at least" is used as the transition term in a preamble of a claim, it is open-ended in the same manner as the term "comprising" is open ended.

FIG. 30 is a flowchart representative of example machine-readable instructions 3000 that may be executed to implement the meter 102, 500 to determine a housing orientation and/or a stencil orientation. The program of FIG. 30 begins at block 3002 when the example orientation validator 2918 determines the orientation of the example housing 502 (block 3002). For example, the orientation validator 2918 determines the orientation of the housing 502 based on a signal received from the housing orientation sensor 2914.

If the orientation validator 2918 determines that the housing 502 is not in a proper orientation (block 3004 returns a result of NO), the example orientation validator 2918 commands the alarm generator 2924 to output a first alarm (block 3006). In some examples, the first alarm may be an audible alarm generated by the alarm generator 2924 via, for example, a speaker. In some examples, the first alarm may be a visual alarm generated by the alarm generator 2924 and/or the display output controller via, for example, one or more of the lights 1120 and/or any other light of the meter 102, 500 (e.g., a status indicator light positioned on the circuit board 1106).

The orientation validator 2918 also determines the orientation of the stencil 804, 2202 (block 3008). For example, the orientation validator 2918 determines the orientation of the stencil 804, 2202 based on a signal received from the stencil orientation sensor 2916. In particular, the orientation validator 2918 determines if the stencil 804, 2202 is in a proper orientation (block 3010). For example, the orientation validator 2918 determines that the stencil 804, 2202 is in a proper orientation when the signal received from the stencil orientation sensor 2916 is indicative of the stencil 804 being in the first direction 1904 when the orientation validator 2918 determines that the housing 502 is in one of the first orientation 1902 or the second orientation 2002, or the stencil 2202 being in the third direction 2206 when the orientation validator 2918 determines that the housing 502 is in one of the third orientation 2204 or the fourth orientation 2302.

If the orientation validator 2918 determines that the stencil 804 or the stencil 2202 is not in a proper orientation (block 3010 returns a result of NO), the example orientation validator 2918 commands the alarm generator 2924 to output a second alarm (block 3012). In some examples, the alarm generator 2924 may generate an audible alarm via, for example, a speaker. In some examples, the alarm generator 2924 may generate a visual alarm via, for example, one or more of the lights 1120 and/or any other light of the meter 102, 500 (e.g., a light positioned on the circuit board 1106). In some examples, the first alarm generated at block 3006 is the same as the second alarm generated at block 3012. In some examples, the first alarm generated at block 3006 is different than the second alarm generated at block 3012. In some examples, the first alarm is an audible alarm and the second alarm is a visual alarm.

If the orientation validator 2918 determines that the stencil 804 or the stencil 2202 is in a proper orientation (block 3010 returns a result of YES), the example orientation validator 2918 causes the display output controller 2922 to operate the lights 1120 in a specific pattern (block 3014). For example, the display output controller 2922 controls the illumination of the lights 1120 to provide a light pattern based on the detected orientation of the housing 502 and/or by detecting direction of the stencil 804, 2202.

In a first example, if the orientation validator 2918 determines that an orientation of the housing 502 is in the first orientation 1902 or the third orientation 2204, the display output controller 2922 associates the first light 1120a to the first visual indicator 1116a, 2208a and associates the second light 1120b to the second visual indicator 1116b, 2208b. In such an example, if the orientation validator 2918 determines that an orientation of the housing 502 is in the second orientation 2002 or the fourth orientation 2302, the display output controller 2922 associates the first light 1120a to the second visual indicator 1116b, 2208b, and assigns the second light 1120b to the first visual indicator 1116a, 2208a.

In a second example, if the orientation validator 2918 determines that an orientation of the stencil 804, 2202 is such that the stencil orientation sensor 2916 is triggered (e.g., the second tab 1146 is positioned in the sensing slot 1152), the display output controller 2922 associates the first light 1120a to the first visual indicator 1116a, 2208a and associates the second light 1120b to the second visual indicator 1116b, 2208b. In such an example, if the orientation validator 2918 determines that an orientation of the stencil 804, 2202 is such that the stencil orientation sensor 2916 is not triggered (e.g., the first tab 1144 is in the sensing slot 1152), the display output controller 2922 associates the first light 1120a to the second visual indicator 1116b, 2208b, and assigns the second light 1120b to the first visual indicator 1116a, 116b.

In a third example, the orientation validator 2918 determines the operation of the lights 1120 based on a combination of the orientation of the housing 502 and the orientation of the stencil 804, 2202. In such an example, if the orientation validator 2918 determines that an orientation of the housing 502 is in the first orientation 1902 or the third orientation 2204, and the orientation validator 2918 determines that the orientation of the stencil 804, 2202 is such that the stencil orientation sensor 2916 is triggered (e.g., the second tab 1146 is positioned in the sensing slot 1152), the display output controller 2922 associates the first light 1120a to the first visual indicator 1116a, 2208a, and associates the second light 1120b to the second visual indicator 1116b, 2208b. In such an example, if the orientation validator 2918 determines that an orientation of the housing 502 is in the second orientation 2002 or the fourth orientation 2302 and the orientation validator 2918 determines that an orientation of the stencil 804, 2202 is such that the stencil orientation sensor 2916 is not triggered (e.g., the first tab 1144 is in the sensing slot 1152), the display output controller 2922 associates the first light 1120a to the second visual indicator 1116b, 2208b and assigns the second light 1120b to the first visual indicator 1116a, 2208a. In some such examples, if neither of the foregoing conditions is detected, the second orientation 2002 determines the combined orientations of the stencil 804, 2202 and the housing 502 are invalid, and causes the display output controller 2922 to operate the lights 1120 to indicate (e.g., by causing the lights 1120 to blink periodically or according to some other pattern) an invalid orientation combination has been detected. The program returns to block 3002.

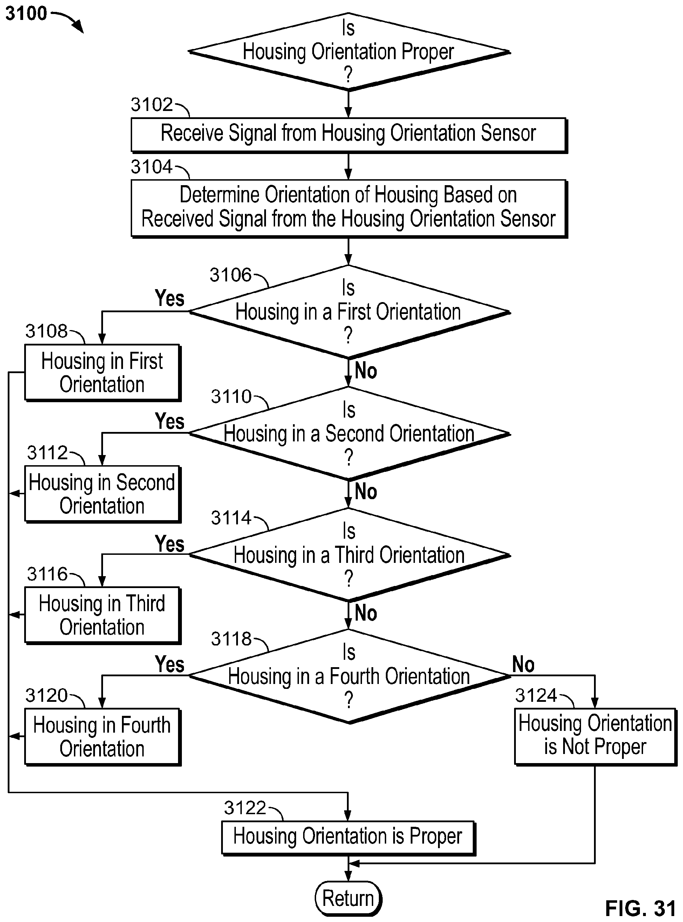

FIG. 31 is a flowchart representative of example machine-readable instructions 3100 that may be executed by the example meter 102, 500 to determine if the housing 502 is in a proper orientation. The program of FIG. 31 begins at block 3102 when the example orientation validator 2918 receives a signal from the housing orientation sensor 2914 (block 3102). For example, the orientation validator 2918 may receive a signal from an accelerometer representative of the orientation of the housing 502 relative to the media device 110, 2500.

The orientation validator 2918 determines the orientation of the housing 502 based on the received signal from the housing orientation sensor 2914 (block 3104). If the signal received by the orientation validator 2918 is indicative of the housing 502 being in the first orientation 1902 (block 3106), the orientation validator 2918 determines that the housing 502 is in the first orientation (block 3108).

If the orientation validator 2918 determines that the signal received from the housing orientation sensor 2914 is not indicative of the housing 502 being in the first orientation 1902 (block 3106 results in NO), the orientation validator 2918 determines if the housing 502 is in the second orientation 2002 (block 3110). If the signal received by the orientation validator 2918 is indicative of the housing 502 being in the second orientation 2002 at block 3110, the orientation validator 2918 determines that the housing 502 is in the second orientation 2002 (block 3112).

If the orientation validator 2918 determines that the signal received from the housing orientation sensor 2914 is not indicative of the housing 502 being in the second orientation 2002 (block 3110 results in NO), the orientation validator 2918 determines if the housing 502 is in the third orientation 2204 (block 3114). If the signal received by the orientation validator 2918 indicates the housing 502 is in the third orientation 2204 at block 3114, the orientation validator 2918 determines that the housing 502 is in the third orientation 2204 (block 3116).

If the orientation validator 2918 determines that the signal received from the housing orientation sensor 2914 is not indicative of the housing 502 being in the third orientation 2204 (block 3114 results in NO), the orientation validator 2918 determines if the housing 502 is in the fourth orientation 2302 (block 3118). If the signal received by the orientation validator 2918 indicates that the housing 502 is in the fourth orientation 2302 at block 3118, the orientation validator 2918 determines that the housing 502 is in the fourth orientation 2302 (block 3120).

If the orientation validator 2918 determines that the housing 502 is in either the first orientation 1902, the second orientation 2002, the third orientation 2204 or the fourth orientation 2302 (blocks 3106-3120), the orientation validator 2918 determines that the housing 502 is in the proper orientation (block 3122). In some examples, the orientation validator 2918 may store in memory (e.g., the data store 2910) a value representative of the orientation of the housing in the first orientation (block 3108), the second orientation (block 3112), the third orientation (block 3116) or the fourth orientation (block 3118). The stored housing orientation information may be retrieved from memory by the orientation validator 2918 to determine if the stencil 804, 2202 is properly oriented relative to the determined orientation of the housing 502 and/or the light pattern (e.g., block 3014 of FIG. 30) to be provided by the display output controller 2922.

If the orientation validator 2918 determines that the housing 502 is not in the first orientation 1902, the second orientation 2002, the third orientation 2204 or the fourth orientation 2302 at blocks 3106, 3110, 3114 and 3118, respectively, the orientation validator 2918 determines that the orientation of the housing 502 is improper (block 3124).

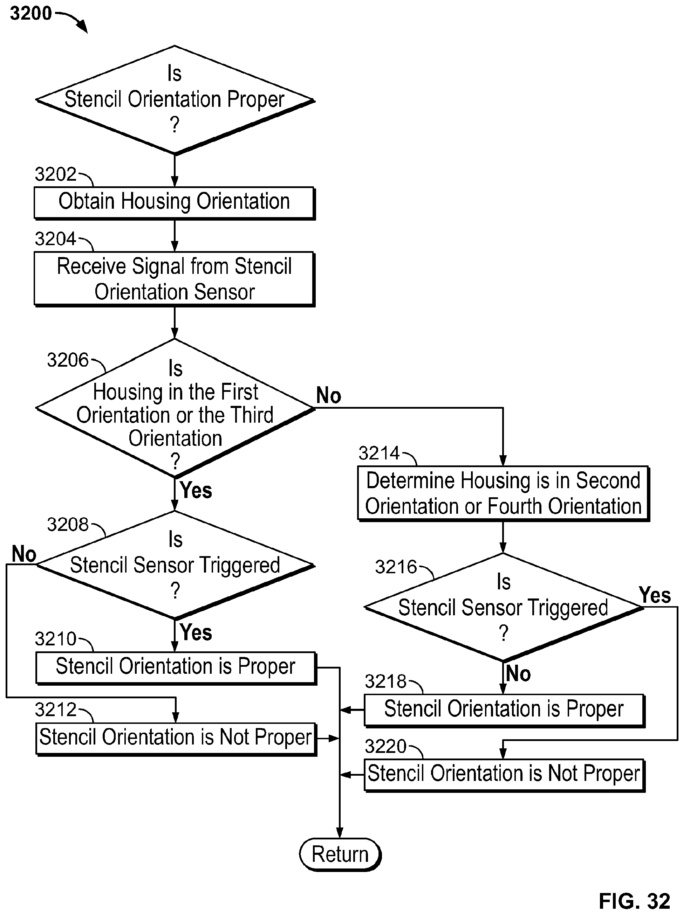

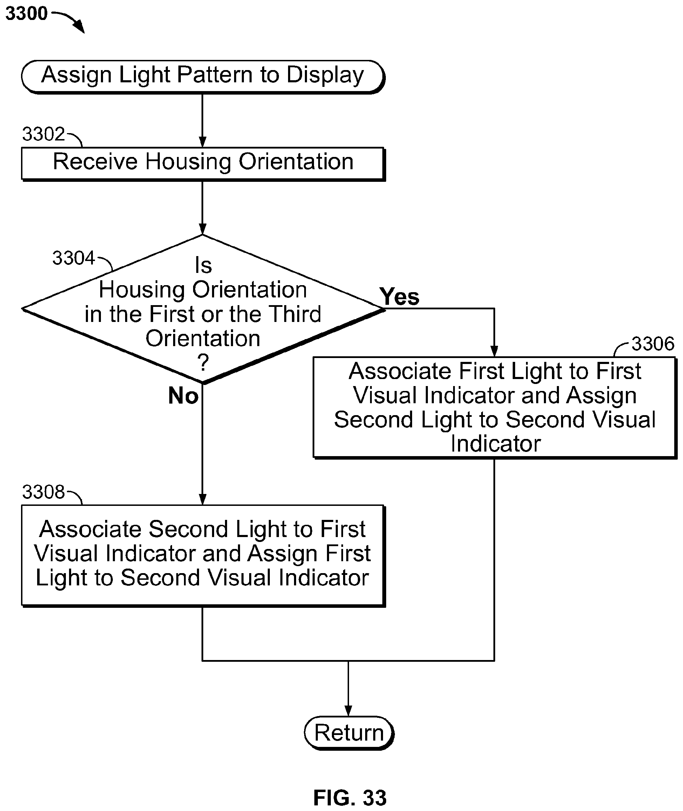

FIG. 32 is a flowchart representative of example machine-readable instructions 3200 that may be executed by the meter 102, 500 to determine if the stencil 804, 2202 is in the proper orientation (e.g., block 3010 of FIG. 30). The program of FIG. 32 begins when the orientation validator 2918 determines or obtains the orientation of the housing 502 (block 3202). For example, the orientation validator 2918 may determine the housing orientation from the example program 3300 of FIG. 33. The orientation validator 2918 receives a signal from the stencil orientation sensor 2916 (block 3204). The orientation validator 2918 determines if the housing 502 is in the first orientation 1902 or the third orientation 2204 (block 3206).

If the orientation validator 2918 determines that the housing 502 is in the first orientation 1902 or the third orientation 2204 at block 3206, the orientation validator 2918 determines if the signal received from the stencil orientation sensor 2916 is indicative of the sensor 1142 being in a triggered state or condition (block 3208). If the orientation validator 2918 determines that the stencil orientation sensor 2916 is triggered at block 3208, the orientation validator 2918 determines that the stencil 804, 2202 is in a proper orientation (block 3210). For example, the orientation of the stencil 804, 2202 is proper when the housing 502 is in the first orientation 1902 and the second tab 1146 of the stencil 804, 2202 is in the sensing slot 1152. Alternatively, the orientation of the stencil 804, 2202 is proper when the housing 502 is in the third orientation 2204 and the second tab 1146 of the stencil 804, 2202 is in the sensing slot 1152.

If the orientation validator 2918 determines that the stencil orientation sensor 2916 is in not triggered at block 3208, the orientation validator 2918 determines that the orientation of the stencil 804, 2202 is not proper (block 3212). For example, the orientation of the stencil 804, 2202 is improper when the housing 502 is in the first orientation 1902 and the second tab 1146 of the stencil 804, 2202 is in the non-sensing slot 1156. Alternatively, the orientation of the stencil 804, 2202 is improper when the housing 502 is in the third orientation 2204 and the second tab 1146 of the stencil 804, 2202 is in the non-sensing slot 1156.

If the orientation validator 2918 determines that the housing 502 is not in the first orientation 1902 or the third orientation 2204 at block 3206, the orientation validator 2918 determines if the housing 502 is in the second orientation 2002 or the fourth orientation 2302 (block 3214). The orientation validator 2918 determines if the signal received from the stencil orientation sensor 2916 is indicative of the sensor 1142 being in a triggered or active state or condition (block 3216).

If the orientation validator 2918 determines that the signal provided by the stencil orientation sensor 2916 is indicative of a non-triggered state or condition at block 3216, the orientation validator 2918 determines that the stencil 804, 2202 is in a proper orientation (block 3218). For example, the orientation of the stencil 804 is proper when the housing 502 is in the second orientation 2002 and the second tab 1146 of the stencil 804 is in the non-sensing slot 1156. Alternatively, the orientation of the stencil 2202 is proper when the housing 502 is in the fourth orientation 2302 and the second tab 1146 of the stencil 2202 is in the non-sensing slot 1156.

If the orientation validator 2918 determines that the signal provided by the stencil orientation sensor 2916 is indicative of a triggered state or condition at block 3216, the orientation determiner determines that the orientation of the stencil 804, 2202 is not proper (block 3220). For example, the orientation of the stencil 804 is not proper when the housing 502 is in the second orientation 2002 and the second tab 1146 of the stencil 804 is in the sensing slot 1152. Alternatively, the orientation of the stencil 2202 is not proper when the housing 502 is in the fourth orientation 2302 and the second tab 1146 of the stencil 2202 is in the sensing slot 1152.

FIG. 33 is a flowchart representative of first example machine-readable instructions 3300 that may be executed by the meter 102, 500 to control the lights 1120 of the meter 102, 500 (e.g., block 3014 of FIG. 30) based on a detected housing orientation. The program of FIG. 33 begins when the orientation validator 2918 determines the orientation of the housing 502 (block 3302). For example, the orientation validator 2918 may determine the orientation of the housing 502 from the example program 3100 of FIG. 31. If the orientation validator 2918 determines that the housing 502 is in the first orientation 1902 or the third orientation 2204 (block 3304), then the display output controller 2922 causes the first light 1120a to illuminate the first visual indicator 1116a of the stencil 804 or the first visual indicator 2208a of the stencil 2202, and causes the second light 1120b to illuminate the second visual indicator 1116b of the stencil 804 or the second visual indicator 2208b of the stencil 2202.

If the orientation validator 2918 determines that the housing 502 is not in the first orientation 1902 or the third orientation 2204 at block 3304, then the display output controller 2922 causes the first light 1120a to illuminate the second visual indicator 1116b of the stencil 804 or the second visual indicator 2208b of the stencil 2202, and causes the second light 1120b to illuminate the first visual indicator 1116a of the stencil 804 or the first visual indicator 2208a of the stencil 2202 (block 3308). For example, the display output controller 2922 reverses the operation of the lights 1120 when the housing 502 is in the second orientation 2002 or the fourth orientation 2302.

FIG. 34 is a flowchart representative of second example machine-readable instructions 3400 that may be executed by the meter 102, 500 to control the lights 1120 of the meter 102, 500 (e.g., block 3008 of FIG. 30) based on a detected stencil direction. The program of FIG. 34 begins when the orientation validator 2918 receives a stencil orientation signal from the stencil orientation sensor 2916 (block 3402). Based on the received signal from the stencil orientation sensor 2916, the orientation validator 2918 determines if the stencil orientation sensor 2916 is in a triggered state (block 3404). For example, the stencil orientation sensor 2916 is in a triggered state when the second tab 1146 of the stencil 804, 2202 is in the sensing slot 1152 and triggers the sensor 1142. If the orientation validator 2918 determines that the stencil orientation sensor 2916 is in a triggered state at block 3404, the validation determiner 2918 commands or causes the display output controller 2922 to operate the first light 1120a to illuminate the first visual indicator 1116a of the stencil 804 or the first visual indicator 2208a of the stencil 2202, and commands or causes the display output controller 2922 to associate or operate the second light 1120b to illuminate the second visual indicator 1116b of the stencil 804 or the second visual indicator 2208b of the stencil 2202 (block 3406).

If the orientation validator 2918 determines that the stencil orientation sensor 2916 is in a non-triggered state at block 3404, the validation determiner 2918 commands or causes the display output controller 2922 to associate or operate the second light 1120b to illuminate the first visual indicator 1116a of the stencil 804 or the first visual indicator 2208a of the stencil 2202, and associate or operate the first light 1120a to illuminate the second visual indicator 1116b of the stencil 804 or the second visual indicator 2208b of the stencil 2202 (block 3408). For example, the display output controller 2922 reverses the operation of the lights 1120 when the stencil 804, 2202 does not trigger the stencil orientation sensor 2916 (e.g., the sensor 1142).

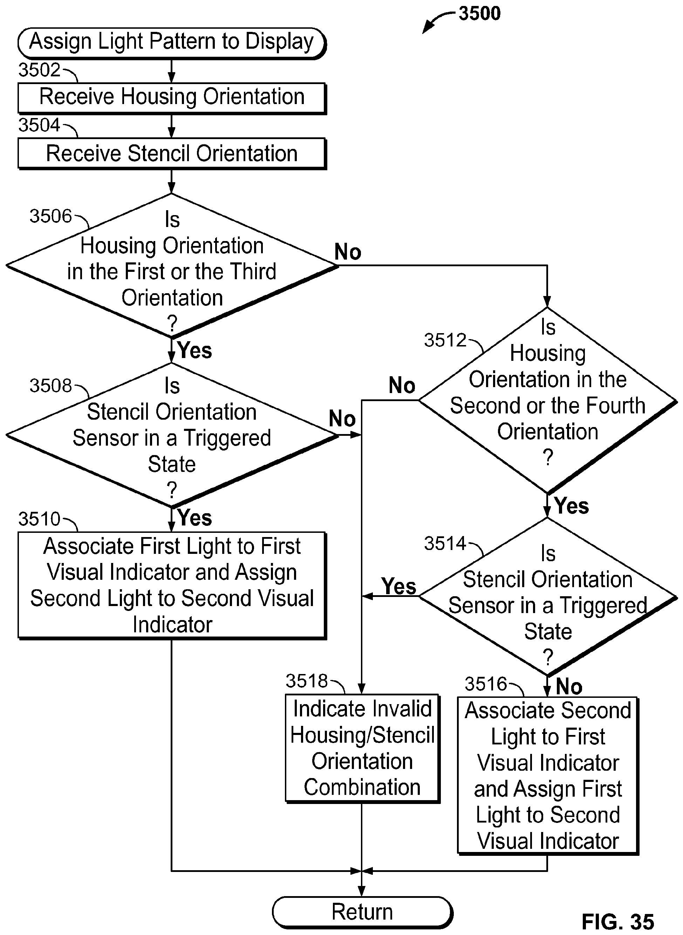

FIG. 35 is a flowchart representative of third example machine-readable instructions 3500 that may be executed by the meter 102, 500 to control the lights 1120 of the meter 102, 500 (e.g., block 3008 of FIG. 30) based on a detected housing orientation and a detected stencil direction. The program of FIG. 35 begins when the orientation validator 2918 receives the orientation of the housing 502 (block 3502) and the orientation of the stencil 804, 2202 (block 3504). In some examples, the orientation validator 2918 receives signals from the housing orientation sensor 2914 and the stencil orientation sensor 2916. In some examples, the orientation validator 2918 may determine the orientation of the housing 502 from block 3002 of FIG. 30 and the orientation of the stencil 804, 2202 from block 3008 of FIG. 30.

The orientation validator 2918 determines if the housing 502 is in the first orientation 1902 or the third orientation 1206 (block 3906). For example, the orientation determiner 2918 may determine the orientation of the housing 502 based on the signals provided by the housing orientation sensor 2914 and/or the example program 3400 of FIG. 34.

If the orientation validator 2918 determines that the housing 502 is in the first orientation 1902 or the third orientation 2204 at block 3506, the orientation validator 2918 determines if the stencil orientation sensor 2916 is in a triggered state (block 3508). For example, the stencil orientation sensor 2916 is in a triggered state when the second tab 1146 of the stencil 804, 2202 is in the sensing slot 1152 and triggers the sensor 1142.

If the orientation validator 2918 determines that the stencil orientation sensor 2916 is in a triggered state at block 3508, then the display output controller 2922 associates the first light 1120a to the first visual indicator 1116a of the stencil 804 or the first visual indicator 2208a of the stencil 2202, and associates the second light 1120b to the second visual indicator 1116b of the stencil 804 or the second visual indicator 2208b of the stencil 2202 (block 3510).

If the orientation validator 2918 determines that the housing 502 is not in the first orientation 1902 or the third orientation 2204 at block 3506, the orientation validator 2918 determines if the housing 502 is in the second orientation 2002 or the fourth orientation 2302 (block 3512). If the orientation validator 2918 determines that the housing 502 is in the second orientation 2002 or the fourth orientation 2302 at block 3512, the orientation validator 2918 determines if the stencil orientation sensor 2916 is in a triggered state (block 3514).

If the orientation validator 2918 determines that the stencil orientation sensor 2916 is not in a triggered state at block 3514, then the display output controller 2922 associates the second light 1120b to the first visual indicator 1116a of the stencil 804 or the first visual indicator 2208a of the stencil 2202, and associates the first light 1120a to the second visual indicator 1116b of the stencil 804 or the second visual indicator 2208b of the stencil 2202 (block 3516).

If housing orientation is not in the first orientation 1902 or the third orientation 2204 at block 3506, the housing orientation is not in the second orientation 2002 or the fourth orientation 2302 at block 3512, the stencil orientation sensor 2916 is not in a triggered state at block 3508, or the stencil orientation sensor 2916 is in a triggered state at block 3514, then the program indicates that the orientation of the housing 502 and/or the orientation of the stencil 804, 2202 is invalid (block 3518).

FIG. 36 is a block diagram of an example processor platform 3600 capable of executing the instructions of FIGS 30-35 to implement the meter 102, 500 disclosed herein.

The processor platform 3600 of the illustrated example includes a processor 3612. The processor 3612 of the illustrated example is hardware. For example, the processor 3612 can be implemented by one or more integrated circuits, logic circuits, microprocessors or controllers from any desired family or manufacturer.

The processor 3612 of the illustrated example includes a local memory 3613 (e.g., a cache). The example processor 3612 executes instructions to implement the example audio sensor 2902, the example media identifier 2904, the example people identifier 2906, the example controller 2908, the example network communicator 2912, the example orientation validator 2918, the example comparator 2920, the example display output controller 2922, and the example alarm generator 2924.

The processor 3612 of the illustrated example is in communication with a main memory including a volatile memory 3614 and a non-volatile memory 3616 via a bus 3618. The volatile memory 3614 may be implemented by Synchronous Dynamic Random Access Memory (SDRAM), Dynamic Random Access Memory (DRAM), RAMBUS Dynamic Random Access Memory (RDRAM) and/or any other type of random access memory device. The non-volatile memory 3616 may be implemented by flash memory and/or any other desired type of memory device. Access to the main memory 3614, 3616 is controlled by a memory controller.

The processor platform 3600 of the illustrated example also includes an interface circuit 3620. The interface circuit 3620 may be implemented by any type of interface standard, such as an Ethernet interface, a universal serial bus (USB), and/or a PCI express interface.

In the illustrated example, one or more input devices 3622 are connected to the interface circuit 3620. The input device(s) 3622 permit(s) a user to enter data and commands into the processor 3612. The input device(s) can be implemented by, for example, an audio sensor, a microphone, a camera (still or video), a sensor, and/or a voice recognition system. In the illustrated example of FIG. 36, the example input device(s) 3622 implement the example audio sensor 2902 (e.g., a microphone), the example housing orientation sensor 2914, and the example stencil orientation sensor 2916.

One or more output devices 3624 are also connected to the interface circuit 3620 of the illustrated example. The output devices 3624 can be implemented, for example, by display devices (e.g., a light emitting diode (LED) such as, for example, the lights 1120), an organic light emitting diode (OLED), a tactile output device, a printer and/or speakers). The interface circuit 3620 of the illustrated example, thus, typically includes a graphics driver card, a graphics driver chip or a graphics driver processor.

The interface circuit 3620 of the illustrated example also includes a communication device such as a transmitter, a receiver, a transceiver, a modem and/or network interface card to facilitate exchange of data with external machines (e.g., computing devices of any kind) via a network 3626 (e.g., an Ethernet connection, a digital subscriber line (DSL), a telephone line, coaxial cable, a cellular telephone system, etc.).

The processor platform 3600 of the illustrated example also includes one or more mass storage devices 3628 for storing software and/or data. Examples of such mass storage devices 3628 include floppy disk drives, hard drive disks, compact disk drives, Blu-ray disk drives, RAID systems, and digital versatile disk (DVD) drives.

The coded instructions 3632 of FIGS 30-35 may be stored in the mass storage device 3628, in the volatile memory 3614, in the non-volatile memory 3616, and/or on a removable tangible computer readable storage medium such as a CD or DVD. In the illustrated example of FIG. 36 the example mass storage device 3628 stores the data store 2910. However, any other memory device of the example processor platform 3600 may additionally or alternatively store the example data store 2910.

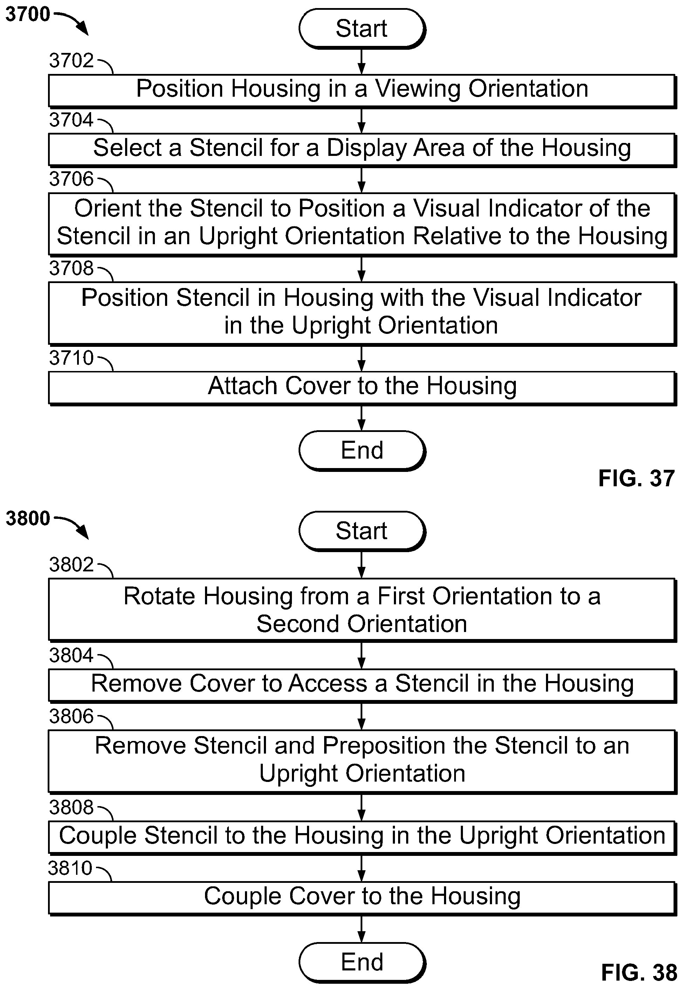

FIGS. 37-40 are flowcharts of example methods of configuring an example meter disclosed herein (e.g., the meter 102 and 500). Although the example methods 3700-4000 are described with reference to the flowcharts illustrated in FIGS. 37-40, respectively, many other methods of configuring the example meters disclosed herein (e.g., the meters 102 and/or 500) may alternatively be used. For example, the order of execution of the blocks may be changed, and/or some of the blocks described may be changed, eliminated, or combined.

Referring to FIG. 37, the method 3700 begins by positioning a housing in a viewing orientation (block 3702). For example, the housing may be positioned in the proper mounting orientation at a manufacturing facility or at a home of a panelist (e.g., the panelist 106). In some examples, the housing may be removed from a media presentation device (e.g., the media device 110 and/or 2500) to change a mounting orientation of a meter (e.g., the meter 102 and/or the meter 500). For example, the housing 502 of the illustrated example may be positioned in the first orientation 1902, the second orientation 2002, the third orientation 2204 and/or the fourth orientation 2302 (e.g., at the media device 110 or 2500, the factory, etc.).

A stencil is selected for a display area of the housing (block 3704). For example, the stencil 804 may be selected for the display area 808 when the housing 502 is to be oriented in the first orientation 1902 or the second orientation 2002, and the stencil 2202 may be selected when the housing 502 is to be oriented in the third orientation 2204 or the fourth orientation 2302. In some examples, a different stencil having letters, symbols, foreign language symbols, and/or any other indicia and/or combination(s) thereof may be selected.

The selected stencil is oriented to position a visual indicator of the stencil in an upright orientation relative to the housing (block 3706). For example, the stencil 804 may be oriented in the first direction 1904 when the housing 502 is in the first orientation 1902 such that the visual indicators 1116 (e.g., indicia) are oriented in an upright orientation. In some examples, the stencil 2202 may be oriented in the third direction 2206 when the housing 502 is in the third orientation 2204 such that the visual indicators 2208 (e.g., indicia) are oriented in an upright orientation.

The stencil is positioned in the housing with the visual indicators in the upright orientation (block 3708). For example, the stencil 804 or the stencil 2202 is positioned in the display area 808 of the housing 502. A cover is then attached to the housing (block 3710). For example, the cover 802 is removably coupled to the housing 502 via snap-fit connection after the stencil 804 or the stencil 2202 is positioned in the display area 808 of the housing 502.

Referring to FIG. 38, the method 4800 of the illustrated example begins by rotating a housing from a first orientation to a second orientation (block 3802). For example, the housing 502 is rotated from the first orientation 1902 to the second orientation 2002. In some examples, the housing 502 is rotated from the third orientation 2204 to the fourth orientation 2302.

A cover is removed from the housing to access a stencil (block 3804). For example, the cover 802 is removed from the housing 502 when the housing 502 is in the second orientation 2002 or, alternatively, when the housing 502 is in the fourth orientation 2302.

With the cover removed from the housing, the stencil is removed from the housing and repositioned (e.g., rotated or flipped) to an upright orientation (block 3806). For example, the stencil 804 or the stencil 2202 is removed from the housing 502. In some examples, the stencil 804 is repositioned from the second direction 1908 to the first direction 1904. In some examples, the stencil 2202 is repositioned from the fourth direction 2304 to the third direction 2206. As a result, the visual indicators 1116 or 2208 of the respective stencils 804 or 2202 are in an upright orientation relative to the housing 502 when the stencil 804 or the stencil 2202 are positioned in the first and third directions 1904 and 2206, respectively.

The stencil is coupled to the housing in the upright orientation (block 3808). For example, the repositioned stencil 804 or the stencil 2202 is positioned in the display area 808 with the visual indicators 1116 or 2208 in the upright orientation. The cover is coupled to the housing (block 3810). For example, the cover 802 is reattached to the housing 502 after the stencil 804 or the stencil 2202 is properly oriented in the display area 808.

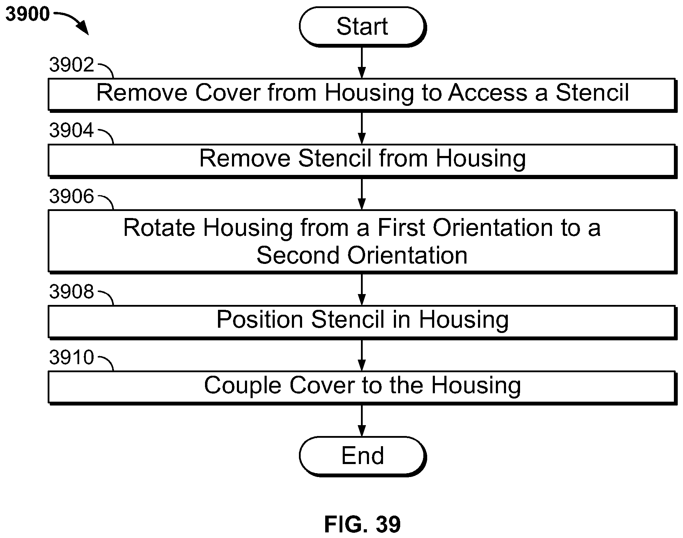

Referring to FIG. 39, the method 4900 begins by removing a cover from a housing to access a stencil (block 3902). For example, the cover 802 is removed from the housing 502 to access the stencil 804 or the stencil 2202 in the display area 808 of the housing 502. The stencil is removed from the housing (block 3904). For example, the stencil 804 or the stencil 2202 is removed from the display area 808. The housing is rotated from a first orientation to a second orientation (block 3906). In some examples, the housing 502 is rotated from the first orientation 1902 to the second orientation 2002. In some examples, the housing 502 is rotated from the third orientation 2204 to the fourth orientation 2302. The stencil is positioned in the housing (block 3908). For example, the stencil 804 or the stencil 2202 is positioned in the display area 808 of the housing 502 such that the visual indicators 1116 or 2208 are in the upright orientation. The cover is then coupled to the housing (block 3910). For example, the cover 802 is reattached to the housing 502.

The example methods 3700-3900 of FIGS. 37-39 may be performed in the field (e.g., at the media presentation environment 104 of FIG. 1), a manufacturing facility, a ratings company, and/or any other location(s). For example, a manufacturing company may supply a person with a kit including the housing 502, the cover 802, the stencil 804 and the stencil 2202 and the person (e.g., the panelist 106) may configure the meter 500 for a desired mounting configuration relative to a media device (e.g., the media device 110 or 2500). In some examples, the meters disclosed herein may be received by a panelist in a fully assembled state and the panelist may configure the mounting configuration at the media presentation environment 104.

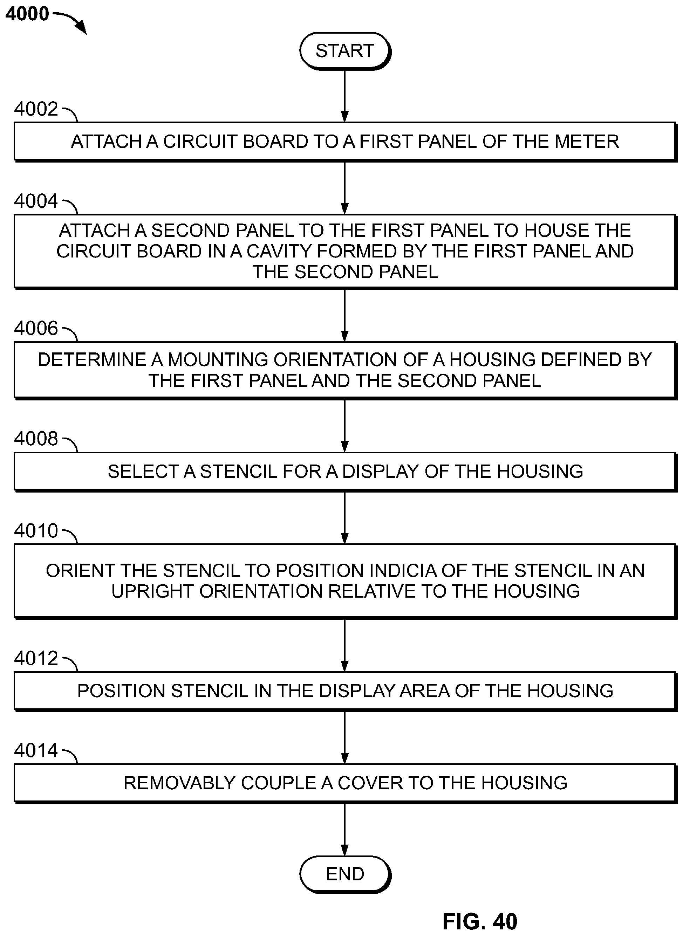

FIG. 40 illustrates an example manner of assembling and/or distributing a meter (e.g., the example meter 102 and/or 500). Although the example method 4000 is described with reference to the flowchart illustrated in FIG. 40, many other methods of configuring the example meters disclosed herein (e.g., the meters 102 and/or 500) may alternatively be used. For example, the order of execution of the blocks may be changed, and/or some of the blocks described may be changed, eliminated, or combined.

The method of FIG. 40 begins by attaching a circuit board to a first panel (block 4002) of the meter 102, 500. For example, the circuit board 1106 is coupled to the first panel 806 via, for example, fastener(s). In some examples, prior to attaching the circuit board 1106 to the first panel 806, one or more diffusors 1108 and 1126 may be coupled to the respective openings 1118 and 1124 of the first panel 806.

A second panel is attached to the first panel to house the circuit board in a cavity formed by the first panel and the second panel (block 4004). For example, the second panel 1104 is attached to the first panel 806 to house the circuit board 1106 and/or the components 1102.

The orientation of a housing defined by the first panel and the second panel is then determined (block 4006). For example, the housing 502 may be positioned in the first mounting orientation 1900 (e.g., for an above-media device mounting configuration), the second mounting orientation 2100 (e.g., for below-media device mounting configuration), the third mounting orientation 2200 (e.g., for a left-side media device mounting configuration), or the fourth mounting orientation 2400 (e.g., for a right-side media device mounting configuration).

A stencil is selected for a display of the housing (block 4008). For example, the stencil 804 or the stencil 2202 may be selected. For example, the stencil 804 is selected when the orientation of the meter 500 is the first mounting orientation 1900 or the second mounting orientation 2100, and the stencil 2202 is selected when the orientation of the meter 500 is the third mounting orientation 2200 or the fourth mounting orientation 2400.

The selected stencil is oriented to position indicia of the stencil in an upright orientation relative to the housing (block 4010). For example, the stencil 804 is positioned in the first direction 2206 to position the visual indicators 1116 in an upright orientation relative to the housing 502 when the housing 502 is in the first orientation 1902 or the second orientation 2002. Likewise, the stencil 2202 is positioned in the third direction 2206 to position the visual indicators 2208 in an upright orientation relative to the housing 502 when the housing 502 is in the third orientation 2204 or the fourth orientation 2302.

The selected stencil is positioned in a display area of the housing (block 4012). For example, the stencil 804 or 2202 is positioned in the display area 808 of the housing 502. In particular, the stencil 804 or the stencil 2202 is positioned in the housing 502 such that the visual indicators 1116 or 2208, respectively, are in the upright position or orientation. A cover is removably coupled to the housing (block 4014). For example, the cover 802 is attached to the housing 502.

Although certain example apparatus, methods, and articles of manufacture have been disclosed herein, the scope of coverage of this patent is not limited thereto. On the contrary, this patent covers all apparatus, methods, and articles of manufacture fairly falling within the scope of the claims of this patent.

## Claims

1. A meter to collect audience measurement data, the meter comprising:
a housing (502);
a housing orientation sensor (2914) to provide a first signal representative of an orientation of the housing;
a stencil orientation sensor (2916) to provide a second signal representative of an orientation of a stencil;
a plurality of lights (1120) carried by the housing; and
a display output controller (2922) to control operation of the lights based on the orientation of the housing and the orientation of the stencil.

2. The meter of claim 1, wherein the housing orientation sensor includes an accelerometer.

3. The meter of any one of claims 1-2, wherein the stencil orientation sensor includes a contact switch carried by the housing.

4. The meter of claim 3, wherein the stencil include a first tab on a first edge of the stencil, the first tab to activate the contact switch.

5. The meter of any one of claims 1-4, further including an orientation validator to receive first and second signals, the orientation validator to determine at least one of the housing orientation or the stencil orientation.

6. The meter of claim 5, wherein the orientation validator is to determine the orientation of the housing to be at least one of a first housing orientation, a second housing orientation, a third housing orientation, or a fourth housing orientation based on the first signal.

7. The meter of claim 6, wherein the orientation validator is to determine that the stencil is in at least one of a first stencil orientation or a second stencil orientation based on the second signal.

8. The meter of claim 7, wherein the stencil presents a plurality of visual indicators in an upright orientation when the stencil is in the first stencil orientation and the stencil presents the visual indicators in an upside-down orientation when the stencil is in the second stencil orientation.

9. The meter of claim 7, wherein the orientation validator is to determine, based on the first signal and the second signal, whether the orientation of the stencil relative to the orientation of the housing is valid.

10. The meter of claim 7, wherein the display output controller is to illuminate a first one of the lights to display a first visual indicator of the stencil and illuminate a second one of the lights to display a second visual indicator of the stencil when the orientation validator determines the orientation of the housing is in the first housing orientation or the third housing orientation.

11. A method comprising:
determining, by executing an instruction with a processor, whether an orientation of a housing of a meter is at least one of a first housing orientation or a second housing orientation;
determining, by executing an instruction with a processor, whether an orientation of a stencil is at least one of a first stencil orientation or a second stencil orientation; and
controlling an operation of a plurality of lights of the meter based on the orientation of the housing and the orientation of the stencil.

12. The method of claim 11, wherein the controlling of the operation of the lights includes illuminating a first one of the lights to display a first visual indicator of the stencil and illuminating a second one of the lights to display a second visual indicator of the stencil when the orientation of the housing is the first housing orientation.

13. The method of claim 12, wherein the controlling of the operation of the lights includes illuminating the second one of the lights to display the first visual indicator of the stencil and illuminating the first one of the lights to display the second visual indicator of the stencil when the orientation of the housing is the second orientation.

14. The method of any one of claims 11-13, further including determining that a visual indicator of the stencil is in an upright orientation relative to the orientation of the housing when the stencil is in the first stencil orientation and determining that the visual indicator of the stencil is in an upside-down orientation relative to the orientation of the housing when the stencil is in the second stencil orientation.

15. The method of any one of claims 11-14, wherein the controlling of the operation of the lights includes illuminating a first one of the lights to display a first visual indicator of the stencil and illuminating a second one of the lights to display a second visual indicator of the stencil when the stencil triggers a stencil orientation sensor.

16. The method of claim 15, wherein the controlling of the operation of the lights includes illuminating the second one of the lights to display the first visual indicator of the stencil and illuminating the first one of the lights to display the second visual indicator of the stencil when the stencil does not trigger a stencil orientation sensor.

17. The method of any one of claims 11-16, further including initiating an alarm when the housing is not in the first housing orientation or the second housing orientation.

18. A computer program that, when executed, causes at least one processor to perform the method of any one of claims 11-17.

## Patentansprüche

1. Messgerät zum Sammeln von Publikumsmessdaten, wobei das Messgerät Folgendes umfasst:
ein Gehäuse (502);
einen Gehäuseorientierungssensor (2914), um ein erstes Signal bereitzustellen, das eine Orientierung des Gehäuses darstellt;
einen Schablonenorientierungssensor (2916), um ein zweites Signal bereitzustellen, das eine Orientierung einer Schablone darstellt;
eine Vielzahl von Lichtern (1120), die durch das Gehäuse getragen wird; und
eine Anzeigeausgabesteuerung (2922), um Betrieb der Lichter basierend auf der Orientierung des Gehäuses und der Orientierung der Schablone zu steuern.

2. Messgerät nach Anspruch 1, wobei der Gehäuseorientierungssensor ein Beschleunigungsmessgerät beinhaltet.

3. Messgerät nach einem der Ansprüche 1-2, wobei der Schablonenorientierungssensor einen Kontaktschalter beinhaltet, der durch das Gehäuse getragen wird.

4. Messgerät nach Anspruch 3, wobei die Schablone eine erste Lasche an einer ersten Kante der Schablone beinhaltet, wobei die erste Lasche dazu dient, den Kontaktschalter zu aktivieren.

5. Messgerät nach einem der Ansprüche 1-4, ferner beinhaltend einen Orientierungsvalidator, um erste und zweite Signale zu empfangen, wobei der Orientierungsvalidator dazu dient, zumindest eines von der Gehäuseorientierung oder der Schablonenorientierung zu bestimmen.

6. Messgerät nach Anspruch 5, wobei der Orientierungsvalidator dazu dient, die Orientierung des Gehäuses als zumindest eines von einer ersten Gehäuseorientierung, einer zweiten Gehäuseorientierung, einer dritten Gehäuseorientierung oder einer vierten Gehäuseorientierung basierend auf dem ersten Signal zu bestimmen.

7. Messgerät nach Anspruch 6, wobei der Orientierungsvalidator dazu dient, basierend auf dem zweiten Signal zu bestimmen, dass die Schablone in zumindest einer von einer ersten Schablonenorientierung oder einer zweiten Schablonenorientierung ist.

8. Messgerät nach Anspruch 7, wobei die Schablone eine Vielzahl von visuellen Indikatoren in einer aufrechten Orientierung präsentiert, wenn die Schablone in der ersten Schablonenorientierung ist, und die Schablone die visuellen Indikatoren in einer auf dem Kopf stehenden Orientierung präsentiert, wenn die Schablone in der zweiten Schablonenorientierung ist.

9. Messgerät nach Anspruch 7, wobei der Orientierungsvalidator dazu dient, basierend auf dem ersten Signal und dem zweiten Signal zu bestimmen, ob die Orientierung der Schablone relativ zu der Orientierung des Gehäuses gültig ist.

10. Messgerät nach Anspruch 7, wobei die Anzeigeausgabesteuerung dazu dient, ein erstes der Lichter zu beleuchten, um einen ersten visuellen Indikator der Schablone anzuzeigen, und ein zweites der Lichter zu beleuchten, um einen zweiten visuellen Indikator der Schablone anzuzeigen, wenn der Orientierungsvalidator bestimmt, dass die Orientierung des Gehäuses in der ersten Gehäuseorientierung oder der dritten Gehäuseorientierung ist.

11. Verfahren, umfassend:
Bestimmen, durch Ausführen einer Anweisung mit einem Prozessor, ob eine Orientierung eines Gehäuses eines Messgeräts zumindest eines von einer ersten Gehäuseorientierung oder einer zweiten Gehäuseorientierung ist;
Bestimmen, durch Ausführen einer Anweisung mit einem Prozessor, ob eine Orientierung einer Schablone zumindest eine von einer ersten Schablonenorientierung oder einer zweiten Schablonenorientierung ist; und
Steuern eines Betriebs einer Vielzahl von Lichtern des Messgeräts basierend auf der Orientierung des Gehäuses und der Orientierung der Schablone.

12. Verfahren nach Anspruch 11, wobei das Steuern des Betriebs der Lichter Beleuchten eines ersten der Lichter, um einen ersten visuellen Indikator der Schablone anzuzeigen, und Beleuchten eines zweiten der Lichter, um einen zweiten visuellen Indikator der Schablone anzuzeigen, wenn die Orientierung des Gehäuses die erste Gehäuseorientierung ist, beinhaltet.

13. Verfahren nach Anspruch 12, wobei das Steuern des Betriebs der Lichter Beleuchten des zweiten der Lichter, um den ersten visuellen Indikator der Schablone anzuzeigen, und Beleuchten des ersten der Lichter, um den zweiten visuellen Indikator der Schablone anzuzeigen, wenn die Orientierung des Gehäuses die zweite Orientierung ist, beinhaltet.

14. Verfahren nach einem der Ansprüche 11-13, ferner beinhaltend Bestimmen, dass ein visueller Indikator der Schablone in einer aufrechten Orientierung relativ zu der Orientierung des Gehäuses ist, wenn die Schablone in der ersten Schablonenorientierung ist, und Bestimmen, dass der visuelle Indikator der Schablone in einer auf dem Kopf stehenden Orientierung relativ zu der Orientierung des Gehäuses ist, wenn die Schablone in der zweiten Schablonenorientierung ist.

15. Verfahren nach einem der Ansprüche 11-14, wobei das Steuern des Betriebs der Lichter Beleuchten eines ersten der Lichter, um einen ersten visuellen Indikator der Schablone anzuzeigen, und Beleuchten eines zweiten der Lichter, um einen zweiten visuellen Indikator der Schablone anzuzeigen, wenn die Schablone einen Schablonenorientierungssensor auslöst, beinhaltet.

16. Verfahren nach Anspruch 15, wobei das Steuern des Betriebs der Lichter Beleuchten des zweiten der Lichter, um den ersten visuellen Indikator der Schablone anzuzeigen, und Beleuchten des ersten der Lichter, um den zweiten visuellen Indikator der Schablone anzuzeigen, wenn die Schablone keinen Schablonenorientierungssensor auslöst, beinhaltet.

17. Verfahren nach einem der Ansprüche 11-16, ferner beinhaltend Initiieren eines Alarms, wenn das Gehäuse nicht in der ersten Gehäuseorientierung oder der zweiten Gehäuseorientierung ist.

18. Computerprogramm, das, wenn ausgeführt, bewirkt, dass zumindest ein Prozessor das Verfahren nach einem der Ansprüche 11-17 durchführt.

## Revendications

1. Compteur pour collecter des données de mesure d'audience, le compteur comprenant :
un boîtier (502) ;
un capteur d'orientation de boîtier (2914) pour fournir un premier signal représentant une orientation du boîtier ;
un capteur d'orientation de pochoir (2916) pour fournir un second signal représentant une orientation d'un pochoir ;
une pluralité de lumières (1120) portées par le boîtier ; et
un dispositif de commande de sortie d'affichage (2922) pour commander le fonctionnement des lumières sur la base de l'orientation du boîtier et de l'orientation du pochoir.

2. Compteur de la revendication 1, ledit capteur d'orientation de boîtier comprenant un accéléromètre.

3. Compteur de l'une quelconque des revendications 1-2, ledit capteur d'orientation de pochoir comprenant un commutateur de contact porté par le boîtier.

4. Compteur de la revendication 3, ledit pochoir comprenant une première languette sur un premier bord du pochoir, la première languette étant destiné à activer le commutateur de contact.

5. Compteur de l'une quelconque des revendications 1-4, comprenant en outre un valideur d'orientation pour recevoir des premier et second signaux, le valideur d'orientation étant destiné à déterminer au moins l'une de l'orientation de boîtier ou de l'orientation de pochoir.

6. Compteur de la revendication 5, ledit valideur d'orientation étant destiné à déterminer l'orientation du boîtier pour être au moins l'une d'une première orientation de boîtier, d'une deuxième orientation de boîtier, d'une troisième orientation de boîtier ou d'une quatrième orientation de boîtier sur la base du premier signal.

7. Compteur de la revendication 6, ledit dispositif de validation d'orientation étant destiné à déterminer que le pochoir est dans au moins l'une d'une première orientation de pochoir ou d'une seconde orientation de pochoir sur la base du second signal.

8. Compteur de la revendication 7, ledit pochoir présentant une pluralité d'indicateurs visuels dans une orientation verticale lorsque le pochoir se trouve dans la première orientation de pochoir et ledit pochoir présentant les indicateurs visuels dans une orientation à l'envers lorsque le pochoir se trouve dans la seconde orientation de pochoir.

9. Compteur de la revendication 7, ledit valideur d'orientation étant destiné à déterminer, sur la base du premier signal et du second signal, si l'orientation du pochoir par rapport à l'orientation du boîtier est valide.

10. Compteur de la revendication 7, ledit dispositif de commande de sortie d'affichage étant destiné à émettre une première des lumières pour afficher un premier indicateur visuel du pochoir et à émettre une seconde des lumières pour afficher un second indicateur visuel du pochoir lorsque le valideur d'orientation détermine que l'orientation du boîtier est dans la première orientation de boîtier ou la troisième orientation de boîtier.

11. Procédé comprenant :
la détermination, en exécutant une instruction avec un processeur, pour savoir si une orientation d'un boîtier d'un compteur est au moins l'une d'une première orientation de boîtier ou d'une deuxième orientation de boîtier ;
la détermination, en exécutant une instruction avec un processeur, pour savoir si une orientation d'un pochoir est au moins l'une d'une première orientation de pochoir ou d'une seconde orientation de pochoir ; et
la commande d'un fonctionnement d'une pluralité de lumières du compteur sur la base de l'orientation du boîtier et de l'orientation du pochoir.

12. Procédé de la revendication 11, ladite commande du fonctionnement des lumières comprenant l'émission d'une première des lumières pour afficher un premier indicateur visuel du pochoir et l'émission d'une seconde des lumières pour afficher un second indicateur visuel du pochoir lorsque l'orientation du boîtier est la première orientation de boîtier.

13. Procédé de la revendication 12, ladite commande du fonctionnement des lumières comprenant l'émission de la seconde des lumières pour afficher le premier indicateur visuel du pochoir et l'émission de la première des lumières pour afficher le second indicateur visuel du pochoir lorsque l'orientation du boîtier est la deuxième orientation.

14. Procédé de l'une quelconque des revendications 11-13, comprenant en outre la détermination qu'un indicateur visuel du pochoir est dans une orientation verticale par rapport à l'orientation du boîtier lorsque le pochoir est dans la première orientation de pochoir et la détermination que l'indicateur visuel du pochoir est dans une orientation à l'envers par rapport à l'orientation du boîtier lorsque le pochoir est dans la seconde orientation de pochoir.

15. Procédé de l'une quelconque des revendications 11-14, ladite commande du fonctionnement des lumières comprenant l'émission d'une première des lumières pour afficher un premier indicateur visuel du pochoir et l'émission d'une seconde des lumières pour afficher un second indicateur visuel du pochoir lorsque le pochoir déclenche un capteur d'orientation de pochoir.

16. Procédé de la revendication 15, ladite commande du fonctionnement des lumières comprenant l'émission de la seconde des lumières pour afficher le premier indicateur visuel du pochoir et l'émission de la première des lumières pour afficher le second indicateur visuel du pochoir lorsque le pochoir ne déclenche pas un capteur d'orientation de pochoir.

17. Procédé de l'une quelconque des revendications 11-16, comprenant en outre le déclenchement d'une alarme lorsque le boîtier n'est pas dans la première orientation de boîtier ou la deuxième orientation de boîtier.

18. Programme informatique qui, lorsqu'il est exécuté, amène au moins un processeur à réaliser le procédé de l'une quelconque des revendications 11-17.
